# EUROPEAN PATENT APPLICATION

(11) **EP 4 586 003 A1**
(43) Date of publication of application: **16.07.2025**
(21) Application number: 23868378.3
(22) Date of filing: 31.07.2023
(51) Int. Cl.: G02F 1/153, G02F 1/155, B32B 7/023, B32B 7/12, E06B 9/24, B60J 3/00, G02F 1/1523, B60J 3/04, G02F 1/15

(54) **ELECTROCHROMIC ELEMENT, METHOD FOR MANUFACTURING SAME, AND WINDOW DEVICE INCLUDING SAME**

(30) Priority: 22.09.2022 KR 20220119720; 28.09.2022 KR 20220123676; 28.09.2022 KR 20220123678
(71) Applicant: SKC Co., Ltd., Suwon-si, Gyeonggi-do 16338 (KR)
(72) Inventor: KIM, Jung Pil, Suwon-si Gyeonggi-do 16338 (KR); PARK, Jae Hyoung, Suwon-si Gyeonggi-do 16338 (KR); LEE, Seong Hwan, Suwon-si Gyeonggi-do 16338 (KR); LA, Yong Sang, Suwon-si Gyeonggi-do 16338 (KR); OH, Seung Bae, Suwon-si Gyeonggi-do 16338 (KR); AHN, Byeong Uk, Suwon-si Gyeonggi-do 16338 (KR)
(74) Representative: Isarpatent
(86) International application number: PCT/KR2023/011179
(87) International publication number: WO 2024/063318

(57) **Abstract**

An embodiment of the present invention provides an electrochromic element comprising: a first substrate; a first transparent electrode disposed on the first substrate; a first discoloration layer disposed on the first transparent electrode; an electrolyte layer disposed on the first discoloration layer; a second discoloration layer disposed on the electrolyte layer; a second transparent electrode disposed on the second discoloration layer; and a second substrate disposed on the second transparent electrode. The electrochromic element has a coloration transmittance variation of less than 0.4 after a twist test measured by the following measurement method.

## Description

### [Technical Field]

Embodiments relate to an electrochromic element, a method of fabricating the electrochromic element and a window device including the electrochromic element.

### [Background Art]

Electrochromic films, whose colors change due to coloring and discoloring through oxidation-reduction reactions at each oxidation electrode and reduction electrode depending on an applied potential, can be artificially controlled by a user to emit visible light and infrared rays, and various types of inorganic oxides are used as electrode materials.

Electrochromic films as described above have been developed in various ways and patent-applied. As examples of related patent applications, there are Korea Patent Application Publication No. 10-2001-0087586, which discloses a film that changes from transparent to blue by depositing MoO₃, a reduced chromogenic oxide, on one of two ITO films (1A, 1B) formed by depositing a conductive Indium-tin oxide thin film on a glass film, and depositing WO₃, also a reduced chromogenic material, is deposited on the other ITO film, and then depositing a solid electrolyte of lithium, an alkali metal, on the deposited ITO film, and then injecting polyaniline, a conductive polymer, between the two films, and then allowing passing through a high-frequency compression roller to apply voltage, and Korea Utility Model Publication No. 0184841 which discloses a film, whose color changes by electric energy, characterized by depositing indium-tin oxide on a 0.05 mm thick glass film, and then depositing opposite surfaces of the transition metal oxide film with WO₃, a reduced chromogenic material, and IrO₂, an oxidized chromogenic material, with a polymer solid electrolyte, α-PEO copolymer, therebetween, and then bonding the opposite surfaces with a high-frequency roller.

### [Disclosure]

### [Technical Problem]

Therefore, the present invention has been made in view of the above problems, and it is one object of the present invention to provide an electrochromic element having high thickness uniformity, improved mechanical strength, improved peel strength, excellent appearance, less electrolyte leakage, and deformation resistance to mechanical shock and a window device including the electrochromic element.

It is another object of the present invention to provide an electrochromic element having high thickness uniformity, improved mechanical strength, improved peel strength, improved durability, excellent appearance, and less electrolyte leakage, and a window device including the electrochromic element.

It is yet another object of the present invention to provide an electrochromic element having high thickness uniformity, improved mechanical strength, improved peel strength, improved durability, excellent appearance, and less electrolyte leakage, and a window device including the electrochromic element.

### [Technical Solution]

In accordance with an aspect of the present invention, the above and other objects can be accomplished by the provision of an electrochromic element, including: a first substrate; a first transparent electrode disposed on the first substrate; a first discoloration layer disposed on the first transparent electrode; an electrolyte layer disposed on the first discoloration layer; a second discoloration layer disposed on the electrolyte layer; a second transparent electrode disposed on the second discoloration layer; and a second substrate disposed on the second transparent electrode, wherein a coloring transmittance deviation after a twist test, measured by Measurement Method 1 below, is less than 0.4:

### [Measurement Method 1]

1) The electrochromic element is cut to a size of 20 cm in length and 4 cm in width.
2) Opposite ends of the cut electrochromic element are gripped.
3) The gripped opposite ends of the electrochromic element are pulled with a force of 1 N.

The pulled opposite ends of the electrochromic element are twisted at an angle of 15° to each other.

The twisted state of the electrochromic element is maintained for 1 minute, and then released, thus completing a twist test.

A driving voltage is applied to the electrochromic element that has been subjected to the twist test, and the electrochromic element is colored.

In the colored electrochromic element, a central region of 16 cm in length and 3 cm in width is defined.

A first transmittance of each measurement region of 1 cm × 1 cm in the central region is measured.

The coloring transmittance deviation is a value obtained by dividing a difference between a maximum transmittance and minimum transmittance among the first transmittances of the measurement regions by an average transmittance of the first transmittances of the measurement regions.

In the electrochromic element according to an embodiment a discoloring transmittance deviation after the twist test, measured by Measurement Method 2 below, is less than 0.2:

### [Measurement Method 2]

Driving voltage is applied to the colored electrochromic element in a reverse direction so that the colored electrochromic element is discolored, a second transmittance is measured in each of the measurement regions of the discolored electrochromic element, and the discoloring transmittance deviation is a value obtained by dividing a difference between a maximum transmittance and minimum transmittance among the second transmittances of the measurement regions by an average transmittance of the second average transmittances of the measurement regions.

In the electrochromic element according to an embodiment, a haze deviation after the twist test, measured by Measurement Method 3 below, is less than 0.2.

### [Measurement Method 3]

In the electrochromic element that has been subjected to the twist test, a haze of each of the measurement regions is measured, and the haze deviation is a value obtained by dividing a difference between a maximum haze and minimum haze among the hazes of the measurement regions by an average haze of the hazes of the measurement regions.

In an embodiment, the electrolyte layer may include a curable resin composition, a solvent and a metal salt, and the electrolyte layer may have a thickness of greater than 30 *µ*m.

In the electrochromic element according to an embodiment, a driving range deviation after the twist test, measured by Measurement Method 4 below is less than 0.2:

### [Measurement Method 4]

In the electrochromic element that has been subjected to the twist test, a driving range in the measurement region is a difference between the first transmittance of the measurement region and the second transmittance of the measurement region, and the driving range deviation is a value obtained by dividing a difference between a maximum driving range and minimum driving range in the measurement regions by an average driving range in the measurement regions.

In an embodiment, the curable resin composition may include a photo-curable polymer having a thermosetting functional group.

In an embodiment, the first substrate may have a modulus of 200 kgf/mm² to 400 kgf/mm² in a first direction, and the second substrate may have a modulus of 200 kgf/mm² to 400 kgf/mm² in the first direction.

In an embodiment, the first substrate may have a fracture elongation of 30% to 150% in the first direction, and the second substrate may have a fracture elongation of 30% to 150% in the first direction.

In an embodiment, the average transmittance of the first transmittances may be 5% to 40%.

In an embodiment, the average transmittance of the second transmittances may be 40% to 80%.

In accordance with another aspect of the present invention, there is provided a window device, including: a frame; a window mounted on the frame; and an electrochromic element disposed in the window, wherein the electrochromic element includes: a first substrate; a first transparent electrode disposed on the first substrate; a first discoloration layer disposed on the first transparent electrode; an electrolyte layer disposed on the first discoloration layer; a second discoloration layer disposed on the electrolyte layer; a second transparent electrode disposed on the second discoloration layer; and a second substrate disposed on the second transparent electrode, wherein a coloring transmittance deviation after a twist test, measured by Measurement Method 1 below, is less than 0.4:

### [Measurement Method 1]

1) The electrochromic element is cut to a size of 20 cm in length and 4 cm in width.
2) Opposite ends of the cut electrochromic element are gripped.
3) The gripped opposite ends of the electrochromic element are pulled with a force of 1 N.
4) The pulled opposite ends of the electrochromic element are twisted at an angle of 15° to each other.
5) The twisted state of the electrochromic element is maintained for 1 minute, and then released, thus completing a twist test.
6) A driving voltage is applied to the electrochromic element that has been subjected to the twist test, and the electrochromic element is colored.
7) In the colored electrochromic element, a central region of 16 cm in length and 3 cm in width is defined.
8) A first transmittance of each measurement region of 1 cm × 1 cm in the central region is measured.
9) The coloring transmittance deviation is a value obtained by dividing a difference between a maximum transmittance and minimum transmittance among the first transmittances of the measurement regions by an average transmittance of the first transmittances of the measurement regions.

In accordance with still another aspect of the present invention, there is provided an electrochromic element: including a first substrate; a first transparent electrode disposed on the first substrate; a first discoloration layer disposed on the first transparent electrode; an electrolyte layer that is disposed on the first discoloration layer and includes a curable resin composition, a solvent and a metal salt; a second discoloration layer disposed on the electrolyte layer; a second transparent electrode disposed on the second discoloration layer; and a second substrate disposed on the second transparent electrode, wherein the electrolyte layer has a storage modulus of 10 kPa to 100 kPa under measurement conditions of 3% strain and 1 Hz frequency.

In an embodiment, the electrolyte layer may have a storage modulus of 3 kPa to 20 kPa under measurement conditions of 3% strain and 0.1 Hz frequency.

In an embodiment, the electrolyte layer may have a storage modulus of 20 kPa to 120 kPa under measurement conditions of strain 3% and frequency 10 Hz.

In an embodiment, the electrolyte layer may have a loss modulus of 10 kPa to 30 kPa under the measurement conditions of 3% strain and 1 Hz frequency.

In an embodiment, the electrolyte layer may have a loss modulus of 5 kPa to 20 kPa under the conditions of 3% strain and 0.1 Hz frequency.

In an embodiment, the electrolyte layer may have a loss modulus of 1 kPa to 10 kPa under conditions of 3% strain and 10 Hz frequency.

In an embodiment, the electrolyte layer may have a complex viscosity of 3000 Pa·s to 11000 Pa·s under the measurement conditions of 3% strain and 1 Hz frequency.

In an embodiment, the electrolyte layer may have a complex viscosity of 15000 Pa·s to 40000 Pa·s under the measurement conditions of 3% strain and 0.1 Hz frequency.

In an embodiment, the electrolyte layer may have a complex viscosity of 300 Pa·s to 3000 Pa·s under the measurement conditions of strain 3% and frequency 10 Hz.

In accordance with still another aspect of the present invention, there is provided an electrochromic element, including a first substrate; a first transparent electrode disposed on the first substrate; a first discoloration layer disposed on the first transparent electrode; an electrolyte layer that is disposed on the first discoloration layer and includes a curable resin composition, a solvent and a metal salt; a second discoloration layer disposed on the electrolyte layer; a second transparent electrode disposed on the second discoloration layer; and a second substrate disposed on the second transparent electrode, wherein the electrolyte layer has a storage modulus of 7 kPa to 80 kPa under measurement conditions of 10% strain and 1 Hz frequency.

In an embodiment, the electrolyte layer may have a storage modulus of 10 kPa to 100 kPa under measurement conditions of 1% strain and 1 Hz frequency.

In an embodiment, the electrolyte layer may have a storage modulus of 5 kPa to 60 kPa under measurement conditions of 99% strain and 1 Hz frequency.

In an embodiment, the electrolyte layer may have a loss modulus of 10 kPa to 60 kPa under the measurement conditions of 10% strain and 1 Hz frequency, the electrolyte layer may have a loss modulus of 5 kPa to 40 kPa under the measurement conditions of 1% strain and 1 Hz frequency, and the electrolyte layer may have a loss modulus of 11 kPa to 70 kPa under the measurement conditions of 99% strain and 1 Hz frequency.

In an embodiment, the electrolyte layer may have a complex viscosity of 5000 Pa·s to 20000 Pa·s under the measurement conditions of 10% strain and 1 Hz frequency, the electrolyte layer may have a complex viscosity of 4000 Pa·s to 18000 Pa·s under the measurement conditions of 1% strain and 1 Hz frequency, and the electrolyte layer may have a complex viscosity of 1000 Pa·s to 10000 Pa·s under the measurement conditions of 99% strain and 1 Hz frequency.

In an embodiment, in the electrolyte layer, a storage modulus per thickness as represented by Equation 1 below under the measurement conditions of 3% strain and 1 Hz frequency may be 0.2 kPa/*µ*m to 3 kPa/*µ*m:

Storage modulus per thickness = Storage modulus of electrolyte layer/Thickness of electrolyte layer

In an embodiment, the curable resin composition may include a photo-curable polymer having a thermosetting functional group.

In accordance with another aspect of the present invention, there is provided a method of fabricating the electrochromic element according to an embodiment, the method including: a step of providing a first substrate; and a first transparent electrode disposed on the first substrate; a step of forming a first discoloration layer on the first transparent electrode; a step of forming an electrolyte composition layer including a curable resin composition, a solvent and a metal salt on the first discoloration layer; a second substrate; a step of providing a second transparent electrode disposed on the second substrate; a step of forming a second discoloration layer on the second transparent electrode; and a step of forming an electrolyte layer by laminating the second discoloration layer on the electrolyte composition layer and curing the electrolyte composition layer, wherein the electrolyte layer has a storage modulus of 10 kPa to 100 kPa under measurement conditions of 3% strain and 1 Hz frequency.

In an embodiment, the step of forming the electrolyte composition layer may include a step of forming the curable resin composition on the first discoloration layer, a step of coating an electrolyte composition including the solvent and the metal salt; and a step of curing the coated electrolyte composition by heat.

In accordance with another aspect of the present invention, there is provided a window device, including a frame; a window mounted on the frame; and an electrochromic element disposed in the window, wherein the electrochromic element includes a first substrate; a first transparent electrode disposed on the first substrate; a first discoloration layer disposed on the first transparent electrode; an electrolyte layer that is disposed on the first discoloration layer and includes a curable resin composition, a solvent, and a metal salt; a second discoloration layer disposed on the electrolyte layer; a second transparent electrode disposed on the second discoloration layer; and a second substrate disposed on the second transparent electrode, wherein the electrolyte layer has a storage modulus of 10 kPa to 100 kPa under measurement conditions of 3% strain and 1 Hz frequency.

In accordance with another aspect of the present invention, there is provided an electrochromic element, including a first polymer substrate; a first transparent electrode disposed on the first polymer substrate; a first discoloration layer disposed on the first transparent electrode; an electrolyte layer that is disposed on the first discoloration layer and includes a curable resin composition, a solvent and a metal salt; a second discoloration layer disposed on the electrolyte layer; a second transparent electrode disposed on the second discoloration layer; and a second polymer substrate disposed on the second transparent electrode, wherein a bonding strength between the first polymer substrate and the second polymer substrate, measured by Measurement Method 1 below, is greater than 0.05 N/cm:

### [Measurement Method 1]

(1) The electrochromic element is cut to a size of 200 mm in length to 20 mm in width, thereby manufacturing a sample.
(2) One end of the sample is peeled off by 50 mm in length, one end of the first polymer substrate peeled off is fixed, and one end of the second polymer substrate peeled off is pulled in an opposite direction.
(3) The bonding strength is obtained by dividing an average force when the end of the second polymer substrate is pulled by the width of the sample.

In an embodiment, the thickness of the electrolyte layer may be 50 *µ*m to 200 *µ*m.

In the electrochromic element according to an embodiment, a thickness-weighted bonding strength measured by Equation 1 below may be greater than 0.035 *µ*m·N/cm. Thickness-weighted bonding strength = Bonding strength × Thickness of electrolyte layer

In an embodiment, the bonding strength may be greater than 0.6 N/cm.

In an embodiment, the bonding strength may be greater than 0.7 N/cm.

In the electrochromic element according to an embodiment, a haze increase measured by Measurement Method 2 below may be less than may be less than 3%:

### [Measurement Method 2 below]

(1) The electrochromic element is wound 2 turns around the first core having a diameter of 15 cm.
(2) The electrochromic element wound on the first core is left at 85°C and a humidity of 30% for 500 hours.
(3) The left electrochromic element is wound 2 turns in the opposite direction around a second core having a diameter of 15 cm while being unwound from the first core.
(4) The electrochromic element wound around the second core is left at 85°C and a humidity of 30% for 500 hours.
(5) The haze increase is a difference between an initial first haze of the electrochromic element and a second haze of the electrochromic element after the electrochromic element has been left for 1000 hours.

In the electrochromic element according to an embodiment, a transmittance decrease measured by Measurement Method 3 below may be less than 5%:

### [Measurement Method 3 below]

The transmittance decrease is a difference between an initial first transmittance of the electrochromic element and a second transmittance of the electrochromic element after the electrochromic element has been left for 1000 hours.

In an embodiment, the solvent may have a molecular weight of 200 to 400.

In an embodiment, the boiling point of the solvent may be higher than 200°C.

In an embodiment, the curable resin composition may include urethane acrylate, epoxy acrylate, monofunctional acrylate and multifunctional acrylate.

In accordance with yet another aspect of the present invention, there is provided a window device, including a frame; a window mounted on the frame; and an electrochromic element disposed in the window, wherein the electrochromic element includes a first polymer substrate; a first transparent electrode disposed on the first polymer substrate; a first discoloration layer disposed on the first transparent electrode; an electrolyte layer that is disposed on the first discoloration layer and includes a curable resin composition, a solvent and a metal salt; a second discoloration layer disposed on the electrolyte layer; a second transparent electrode disposed on the second discoloration layer; and a second polymer substrate disposed on the second transparent electrode, wherein a bonding strength between the first polymer substrate and the second polymer substrate, measured by Measurement Method 1 below, may be greater than 0.05 N/cm:

### [Measurement Method 1]

(1) The electrochromic element is cut to a size of 200 mm in length and 20 mm in width.
(2) One end of the sample is peeled off by 50 mm in length, one end of a first polymer substrate peeled off is fixed, and one end of a second polymer substrate peeled off is pulled in the opposite direction.
(3) The bonding strength is obtained by dividing an average force when the end of the second polymer substrate is pulled by the width of the sample.

### [Advantageous effects]

An electrochromic element according to an embodiment has an appropriate coloring transmittance deviation after a twist test. That is, the electrochromic element according to an embodiment is flexible, and can prevent performance degradation due to a certain degree of mechanical deformation, such as twist.

Even if the electrochromic element according to an embodiment undergoes mechanical deformation such as twist due to an external force, the electrochromic element according to an embodiment can have uniform optical properties overall.

Accordingly, the electrochromic element according to an embodiment can have a uniform coloring transmittance, discoloring transmittance and haze overall when restored after an external mechanical deformation is applied thereto.

In particular, the electrolyte layer in the electrochromic element according to an embodiment can have a thickness of about 50 *µ*m or more. Accordingly, the electrochromic element according to an embodiment can have a buffering function due to the electrolyte layer even under external mechanical shock. At the same time, the electrochromic element according to an embodiment can have appropriate flexibility.

Accordingly, the electrochromic element according to an embodiment can minimize changes in appearance due to pressing and/or bending, etc., and can maintain discoloration performance. In addition, since the electrochromic element according to the embodiment has a fast restoration performance, it can have an improved appearance.

In addition, the electrolyte layer can be formed by a thermal crosslinking process and a photocuring process for the curable resin. Accordingly, the electrolyte layer can have high crosslinking density.

Accordingly, the electrolyte layer can be strongly bonded to the first discoloration layer and the second discoloration layer. Accordingly, the electrochromic element according to the embodiment can have improved peel strength.

In addition, since the electrolyte layer has improved crosslinking density, the electrochromic element according to an embodiment can prevent the leakage of an electrolyte contained in the electrolyte layer. In addition, even if the electrochromic element according to an embodiment is twisted, a coloring transmittance deviation that can occur due to peeling, etc. can be reduced because the electrolyte layer has appropriate bonding strength and appropriate elasticity.

In addition, when the electrochromic element according to an embodiment is installed on a window, etc., mechanical deformation such as twisting can be applied to the electrochromic element according to an embodiment. Here, the electrochromic element according to an embodiment is strongly resistant to mechanical deformation due to twisting, etc., so it can have uniform discoloration performance even after construction.

The electrochromic element according to an embodiment includes an electrolyte layer having an appropriate storage modulus, appropriate loss modulus and appropriate complex viscosity in the above ranges.

Accordingly, the electrochromic element according to an embodiment can have appropriate mechanical strength. At the same time, the electrochromic element according to an embodiment can have appropriate flexibility.

In particular, since the electrolyte layer has an appropriate storage modulus, can have small deformation when external physical impact is applied. In addition, since the electrolyte layer has an appropriate storage modulus, it can be quickly restored from compression, etc.

Accordingly, the electrochromic element according to an embodiment can minimize changes in appearance due to twisting, pressing, and/or bending. In addition, since the electrochromic element according to the embodiment has a fast restoration performance, it can have an improved appearance.

In addition, since the electrolyte supports the first substrate and the second substrate with an appropriate storage modulus, the electrochromic element according to an embodiment can have improved thickness uniformity.

In addition, The electrolyte layer can be formed by a thermal crosslinking process and a photocuring process for the curable resin. Accordingly, the electrolyte layer can have a high crosslinking density.

Accordingly, the electrolyte layer can be strongly bonded to the first discoloration layer and the second discoloration layer. Accordingly, the electrochromic element according to the embodiment can have improved peel strength.

In addition, since the electrolyte layer has an improved crosslinking density, the penetration of moisture and/or oxygen, etc. into the electrolyte layer can be reduced. Accordingly, the electrochromic element according to an embodiment can suppress the whitening phenomenon, etc., and have improved durability.

In addition, since the electrolyte layer has an improved crosslinking density, the electrochromic element according to an embodiment can prevent the leakage of a solvent and a lithium salt, etc. contained in the electrolyte layer. In particular, when the electrochromic element according to an embodiment is cut to be processed, the electrolyte layer can prevent the leakage of the solvent and the lithium salt, etc.

The electrochromic element according to an embodiment has appropriate bonding strength. That is, the electrochromic element according to an embodiment is flexible, and the electrolyte appropriately bonds a first discoloration layer included in the first polymer substrate and a second discoloration layer included in the second polymer substrate. Accordingly, the electrochromic element according to an embodiment can have appropriate interlayer bonding strength.

In addition, the electrochromic element according to an embodiment can have an appropriate storage modulus and an appropriate loss modulus. Accordingly, the electrochromic element according to an embodiment can have appropriate interlayer bonding strength while having appropriate elasticity. At the same time, the electrochromic element according to an embodiment can have appropriate flexibility.

In particular, since the electrolyte layer has appropriate elasticity and appropriate bonding strength, it can have small deformation under external physical impact. In addition, since the electrolyte layer has appropriate elasticity and appropriate bonding strength, it can be quickly restored from compression, etc.

Accordingly, the electrochromic element according to an embodiment can minimize changes in appearance due to twisting, winding, pressing, bending, etc. In addition, since the electrochromic element according to the embodiment has a fast restoration performance, it can have an improved appearance.

In addition, the electrolyte layer can be formed by a thermal crosslinking process and a photocuring process for the curable resin. Accordingly, the electrolyte layer can have high crosslinking density.

Accordingly, the electrolyte layer can be strongly bonded to the first discoloration layer and the second discoloration layer. Accordingly, the electrochromic element according to the embodiment can have improved peel strength.

In addition, since the electrolyte layer has improved crosslinking density, the penetration of moisture and/or oxygen, etc. into the electrolyte layer can be reduced. Accordingly, the electrochromic element according to an embodiment can suppress the whitening phenomenon, etc., and have improved durability.

In addition, since the electrolyte layer has improved crosslinking density, the electrochromic element according to an embodiment can prevent the leakage of the electrolyte contained in the electrolyte layer.

### [Description of Drawings]

FIG. 1 is a sectional view illustrating the cross-section of an electrochromic element according to an embodiment.
FIGS. 2 to 5 are drawings illustrating a process of fabricating the electrochromic element according to an embodiment.
FIGS. 6 and 7 are drawings illustrating a process of double-twisting the electrochromic element according to an embodiment.
FIGS. 8 and 9 are drawings illustrating a process of single-twisting the electrochromic element according to an embodiment.
FIG. 10 illustrates the plan view of a sample formed by cutting a portion of the electrochromic element according to an embodiment.
FIG. 11 is a sectional view illustrating one cross-section of an electrochromic element according to another embodiment
FIGS. 12 to 15 are drawings illustrating a process of fabricating the electrochromic element according to another embodiment.
FIG. 16 is a sectional view illustrating one cross-section of an electrochromic element according to still another embodiment.
FIGS. 17 to 20 are drawings illustrating a process of fabricating the electrochromic element according to still another embodiment.
FIGS. 21 to 23 are drawings illustrating a process of measuring the bonding strength of the electrochromic element according to still another embodiment.
FIGS. 24 and 25 are drawings illustrating a process of performing a winding test on the electrochromic element according to still another embodiment.
FIG. 26 illustrates a window device according to an embodiment.

### [Best Mode]

In the description of embodiments, it will be understood that when each part, surface, layer or substrate is referred to as being "on" or "under" another part, surface, layer or substrate, the part, surface, layer or substrate can be directly on another part, surface, layer or substrate or intervening part, surface, layer or substrate, and criteria for "on" and "under" will be provided based on the drawings. Elements in the following drawings may be exaggerated, omitted, or schematically illustrated for convenience and clarity of explanation, and the sizes of elements do not reflect their actual sizes completely.

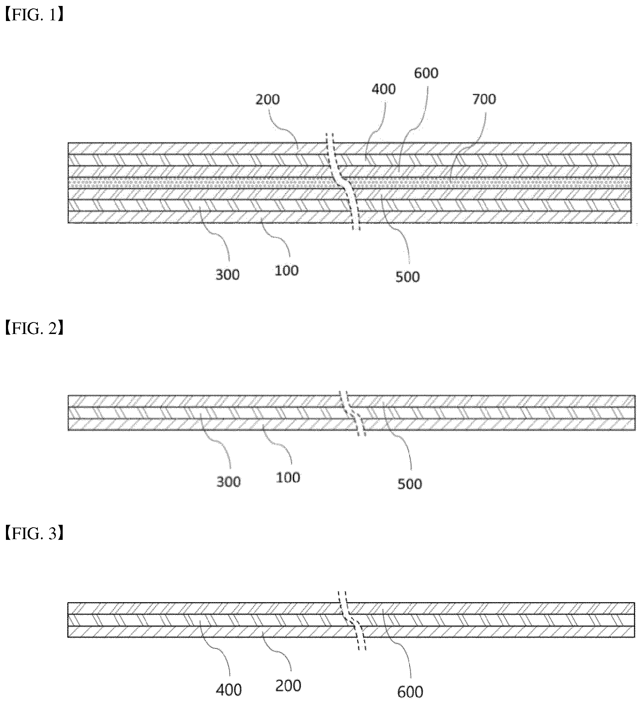

FIG. 1 is a sectional view illustrating the cross-section of an electrochromic element according to an embodiment.

Referring to FIG. 1, the electrochromic element according to an embodiment includes a first substrate 100, a second substrate 200, a first transparent electrode 300, a second transparent electrode 400, a first discoloration layer 500, a second discoloration layer 600 and an electrolyte layer 700.

Together with the second substrate 200, the first substrate 100 supports the first transparent electrode 300, the first discoloration layer 500, the second discoloration layer 600, the second transparent electrode 400 and the electrolyte layer 700.

In addition, the first transparent electrode 300, the first discoloration layer 500, the second discoloration layer 600, the second transparent electrode 400 and the electrolyte layer 700 are sandwiched between the first substrate 100 and the second substrate 200. Together with the second substrate 200, the first substrate 100 may protect the first transparent electrode 300, the first discoloration layer 500, the second discoloration layer 600, the second transparent electrode 400 and the electrolyte layer 700 from external physical impact and chemical impact.

The first substrate 100 may include a polymer resin. The first substrate 100 may include at least one selected from the group consisting of a polyester-based resin, a polyimide-based resin, a cyclic olefin polymer resin, a polyethersulfone, a polycarbonate and a polyolefin-based resin.

The first substrate 100 may include a polyester resin as a main component. The first substrate 100 may include polyethylene terephthalate. The first substrate 100 may include the polyethylene terephthalate in a content of about 90 wt% or more based on the total composition amount. The first substrate 100 may include the polyethylene terephthalate in a content of about 95 wt% or more based on the total composition amount. The first substrate 100 may include the polyethylene terephthalate in a content of about 97 wt% or more based on the total composition amount. The first substrate 100 may include the polyethylene terephthalate in a content of about 98 wt% or more based on the total composition amount.

The first substrate 100 may include a uniaxially or biaxially stretched polyethylene terephthalate film. The first substrate 100 may include a polyethylene terephthalate film stretched about 2 to about 5 times in a longitudinal direction and/or width direction.

The first substrate 100 may have high mechanical properties to reinforce glass when applied to a window of a building or a vehicle.

The first substrate 100 may have a tensile strength of about 7 kgf/mm² to about 40 kgf/mm² in the longitudinal direction. The first substrate 100 may have a tensile strength of about 8 kgf/mm² to about 35 kgf/mm² in the longitudinal direction.

The first substrate 100 may have a tensile strength of about 7 kgf/mm² to about 40 kgf/mm² in the width direction. The first substrate 100 may have a tensile strength of about 8 kgf/mm² to about 35 kgf/mm² in the width direction.

The first substrate 100 may have a modulus of about 200 kgf/mm² to about 400 kgf/mm² in the longitudinal direction. The first substrate 100 may have a modulus of about 250 kgf/mm² to about 350 kgf/mm² in the longitudinal direction. The first substrate 100 may have a modulus of about 250 kgf/mm² to about 270 kgf/mm² in the longitudinal direction.

The first substrate 100 may have a modulus of about 200 kgf/mm² to about 400 kgf/mm² in the width direction. The first substrate 100 may have a modulus of about 250 kgf/mm² to about 350 kgf/mm² in the width direction. The first substrate 100 may have a modulus of about 250 kgf/mm² to about 270 kgf/mm² in the width direction.

The first substrate 100 may have a fracture elongation of about 30% to about 150% in the width direction. The first substrate 100 may have a fracture elongation of about 30% to about 130% in the width direction. The first substrate 100 may have a fracture elongation of about 40% to about 120% in the width direction.

The first substrate 100 may have a fracture elongation of about 30% to about 150% in the longitudinal direction. The first substrate 100 may have a fracture elongation of about 30% to about 130% in the longitudinal direction. The first substrate 100 may have a fracture elongation of about 40% to about 120% in the longitudinal direction.

The first substrate 100 may have a fracture elongation of about 30% to about 150% in the width direction. The first substrate 100 may have a fracture elongation of about 30% to about 130% in the width direction. The first substrate 100 may have a fracture elongation of about 40% to about 120% in the width direction.

The modulus, the fracture elongation and the tensile strength may be measured according to KS B 5521.

In addition, the modulus, the tensile strength and the fracture elongation may be measured according to ASTM D882.

Since the first substrate 100 has improved mechanical strength as described above, it may efficiently protect the first transparent electrode 300, the second transparent electrode 400, the first discoloration layer 500, the second discoloration layer 600 and the electrolyte layer 700. In addition, since the first substrate 100 has improved mechanical strength as described above, the mechanical strength of the mechanical strength of glass to be attached may be effectively reinforced.

In addition, the first substrate 100 may have high chemical resistance. Accordingly, even if an electrolyte contained in the first substrate 100 leaks, damage to the surface of the first substrate 100 may be minimized.

The first substrate 100 may have improved optical properties. A total light transmittance of the first substrate 100 may be about 55% or more. The total light transmittance of the first substrate 100 may be about 70% or more. The total light transmittance of the first substrate 100 may be about 75% to about 99%. The total light transmittance of the first substrate 100 may be about 80% to about 99%.

A haze of the first substrate 100 may be about 20% or less. The haze of the first substrate 100 may be about 0.1% to about 20%. The haze of the first substrate 100 may be about 0.1% to about 10%. The haze of the first substrate 100 may be about 0.1% to about 7%.

The total light transmittance and the haze may be measured according to ASTM D 1003, etc.

Since the first substrate 100 has an appropriate total light transmittance and haze, the electrochromic element according to another embodiment may have improved optical properties. That is, since the first substrate 100 has an appropriate transmittance and haze, an improved appearance may be achieved by minimizing distortion of images from the outside while appropriately controlling a transmittance when the electrochromic element according to another embodiment is applied to a window.

In addition, the first substrate 100 may have an in-plane phase difference of about 100 nm to about 4000 nm. The first substrate 100 may have an in-plane phase difference of about 200 nm to about 3500 nm. The first substrate 100 may have an in-plane phase difference of about 200 nm to about 3000 nm.

The first substrate 100 may have an in-plane phase difference of about 7000 nm or more. The first substrate 100 may have an in-plane phase difference of about 7000 nm to about 50000 nm. The first substrate 100 may have an in-plane phase difference of about 8000 nm to about 20000 nm.

The in-plane phase difference may be derived from a refractive index and thickness according to the direction of the first substrate 100.

Since the first substrate 100 has the in-plane phase difference as described above, the electrochromic film according to an embodiment may have an improved appearance.

The thickness of the first substrate 100 may be about 10 *µ*m to about 200 *µ*m. The thickness of the first substrate 100 may be about 23 *µ*m to about 150 *µ*m. The thickness of the first substrate 100 may be about 30 *µ*m to about 120 *µ*m.

The first substrate 100 may include an organic filler or an inorganic filler. The organic or inorganic filler may function as an anti-blocking agent.

An average particle diameter of the filler may be about 0.1 *µ*m to about 5 *µ*m. The average particle diameter of the filler may be about 0.1 *µ*m to about 3 *µ*m. The average particle diameter of the filler may be about 0.1 *µ*m to about 1 *µ*m.

The filler may be at least one selected from the group consisting of silica particles, barium sulfate particles, alumina particles and titania particles.

In addition, the filler may be included in the first substrate 100 in a content of about 0.01 wt% to about 3 wt% based on the total amount of the first substrate 100. The filler may be included in the first substrate 100 in a content of about 0.05 wt% to about 2 wt% based on the total amount of the first substrate 100.

The first substrate 100 may have a single-layer structure. For example, the first substrate 100 may be a single-layer polyester film.

The first substrate 100 may have a multi-layer structure. For example, the first substrate 100 may be a multi-layer co-extruded film. The multi-layer co-extruded structure may include a center layer, a first surface layer and a second surface layer. The filler may be included in the first surface layer and the second surface layer.

The second substrate 200 faces the first substrate 100. The second substrate 200 is disposed on the first substrate 100. One end 11 of the second substrate 200 may be disposed to be misaligned with one end 11 of the first substrate 100. The other end 12 of the second substrate 200 may be disposed to be misaligned with the other end 12 of the first substrate 100.

Together with the first substrate 100, the second substrate 200 supports the first transparent electrode 300, the first discoloration layer 500, the second discoloration layer 600, the second transparent electrode 400, and the electrolyte layer 700.

In addition, the first transparent electrode 300, the first discoloration layer 500, the second discoloration layer 600, the second transparent electrode 400, and the electrolyte layer 700 are sandwiched between the second substrate 200 and the first substrate 100. Together with the first substrate 100, the second substrate 200 may protect the first transparent electrode 300, the first discoloration layer 500, the second discoloration layer 600, the second transparent electrode 400, and the electrolyte layer 700 from external physical impact and chemical impact.

The second substrate 200 may include a polymer resin. The second substrate 200 may include at least one selected from the group consisting of a polyester-based resin, a polyimide-based resin, a cyclic olefin polymer resin, a polyethersulfone, a polycarbonate or a polyolefin-based resin.

The second substrate 200 may include a polyester resin as a main component. The second substrate 200 may include polyethylene terephthalate. The second substrate 200 may include the polyethylene terephthalate in a content of about 90 wt% or more based on the total composition amount. The second substrate 200 may include the polyethylene terephthalate in a content of about 95 wt% or more based on the total composition amount. The second substrate 200 may include the polyethylene terephthalate in a content of about 97 wt% or more based on the total composition amount. The second substrate 200 may include the polyethylene terephthalate in a content of about 98 wt% or more based on the total composition amount.

The second substrate 200 may include a uniaxially or biaxially stretched polyethylene terephthalate film. The second substrate 200 may include a polyethylene terephthalate film stretched about 2 to about 5 times in a longitudinal direction and/or width direction.

The second substrate 200 may have high mechanical properties to reinforce the glass when applied to a window of a building or a vehicle.

The second substrate 200 may have a tensile strength of about 7 kgf/mm² to about 40 kgf/mm² in the length direction. The second substrate 200 may have a tensile strength of about 8 kgf/mm² to about 35 kgf/mm² in the length direction.

The second substrate 200 may have a tensile strength of about 7 kgf/mm² to about 40 kgf/mm² in the width direction. The second substrate 200 may have a tensile strength of about 8 kgf/mm² to about 35 kgf/mm² in the width direction.

The second substrate 200 may have a modulus of about 200 kgf/mm² to about 400 kgf/mm² in the length direction. The second substrate 200 may have a modulus of about 250 kgf/mm² to about 350 kgf/mm² in the length direction. The second substrate 200 may have a modulus of about 250 kgf/mm² to about 270 kgf/mm² in the length direction.

The second substrate 200 may have a modulus of about 200 kgf/mm² to about 400 kgf/mm² in the width direction. The second substrate 200 may have a modulus of about 250 kgf/mm² to about 350 kgf/mm² in the width direction. The second substrate 200 may have a modulus of about 250 kgf/mm² to about 270 kgf/mm² in the width direction.

The second substrate 200 may have a fracture elongation of about 30% to about 150% in the length direction. The second substrate 200 may have a fracture elongation of about 30% to about 130% in the length direction. The second substrate 200 may have a fracture elongation of about 40% to about 120% in the length direction.

The second substrate 200 may have a fracture elongation of about 30% to about 150% in the length direction. The second substrate 200 may have a fracture elongation of about 30% to about 130% in the length direction. The second substrate 200 may have a fracture elongation of about 40% to about 120% in the length direction.

The second substrate 200 may have a fracture elongation of about 30% to about 150% in the width direction. The second substrate 200 may have a fracture elongation of about 30% to about 130% in the width direction. The second substrate 200 may have a fracture elongation of about 40% to about 120% in the width direction.

Since the second substrate 200 has the improved mechanical strength as described above, it may efficiently protect the first transparent electrode 300, the second transparent electrode 400, the first discoloration layer 500, the second discoloration layer 600 and the electrolyte layer 700. In addition, since the second substrate 200 has the improved mechanical strength as described above, the mechanical strength of the mechanical strength of glass to be attached may be effectively reinforced.

In addition, the second substrate 200 may have high chemical resistance. Accordingly, even if an electrolyte contained in the second substrate 200 leaks, damage to the surface of the second substrate 200 may be minimized.

The second substrate 200 may have improved optical properties. The second substrate 200 may have a total light transmittance of about 55% or more. The second substrate 200 may have a total light transmittance of about 70% or more. The second substrate 200 may have a total light transmittance of about 75% to about 99%. The second substrate 200 may have a total light transmittance of about 80% to about 99%.

A haze of the second substrate 200 may be about 20% or less. The haze of the second substrate 200 may be about 0.1% to about 20%. The haze of the second substrate 200 may be about 0.1% to about 10%. The haze of the second substrate 200 may be about 0.1% to about 7%.

Since the second substrate 200 has an appropriate total light transmittance and haze, the electrochromic element according to another embodiment may have improved optical properties. That is, since the second substrate 200 has an appropriate transmittance and haze, an improved appearance may be achieved by minimizing distortion of images from the outside while appropriately controlling a transmittance when the electrochromic element according to another embodiment is applied to a window.

In addition, the second substrate 200 may have an in-plane phase difference of about 100 nm to about 4000 nm. The second substrate 20 may have an in-plane phase difference of about 200 nm to about 3500 nm. The second substrate 200 may have an in-plane phase difference of about 200 nm to about 3000 nm.

The second substrate 200 may have an in-plane phase difference of about 7000 nm or more. The second substrate 200 may have an in-plane phase difference of about 7000 nm to about 50000 nm. The second substrate 200 may have an in-plane phase difference of about 8000 nm to about 20000 nm.

The in-plane phase difference may be derived from a refractive index and thickness according to the direction of the second substrate 200.

Since the second substrate 200 has the in-plane phase difference as described above, the electrochromic element according to an embodiment may have improved appearance.

The thickness of the second substrate 200 may be about 10 *µ*m to about 200 *µ*m. The thickness of the first substrate 100 may be about 23 *µ*m to about 150 *µ*m. The thickness of the first substrate 100 may be about 30 *µ*m to about 120 *µ*m.

The second substrate 200 may include an organic filler or an inorganic filler. The organic or inorganic filler may function as an anti-blocking agent.

An average particle diameter of the filler may be about 0.1 *µ*m to about 5 *µ*m The average particle diameter of the filler may be about 0.1 *µ*m to about 3 *µ*m. The average particle diameter of the filler may be about 0.1 *µ*m to about 1 *µ*m.

The filler may be at least one selected from the group consisting of silica particles, barium sulfate particles, alumina particles and titania particles.

In addition, the filler may be included in the second substrate 200 in a content of about 0.01 wt% to about 3 wt% of the total amount of the second substrate 200. The filler may be included in the second substrate 200 in a content of about 0.05 wt% to about 2 wt% of the total amount of the second substrate 200.

The second substrate 200 may have a single-layer structure. For example, the second substrate 200 may be a single-layer polyester film.

The second substrate 200 may have a multi-layer structure. For example, the second substrate 200 may be a multi-layer co-extruded film.

The first substrate 100 and the second substrate 200 may be flexible. Accordingly, Accordingly, the electrochromic element according to another embodiment may be flexible overall.

The first transparent electrode 300 is disposed on the first substrate 100. The first transparent electrode 300 may be deposited on the first substrate 100. In addition, a hard coating layer may be further included between the first transparent electrode 300 and the first substrate 100.

The first transparent electrode 300 may include at least one selected from the group consisting of tin oxide, zinc oxide, silver (Ag), chromium (Cr), indium tin oxide (ITO), fluorine-doped tin oxide (FTO), aluminum-doped zinc oxide (AZO), gallium-doped zinc oxide (GZO), antimony-doped tin oxide (ATO), indium zinc oxide (IZO), niobium-doped titanium oxide (NTO) and cadmium tin oxide (CTO).

In addition, the first transparent electrode 300 may include graphene, silver nanowires and/or metal mesh.

The first transparent electrode 300 may have a total light transmittance of about 80% or more. The first transparent electrode 300 may have a total light transmittance of about 85% or more. The first transparent electrode 300 may have a total light transmittance of about 88% or more.

The first transparent electrode 300 may have a haze of about 10% or less. The first transparent electrode 300 may have a haze of about 7% or less. The first transparent electrode 300 may have a haze of about 5% or less.

A surface resistance of the first transparent electrode 300 may be about 1 Ω/sq to 60 Ω/sq The surface resistance of the first transparent electrode 300 may be about 1 Ω/sq to 40 Ω/sq. The surface resistance of the first transparent electrode 300 may be about 1 Ω/sq to 30 Ω/sq.

The thickness of the first transparent electrode 300 may be about 50 nm to about 50 *µ*m. The thickness of the first transparent electrode 300 may be about 100 nm to about 10 *µ*m. The thickness of the first transparent electrode 300 may be about 150 nm to about 5 *µ*m.

The first transparent electrode 300 is electrically connected to the first discoloration layer 500. In addition, the first transparent electrode 300 is electrically connected to the electrolyte layer 700 through the first discoloration layer 500.

The second transparent electrode 400 is disposed under the second substrate 200. The second transparent electrode 400 may be deposited on the second substrate 200. In addition, a hard coating layer may be further included between the second transparent electrode 400 and the second substrate 200.

The second transparent electrode 400 may include at least one selected from the group consisting of tin oxide, zinc oxide, silver (Ag), chromium (Cr), indium tin oxide (ITO), fluorine-doped tin oxide (FTO), aluminum-doped zinc oxide (AZO), gallium-doped zinc oxide (GZO), antimony-doped tin oxide (ATO), indium zinc oxide (IZO), niobium-doped titanium oxide (NTO) and cadmium tin oxide (CTO).

In addition, the second transparent electrode 400 may include graphene, silver nanowires and/or metal mesh.

The second transparent electrode 400 may have a total light transmittance of about 80% or more. The second transparent electrode 400 may have a total light transmittance of about 85% or more. The second transparent electrode 400 may have a total light transmittance of about 88% or more.

The second transparent electrode 400 may have a haze of about 10% or less. The second transparent electrode 400 may have a haze of about 7% or less. The second transparent electrode 400 may have a haze of about 5% or less.

The surface resistance of the second transparent electrode 400 may be about 1 Ω/sq to 60 Ω/sq. The surface resistance of the second transparent electrode 400 may be about 1 Ω/sq to 40 Ω/sq. The surface resistance of the second transparent electrode 400 may be about 1 Ω/sq to 30 Ω/sq.

The thickness of the second transparent electrode 400 may be about 50 nm to about 50 *µ*m. The thickness of the second transparent electrode 400 may be about 100 nm to about 10 *µ*m. The thickness of the second transparent electrode 400 may be about 150 nm to about 5 *µ*m

The second transparent electrode 400 is electrically connected to the second discoloration layer 600. In addition, the second transparent electrode 400 is electrically connected to the electrolyte layer 700 through the second discoloration layer 600.

The first discoloration layer 500 is disposed on the first transparent electrode 300. The first discoloration layer 500 may be directly disposed on the upper surface of the first transparent electrode 300. The first discoloration layer 500 may be electrically directly connected to the first transparent electrode 300.

The first discoloration layer 500 is electrically connected to the first transparent electrode 300. The first discoloration layer 500 may directly access the first transparent electrode 300. In addition, the first discoloration layer 500 is electrically connected to the electrolyte layer 700. The first discoloration layer 500 may be electrically connected to the electrolyte layer 700.

The first discoloration layer 500 may be discolored when supplied with electrons. The first discoloration layer 500 may include a first electrochromic material whose color changes when supplied with electrons. The first electrochromic material may include at least one selected from the group consisting of tungsten oxide, niobium pentoxide, vanadium pentoxide, titanium oxide, molybdenum oxide, vilogen and poly(3,4-ethylenedioxythiophene (PEDOT).

The first discoloration layer 500 may include the first electrochromic material in the form of particles. The tungsten oxide, the niobium pentoxide, the vanadium pentoxide, the titanium oxide and the molybdenum oxide may be particles having a particle diameter of about 1nm to about 200 nm. That is, the diameter of the first electrochromic particles included in the first discoloration layer 500 may be about 2 nm to about 150 nm. The diameter of the first electrochromic particles included in the first discoloration layer 500 may be about 5 nm to about 100 nm. The diameter of the first electrochromic particles included in the first discoloration layer 500 may be about 10 nm to about 50 nm.

The first discoloration layer 500 may include the first electrochromic material in a content of about 70 wt% to about 98 wt% based on the total weight of based on the total weight of the first discoloration layer 500. The first discoloration layer 500 may include the first electrochromic material in a content of about 80 wt% to about 96 wt% based on the total weight of the first discoloration layer 500. The first discoloration layer 500 may include the first electrochromic material in a content of about 85 wt% to about 94 wt% based on the total weight of the first discoloration layer 500.

In addition, the first discoloration layer 500 may further include a binder. The binder may be an inorganic binder. The binder may include a silica gel. The binder may be formed by a silica sol containing tetramethoxysilane or methyltrimethoxysilane.

The first discoloration layer 500 may include the binder in a content of about 1 wt% to 20 wt% based on the total weight of the first discoloration layer 500. The first discoloration layer 500 may include the binder in a content of about 2 wt% to 15 wt% based on the total weight of the first discoloration layer 500. The first discoloration layer 500 may include the binder in a content of about 3 wt% to 10 wt% based on the total weight of the first discoloration layer 500.

The second discoloration layer 600 is disposed under the second transparent electrode 400. The second discoloration layer 600 may be directly disposed on the lower surface of the second transparent electrode 400. The second discoloration layer 600 may be electrically directly connected to the second transparent electrode 400.

The second discoloration layer 600 is electrically connected to the second transparent electrode 400. The second discoloration layer 600 may directly access the second transparent electrode 400. In addition, the second discoloration layer 600 is electrically connected to the electrolyte layer 700. The second discoloration layer 600 may be electrically connected to the electrolyte layer 700.

The second discoloration layer 600 may be discolored while losing electrons. The second discoloration layer 600 may include a second electrochromic material that is oxidized and discolored while losing electrons. The second discoloration layer 600 may include at least one selected from the group consisting of Prussian blue, nickel oxide and iridium oxide.

The second discoloration layer 600 may include the second electrochromic material in the form of particles. The Prussian blue, the nickel oxide and the iridium oxide may be particles having a particle diameter of about 1nm to about 200 nm. That is, a diameter of second electrochromic particles included in the second discoloration layer 600 may be about 2 nm to about 150 nm. The diameter of the second electrochromic particles may be about 5 nm to about 100 nm. The diameter of the second electrochromic particles may be about 10 nm to about 50 nm.

The second discoloration layer 600 may include the second electrochromic material in a content of about 70 wt% to about 98 wt% based on the total weight of the second discoloration layer 600. The second discoloration layer 600 may include the second electrochromic material in a content of about 80 wt% to about 96 wt% based on the total weight of the second discoloration layer 600. The second discoloration layer 600 may include the second electrochromic material in a content of about 85 wt% to about 94 wt% based on the total weight of the second discoloration layer 600.

In addition, the second discoloration layer 600 may further include the binder. The binder may be an inorganic binder. The binder may include a silica gel. The binder may be formed by a silica sol containing tetramethoxysilane or methyltrimethoxysilane.

The second discoloration layer 600 may include the binder in a content of about 1 wt% to 20 wt% based on the total weight of the second discoloration layer 600. The second discoloration layer 600 may include the binder in a content of about 2 wt% to 15 wt% based on the total weight of the second discoloration layer 600. The second discoloration layer 600 may include the binder in a content of about 3 wt% to 10 wt% based on the total weight of the first discoloration layer 500.

The electrolyte layer 700 is disposed on the first discoloration layer 500. In addition, the electrolyte layer 700 is disposed under the second discoloration layer 600. The electrolyte layer 700 is disposed between the first discoloration layer 500 and the second discoloration layer 600.

The electrolyte layer 700 may include cations involved in an electrochromic reaction. The cations may include metal ions. The metal ions may be at least one selected from the group consisting of lithium ions (Li⁺), sodium ions (Na⁺) and potassium ions (K⁺). The cations may be rubidium ions (Rb⁺) or cesium ions (Cs⁺).

The electrolyte layer 700 includes a solvent. The solvent may be at least one selected from the group consisting of acetamide, adiponitrile, sulfolane and polyethyleneglycol.

The electrolyte layer 700 may include a metal salt. The metal salt may be at least one selected from the group consisting of LiClO₄, LiBF₄, LiAsF₆, LiPF₆, LiCl, LiBr, LiI, LiB₁₀Cl₁₀, LiCF₃SO₃, LiCF₃CO₂, LiAsF₆, LiSbF₆, LiAlCl₄, CH₃SO₃Li, CF₃SO₃Li, (CF₃SO₂)_{2 N}Li and NaClO₄.

In addition, the electrolyte layer 700 may include a Cl or F element-containing compound as a metal salt. The electrolyte layer 700 may include one or more metal salts selected from among LiClO₄, LiBF₄, LiAsF₆, LiPF₆, LiCl, LiB₁₀Cl₁₀, LiCF₃SO₃, LiCF₃CO₂, LiAsF₆, LiSbF₆, LiAlCl₄, CF₃SO₃Li, (CF₃SO₂)_{2 N}Li and NaClO₄.

The electrolyte layer 700 may include a curable resin composition that can be cured by ultraviolet irradiation or heat. The curable resin composition may be at least one selected from the group consisting of an acrylate-based oligomer, a polyethylene glycol-based oligomer, a urethane-based oligomer, a polyester-based oligomer, polyethylene glycol dimethyl and polyethylene glycol diacrylate. In addition, the electrolyte layer 700 may include a photocuring initiator and/or a thermal curing initiator.

In more detail, the electrolyte layer 700 may include a curable resin composition. The curable resin composition may have photo-curability and/or thermosetting property.

The curable resin composition may include an acrylate copolymer.

The acrylate copolymer may be at least one selected from the group consisting of urethane acrylate and epoxy acrylate.

The molecular weight of the urethane acrylate may be about 3000 g/mol to about 50000 g/mol. The molecular weight of the urethane acrylate may be about 5000 g/mol to about 50000 g/mol.

The urethane acrylate may include an ether-based urethane acrylate.

The ether-based urethane acrylate may include a first polyol, a diisocyanate and an acrylate. The ether-based urethane acrylate may be formed by reacting with the polyether diol, the diisocyanate and the acrylate.

The ether-based urethane acrylate may include a first polyol having a molecular weight of about 100 g/mol to about 1000 g/mol; a first diisocyanate having a molecular weight of about 100 g/mol to about 1000 g/mol; and a first acrylate having a molecular weight of about 50 g/mol to about 500 g/mol.

The first polyol may have a molecular weight of about 100 g/mol to about 1000 g/mol. The first polyol may have a molecular weight of about 200 g/mol to about 1000 g/mol. The first polyol may have a molecular weight of about 200 g/mol to about 700 g/mol.

The first polyol may include polyether diol.

The first polyol may include poly(tetramethylene ether)diol.

The ether-based urethane acrylate may include the first polyol in a content of about 60 mol parts to about 100 mol parts based on 100 mol parts of the first diisocyanate. The ether-based urethane acrylate may include the first polyol in a content of about 65 mol parts to about 95 mol parts based on 100 mol parts of the first diisocyanate. The ether-based urethane acrylate may include the first polyol in a content of about 70 mol parts to about 90 mol parts based on 100 mol parts of the first diisocyanate.

The first diisocyanate may have a molecular weight of about 100 g/mol to about 1000 g/mol.

The first diisocyanate may be one or more selected from the group consisting of isophorone diisocyanate, toluene diisocyanate, hexamethylene diisocyanate and methylene diphenyl diisocyanate.

The first diisocyanate may be an isophorone diisocyanate.

The first diisocyanate may be included in a content of about 30 mol% to about 70 mol% in the ether-based urethane acrylate based on the total mole number of the ether-based urethane acrylate. The diisocyanate may be included in a content of about 40 mol% to about 60 mol% in the ether-based urethane acrylate based on the total mole number of the ether-based urethane acrylate.

The first acrylate may have a molecular weight of about 50 g/mol to about 500 g/mol.

The first acrylate may include a monoacrylate.

The first acrylate may be at least one selected from the group consisting of 2-hydroxyethyl acrylate and 2-hydroxypropyl acrylate methacrylate.

The ether-based urethane acrylate may include the first acrylate in a content of about 20 mol parts to about 40 mol parts based on 100 mol parts of the first diisocyanate. The ether-based urethane acrylate may include the first acrylate in a content of about 23 mol parts to about 37 mol parts based on 100 mol parts of the first diisocyanate. The ether-based urethane acrylate may include the first acrylate in a content of about 25 mol parts to about 35 mol parts based on 100 mol parts of the first diisocyanate.

The ether-based urethane acrylate may have a weight average molecular weight of about 1000 g/mol to about 100000 g/mol. The weight average molecular weight of the ether-based urethane acrylate may be about 2000 g/mol to about 70000 g/mol. The weight average molecular weight of the ether-based urethane acrylate may be about 5000 g/mol to about 50000 g/mol.

The ether-based urethane acrylate may include a second diisocyanate, a second polyol and a second acrylate.

The second diisocyanate may include an aliphatic diisocyanate.

The second diisocyanate may be at least one selected from the group consisting of hexamethylene diisocyanate, toluene diisocyanate, dicyclohexylmethane-4,4'-diisocyanate (H12MDI) and methylene diphenyl diisocyanate.

The second diisocyanate may be included in a content of about 20 mol% to about 60 mol% in the ether-based urethane acrylate based on 100 mol% of the ether-based urethane acrylate. The second diisocyanate may be included in a content of about 30 mol% to about 50 mol% in the ether-based urethane acrylate based on 100 mol% of the ether-based urethane acrylate.

The second polyol may include a polyester diol or a polycaprolactone diol.

A weight average molecular weight of the polycaprolactone diol may be about 100 g/mol to about 1000 g/mol. The weight average molecular weight of the polycaprolactone diol may be about 100 g/mol to about 800 g/mol. The weight average molecular weight of the polycaprolactone diol may be about 200 g/mol to about 800 g/mol.

The second acrylate may be at least one selected from the group consisting of 2-hydroxyethyl acrylate and 2-hydroxypropyl acrylate methacrylate.

The molecular weight of the ether-based urethane acrylate may be about 3000 g/mol to about 50000 g/mol. The molecular weight of the ether-based urethane acrylate may be about 5000 g/mol to about 50000 g/mol.

A viscosity of the urethane acrylate at about 25°C may be about 10000 cPs to about 100000 cPs. A viscosity of the urethane acrylate at about 60°C may be about 1000 cPs to about 8000 cPs.

The urethane acrylate is commercially available. The urethane acrylate may be at least one selected from the group consisting of, for example, Miramer PU210, Miramer PU256, Miramer PU2050, Miramer PU2100, Miramer PU2300C, Miramer PU2560, Miramer PU320, Miramer PU340, Miramer PU3000, Miramer PU3200, Miramer PU3450, Miramer PU5000, Miramer PU610, Miramer MU9500, Miramer MU9800, Miramer SC2154, Miramer SC2404 or Miramer SC2565 among MIWON Co.'s products.

The acrylate copolymer may include an epoxy acrylate.

The epoxy acrylate may be formed by reacting an epoxy compound and acrylate. A molar ratio of the epoxy compound to the acrylate may be about 1:1.5 to about 1:3.5.

The epoxy compound may be at least one selected from the group consisting of glycerol diglycidyl ether, a bisphenol A epoxy compound, a bisphenol F epoxy compound and a novolac epoxy compound.

The acrylate may be at least one selected from the group consisting of 2-carboxyethyl acrylate, 2-hydroxyethyl acrylate and acrylic acid.

The epoxy acrylate may have a weight average molecular weight of about 200 g/mol to about 3000 g/mol. The epoxy acrylate may have a weight average molecular weight of about 500 g/mol to about 2000 g/mol. The epoxy acrylate may have a weight average molecular weight of about 500 g/mol to about 2000 g/mol.

The epoxy acrylate may have a viscosity of about 100 cPs to about 5000 cPs at about 25°C. The epoxy acrylate may have a viscosity of about 100 cPs to about 5000 cPs at about 25°C. The epoxy acrylate may have a viscosity of about 10000 cPs to about 40000 cPs at about 25°C.

In addition, the epoxy acrylate may have a viscosity of about 3000 cPs to about 8000 cPs at about 40°C.

In addition, the epoxy acrylate may have a viscosity of about 200 cPs to about 6000 cPs at about 60°C.

The epoxy acrylate is commercially available. The epoxy acrylate may be at least one selected from the group consisting of, for example, Miramer PE210, Miramer PE250, Miramer SC6300, Miramer SC6400, Miramer PE110H, Miramer PE230, Miramer PE310, Miramer EA2235, Miramer EA2255, Miramer EA2259 or Miramer EA2280 among MIWON Co.'s products.

The curable resin composition may further include a multifunctional acrylate monomer.

The multifunctional acrylate monomer may include a difunctional acrylate or a trifunctional acrylate.

The multifunctional acrylate monomer may include two or more functional groups. The multifunctional acrylate monomer may be a monomer including two or more functional acrylate groups. The multifunctional acrylate monomer may be an aliphatic compound including three acrylates.

The multifunctional acrylate monomer may be at least one selected from the group consisting of trimethylolpropane triacrylate, trimethylolpropane (ethylene oxide)₃ triacrylate (trimethylolpropane (EO)₃ triacrylate), trimethylolpropane (ethylene oxide)₆ triacrylate (trimethylolpropane (EO)₆ triacrylate), trimethylolpropane (ethylene oxide) triacrylate (trimethylolpropane (EO)₉ triacrylate), trimethylolpropane (ethylene oxide)₁₅ triacrylate (trimethylolpropane (EO)₁₅ triacrylate), glycerin (propylene oxide)₃ triacrylate (glycerine (PO)₃ triacrylate) and pantaerythritol triacrylate.

The multifunctional acrylate monomer may have a molecular weight of about 200 to about 800. The multifunctional acrylate monomer may have a molecular weight of about 200 to about 400.

The multifunctional acrylate monomer may have a viscosity of about 20 cps to about 300 cps at about 25°C.

The multifunctional acrylate monomer may be included in a content of about 5 wt% to about 30 wt% in the curable resin composition based on the total weight of the curable resin composition. The multifunctional acrylate monomer may be included in a content of about 10 wt% to about 25 wt% in the curable resin composition based on the total weight of the curable resin composition. The multifunctional acrylate monomer may be included in a content of about 13 wt% to about 23 wt% in the curable resin composition based on the total weight of the curable resin composition.

The curable resin composition may include a monofunctional acrylate monomer. The monofunctional acrylate monomer may be a monomer including one functional acrylate group. The monofunctional acrylate monomer may be an aromatic compound including one functional acrylate group.

The monofunctional acrylate monomer may be at least one selected from the group consisting of caprolactone acrylate, cyclic trimethylolpropane formal acrylate, phenoxy benzyl acrylate, 3,3,5-trimethyl cyclohexyl acrylate, isobornyl acrylate, o-phenylphenol EO acrylate, 4-tert-butylcyclohexyl acrylate, benzyl acrylate, biphenylmethyl acrylate, lauryl acrylate, isodecyl acrylate, phenol(ethylene oxide) acrylate (phenol(EO) acrylate), phenol(ethylene oxide)₂ arylate (phenol(EO)₂ acrylate), phenol(ethylene oxide)₄ acrylate (phenol(EO)₄ acrylate) and tetra hydrofurfuryl acrylate.

In addition, the molecular weight of the monofunctional acrylate monomer may be about 150 to about 800. The molecular weight of the monofunctional acrylate monomer may be about 200 to about 400.

In addition, a viscosity of the monofunctional acrylate monomer at about 25°C may be about 10 cps to about 60 cps.

The monofunctional acrylate monomer may be included in a content of about 5 wt% to about 20 wt% in the curable composition based on the weight of the curable composition. The monofunctional acrylate monomer may be included in a content of about 5 wt% to about 10 wt% in the curable composition based on the weight of the curable composition. The monofunctional acrylate monomer may be included in a content of about 10 wt% to about 15 wt% in the curable composition based on the total weight of the curable composition.

The curable composition may include acrylate including a thermosetting functional group. That is, the acrylate including a thermosetting functional group may have both thermosetting property and photo-curability.

The thermosetting acrylate may be at least one selected from the group consisting of urethane acrylate including a thermosetting functional group, epoxy acrylate including a thermosetting functional group, ester-based acrylate including a thermosetting functional group and ether-based acrylate including a thermosetting functional group.

The thermosetting acrylate may include a carboxyl group. The thermosetting acrylate may be at least one of compounds represented by Chemical Formulas 1 to 9 below:

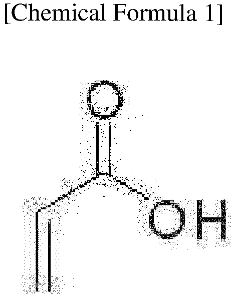

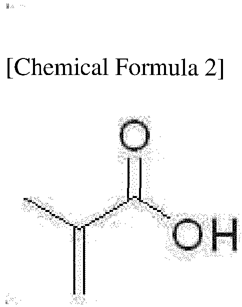

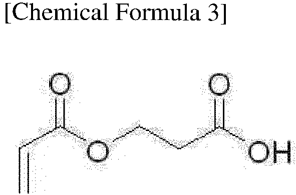

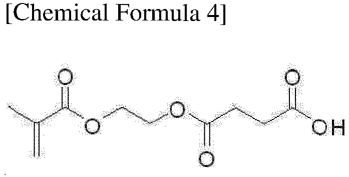

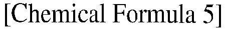

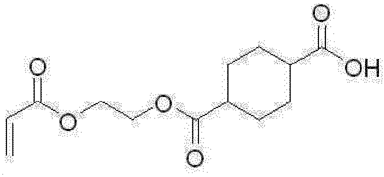

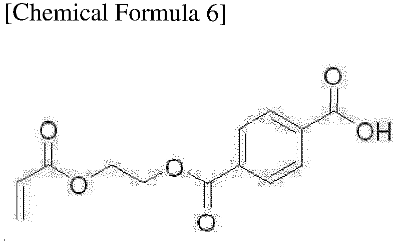

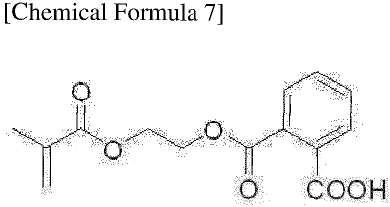

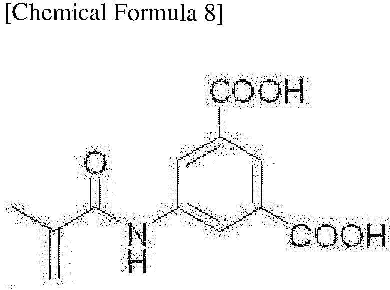

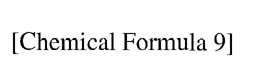

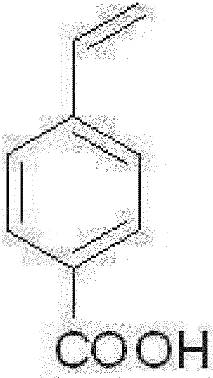

The thermosetting acrylate may be included in a content of about 1 wt% to about 10 wt% in the curable resin composition based on the total weight of the curable resin composition. The thermosetting acrylate may be included in a content of about 0.5 wt% to about 5 wt% in the curable resin composition based on the total weight of the curable resin composition. The thermosetting acrylate may be included in a content of about 2 wt% to about 8 wt% in the curable resin composition based on the total weight of the curable resin composition.

Since the curable resin composition includes the thermosetting acrylate, a coating layer of the electrolyte composition that is coated with an electrolyte composition including the curable resin composition may be easily cured or semi-cured.

Accordingly, the coating layer of the electrolyte composition may be effectively protected against external physical and chemical impacts.

The curable resin composition may further include a photocurable initiator.

The photoinitiator may be one or more selected from the group consisting of benzophenone-based photoinitiators, thioxanthone-based photoinitiators, α-hydroxy ketone-based photoinitiators, ketone-based photoinitiators, phenyl glyoxylate-based photoinitiators and acryl phosphine oxide-based photoinitiators.

The photoinitiator may be included in a content of about 0.1 wt% to about 5 wt% in the curable resin composition based on the total weight of the curable resin composition.

The photocurable resin composition may include a first photoinitiator and second photoinitiator that operate in different wavelength bands.

Specifically, the curable resin composition may include a first photoinitiator operating in a wavelength band of 208 nm to 295 nm; and a second photoinitiator operating in a wavelength band of 320 nm to 395 nm.

An operating wavelength band of the first photoinitiator may be 208 nm to 275 nm, or 208 nm to 245 nm, and an operating wavelength band of the second photoinitiator may be 330 nm to 390 nm, or 340 nm to 385 nm.

As a specific example, the first photoinitiator may generate radicals by UV light having a wavelength band of 208 nm to 295 nm and an amount of 100 mJ/cm² to 200 mJ/cm². In addition, the second photoinitiator may be decomposed and generate radicals by UV light having a wavelength band of 320 nm to 395 nm and an amount of 500 mJ/cm² to 1000 mJ/cm².

The first photoinitiator may be, for example, a ketone-based photoinitiator, and may have one or more aromatic groups or alicyclic groups. A specific example of the first photoinitiator includes hydroxycyclohexylphenyl ketone.

The second photoinitiator may be, for example, a phosphine-based photoinitiator, and may have one or more aromatic groups. A specific example of the second photoinitiator includes 2,4,6-trimethylbenzoyldiphenylphosphine.

Since the curable resin composition includes the first photoinitiator and the second photoinitiator, a coating layer of the electrolyte composition which is coated with an electrolyte composition including the curable resin composition may be easily cured or semi-cured. That is, ultraviolet rays of a specific wavelength may be used, and the coating layer of the electrolyte composition may be easily cured or semi-cured.

Accordingly, the coating layer of the electrolyte composition may be effectively protected against external physical and chemical impacts.

The electrolyte layer 700 may further include an antioxidant.

The antioxidant may be at least one selected from the group consisting of phenol-based antioxidants, sulfur-based antioxidants, amine-based antioxidants, polyimide-based antioxidants and phosphorus-based antioxidants.

The antioxidant may be included in a content of 0.1 wt% to about 5 wt% in the electrolyte layer 700 based on the total weight of the electrolyte layer 700. The antioxidant may be included in a content of about 0.1 wt% to about 3 wt% in the electrolyte layer 700.

Since the electrolyte layer 700 includes the antioxidant, it may be easily protected from chemical shocks such as external oxygen. Accordingly, the electrolyte layer 700 may have a constant transmittance even if left for a long time.

The thickness of the electrolyte layer 700 may be about 10 *µ*m to about 200 *µ*m The thickness of the electrolyte layer 700 may be about 50 *µ*m to about 150 *µ*m.

The electrolyte layer 700 may have a transmittance in a range of 60% to 95 %. Specifically, the electrolyte layer 700 may have a transmittance of 60% to 95 % for visible light in a wavelength range of 380 nm to 780 nm, more specifically in a wavelength of 400 nm or a wavelength of 550 nm. The transmittance may be measured using a known haze meter (HM).

The electrochromic element according to an embodiment may further include a sealing part (not shown).

The sealing part includes a curable resin. The sealing part may include a thermosetting resin and/or a photocurable resin.

Examples of the thermosetting resin include epoxy resin, melamine resin, urea resin, unsaturated polyester resin, and the like. In addition, examples of the epoxy resin include phenol novolac-type epoxy resin, cresol novolac-type epoxy resin, biphenyl novolac-type epoxy resin, trisphenol novolac-type epoxy resin, dicyclopentadiene novolac-type epoxy resin, bisphenol A-type epoxy resin, bisphenol F-type epoxy resin, 2, 2'-diarylbisphenol A-type epoxy resin, bisphenol S-type epoxy resin, hydrogenated bisphenol A-type epoxy resin, propylene oxide-added bisphenol A-type epoxy resin, biphenyl type epoxy resin, naphthalenetype epoxy resin, resorcinol-type epoxy resin, glycidyl amines, and the like.

In addition, the sealing part may further include a heat-curing agent. Examples of the sealing part include hydrazide compounds such as 1, 3-bis[hydrazinocarbonoethyl 5-isopropyl hydantoin], adipic acid (adipic acid) hydrazide; dicyandiamide, guanidine derivatives, 1-cyanoethyl-2-phenyl imidazole, N-[2-(2-methyl-1-imidazolyl) ethyl]urea, 2, 4-diamino-6-[2'-methylimidazolyl(1')]-ethyl-s-thoriazine, N,N'-bis(2-methyl-1-imidazolyl ethyl) urea, N, N'-(2-methyl-1-imidazolyl ethyl)-azipoamido, 2-phenyl-4-methyl-5-hydroxymethyl imidazole, 2-imidazoline-2-thiol, 2, 2'-thiodiethanethiol, additional products of various amines and epoxy resins, and the like.

The first sealing part may include a photocurable resin. Examples of the photocurable resin include acrylate-based resins such as urethane acrylate, and the like. In addition, the sealing part may further include a photocurable initiator. The photocurable initiator may be at least one selected from the group consisting of acetophenone-based compounds, benzophenone-based compounds, thioxanthone-based compounds, benzoin-based compounds, triazine-based compounds and oxime-based compounds.

In addition, the sealing part may further include a moisture absorbent such as zeolite and/or silica. In addition, the sealing part may further include an inorganic filler. The inorganic filler may have a material having high insulating nature, transparency and durability. Examples of the inorganic filler include silicon, aluminum, zirconia, a mixture thereof, and the like.

In addition, the electrochromic element according to an embodiment may further include a first bus bar (not shown) and a second bus bar (not shown).

The first bus bar may be disposed on the first transparent electrode 300. The first bus bar may access the first transparent electrode 300.

The first bus bar may be electrically connected to the first transparent electrode 300. The first bus bar may be in direct contact with the upper surface of the first transparent electrode 300. The first bus bar may access the first transparent electrode 300 through solder.

The second bus bar is disposed under the second transparent electrode 400. The second bus bar accesses the second transparent electrode 400.

The second bus bar may be electrically connected to the second transparent electrode 400. The second bus bar may be in direct contact with the lower surface of the second transparent electrode 400. The second bus bar may access the second transparent electrode 400 through solder.

The first bus bar and/or the second bus bar may include a metal. The first bus bar and/or the second bus bar may include a metal ribbon. The first bus bar and/or the second bus bar may include a conductive paste. The first bus bar and/or the second bus bar may include a binder and a conductive filler.

The electrochromic element according to an embodiment may be fabricated by the following method. FIGS. 2 to 5 are sectional views illustrating a process of fabricating the electrochromic element according to an embodiment.

Referring to FIG. 2, a first transparent electrode 300 is formed on a first substrate 100. The first transparent electrode 300 may be formed by a vacuum deposition process. A metal oxide such as indium tin oxide may be deposited on the first substrate 100 by a sputtering process, etc., thereby forming the first transparent electrode 300.

The first transparent electrode 300 may be formed by a coating process. Metal nanowires are coated together with a binder on the first substrate 100, thereby forming the first transparent electrode 300. The first substrate 100 may be coated with a conductive polymer, thereby forming the first transparent electrode 300.

In addition, the first transparent electrode 300 may be formed by a patterning process. A metal layer may be formed on the first substrate 100 by a sputtering process, etc., and the metal layer may be patterned, so that a layer of the first transparent electrode 300 including a metal mesh may be formed on the first substrate 100.

Next, a first discoloration layer 500 is formed on the layer of the first transparent electrode 300. The first discoloration layer 500 may be formed by a sol-gel coating process. A first sol solution including a first electrochromic material, a binder and a solvent may be coated on the layer of the first transparent electrode 300. A sol-gel reaction may occur in the coated first sol solution, and the first discoloration layer 500 may be formed.

The first sol solution may include the first discoloration material in a content of about 5 wt% to about 30 wt% in the form of particles. The first sol solution may include the binder in a content of about 5 wt% to about 30 wt%. The first sol solution may include the solvent in a content of about 60 wt% to about 90 wt%.

The first sol solution may additionally include a dispersant.

The solvent may be at least one selected from the group consisting of alcohols, ethers, ketones, esters and aromatic hydrocarbons. The solvent may be at least one selected from the group consisting of ethanol, propanol, butanol, hexanol, cyclohexanol, diacetone alcohol, ethylene glycol, diethylene glycol, glycerin, diethyl ether, ethylene glycol monomethyl ether, ethylene glycol monoethyl ether, ethylene glycol monobutyl ether, diethylene glycol monomethyl ether, diethylene glycol monoethyl ether, propylene glycol monomethyl ether, acetone, methyl ethyl ketone, acetylacetone, methyl isobutyl ketone, cyclohexanone, acetoacetic acid ester, methyl acetate, ethyl acetate, n-propyl acetate, i-butyl acetate, and the like.

As described above, the binder may be an inorganic binder.

Referring to FIG. 3, a second transparent electrode 400 is formed on a second substrate 200.

The second transparent electrode 400 may be formed by a vacuum deposition process. A metal oxide such as indium tin oxide may be deposited on the second substrate 200 by a sputtering process, etc., thereby forming the second transparent electrode 400.

The second transparent electrode 400 may be formed by a coating process. Metal nanowires may be coated together with a binder on the second substrate 200, thereby forming the second transparent electrode 400. A conductive polymer may be coated on the second substrate 200, thereby forming the second transparent electrode 400.

In addition, the second transparent electrode 400 may be formed by a patterning process. A metal layer may be formed on the second substrate 200 by a sputtering process, etc., and the metal layer may be patterned, so that a layer of the second transparent electrode 400 including a metal mesh may be formed on the second substrate 200.

Next, a second discoloration layer 600 is formed on the second transparent electrode 400. The second discoloration layer 600 may be formed by a sol-gel coating process. A second sol solution including a second electrochromic material, a binder and a solvent may be coated on the second transparent electrode 400. A sol-gel reaction may occur in the coated second sol solution, and the second discoloration layer 600 may be formed.

The second sol solution may include the second discoloration material in the form of particles in a content of about 5 wt% to about 30 wt%. The second sol solution may include the binder in a content of about 5 wt% to about 30 wt%. The second sol solution may include the solvent in a content of about 60 wt% to about 90 wt%.

The second sol solution may additionally include a dispersant.

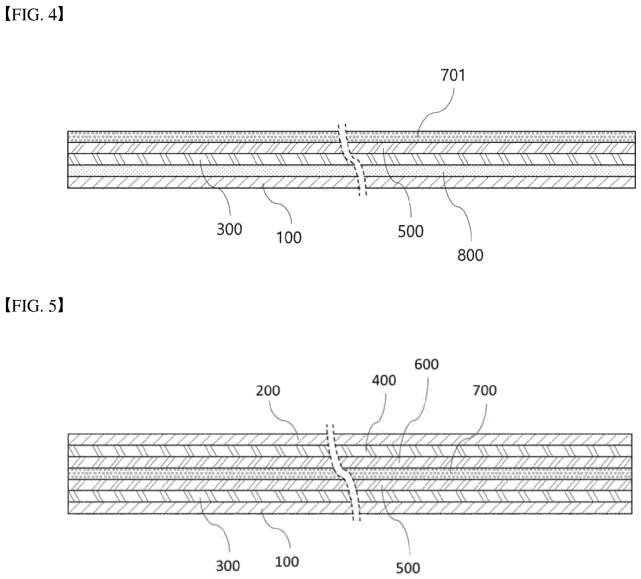

Referring to FIG. 4, an electrolyte composition layer 701 for forming an electrolyte layer 700 is formed on the first discoloration layer 500.

The electrolyte composition may include the solvent, the metal salt and the curable resin composition, as described above. In addition, the electrolyte composition may further include an additional additive such as the antioxidant.

The electrolyte composition is coated on the first discoloration layer 500. Accordingly, an electrolyte composition layer 701 is formed on the first discoloration layer 500.

Next, the electrolyte composition layer 701 may be cured or semi-cured.

The electrolyte composition layer 701 may be cured or semi-cured by heat. The electrolyte composition layer 701 may be cured or semi-cured at about 30°C to about 60°C for about 1 minute to about 10 minutes.

The electrolyte composition layer 701 may be cured or semi-cured by light. The electrolyte composition layer 701 may be cured or semi-cured by UV light having a wavelength band of 320 nm to 395 nm and an amount of 500 mJ/cm² to 1000 mJ/cm².

Referring to FIG. 5, the second substrate 200, the second transparent electrode 400 and the second discoloration layer 600 are laminated on the electrolyte composition layer. Here, the second discoloration layer 600 is brought into direct contact with the electrolyte composition layer.

Next, the electrolyte composition layer is cured by light, and a first laminate including the first substrate 100, the first transparent electrode 300 and the first discoloration layer 500 and a second laminate including the second substrate 200, the second transparent electrode 400 and the second discoloration layer 600 are laminated to each other. That is, the first laminate and the second laminate may be adhered to each other by the electrolyte layer 700.

In addition, the electrochromic element according to an embodiment may have light transmittance. Here, the light transmittance may mean light transmittance based on the state in which the electrochromic element does not undergo photochromism. In addition, the light transmittance may mean a total light transmittance.

The light transmittance of the electrochromic element may be about 70% to about 90%. The light transmittance of the electrochromic element may be about 75% to about 88%. The light transmittance of the electrochromic element may be about 78% to about 86%.

The electrochromic element according to an embodiment may have a haze of about 5% or less. The haze of the electrochromic element according to an embodiment may be about 0.1% to about 5%. The haze of the electrochromic element according to an embodiment may be about 0.1% to about 4%. The haze of the electrochromic element according to an embodiment may be about 0.1% to about 3%.

A twist test on the electrochromic element according to an embodiment may be performed.

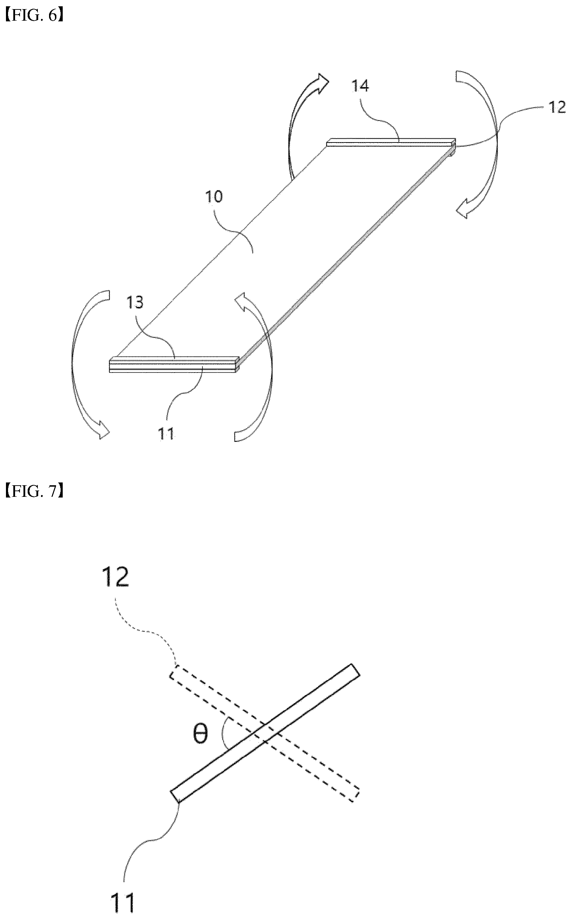

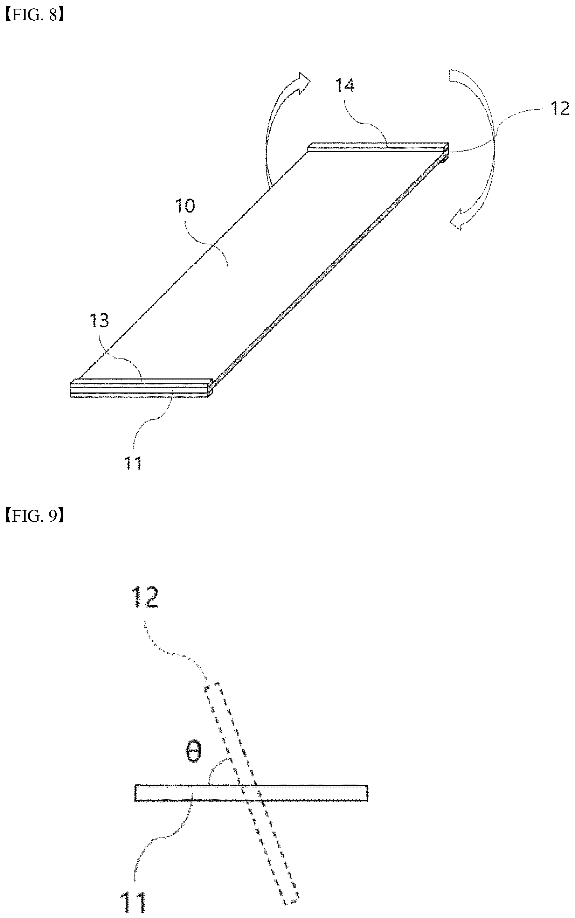

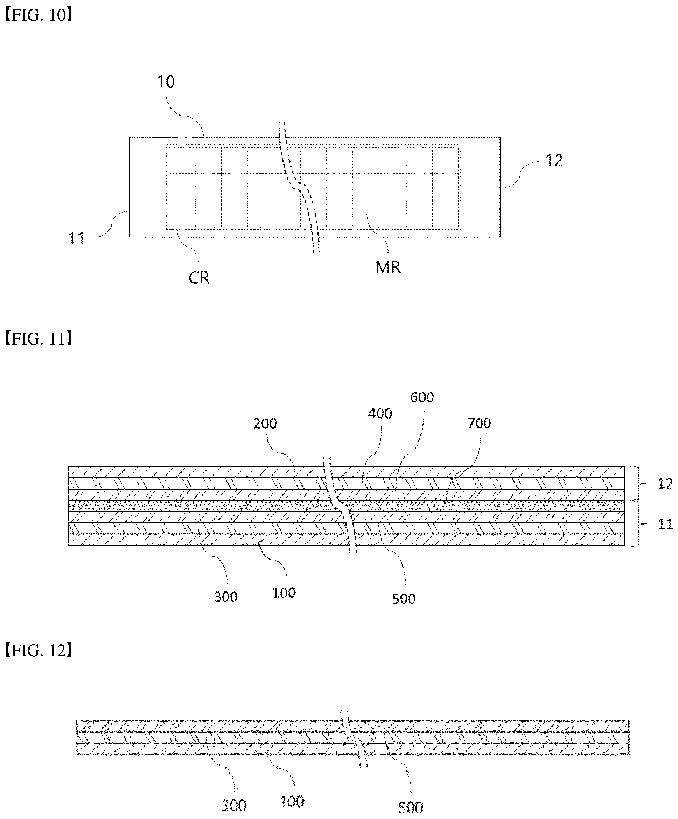

FIGS. 6 and 7 illustrate a process of double-twisting the electrochromic element according to an embodiment. FIGS. 8 and 9 illustrate a process of single-twisting the electrochromic element according to an embodiment. FIG. 10 illustrates the plan view of a sample formed by cutting a portion of the electrochromic element according to an embodiment.

First, a sample for measurement is manufactured by cutting the electrochromic element 10 according to an embodiment so as to proceed the twist test.

The sample may have a planar shape elongated in one direction. The sample may have a rectangular planar shape. The sample may have a rectangular shape with a length of about 20 cm and a width of about 4 cm. The sample may have a rectangular shape a length of about 30 cm and a width of about 6 cm. The sample may have a rectangular shape with a length of about 10 cm and a width of about 4 cm.

Next, one end 11 and the other end 12 of the sample may be gripped with grip parts 13 and 14. Portions of the sample gripped with the grip parts 13 and 14 may have a width of about 5 mm to about 10 mm. The length of portions of the sample gripped with the grip parts 13 and 14 may be substantially the same as the width of the sample.

Next, in a state where opposite ends of the sample are pulled with a certain amount of force, the sample may be twisted. The sample may be twisted in a state where the opposite ends of the sample are pulled with a force of about 1 N. The sample may be twisted in a state where the opposite ends of the sample are pulled with a force of about 2 N. The sample may be twisted in a state where the opposite ends of the sample are pulled with a force of about 5 N. The sample may be twisted in a state where the opposite ends of the sample are pulled with a force of about 10 N.

Referring to FIGS. 6 and 7, the sample 10 may be double-twisted to perform the twist test. That is, the sample 10 may be twisted while the end 11 and the other end 12 rotate in different directions. Here, the end 11 and the other end 12 may be twisted to intersect each other at a certain angle. The sample 10 may be twisted such that the end 11 and the other end 12 intersect each other at an angle (θ) of about 15°. The sample 10 may be twisted such that the end 11 and the other end 12 intersect each other at an angle (θ) of about 10°. The sample 10 may be twisted such that the end 11 and the other end 12 intersect each other at an angle (θ) of about 20°. The sample 10 may be twisted such that the end 11 and the other end 12 intersect each other at an angle (θ) of about 25°.

The speed at which the sample 10 twists may be about 1°/sec.

In addition, when the twist test is performed, the sample 10 may be twisted by rotating only the other end 12 in a state where the end 11 is fixed, as shown in FIGS. 8 and 9. Here, the sample 10 may be twisted such that the end 11 and the other end 12 intersect each other at a constant angle (θ).

The state where the sample 10 is twisted is maintained for about 1 minute, and the twisted sample 10 is released. The state where the sample 10 is twisted may be maintained for about 2 minutes, and the twisted sample may be released. The state where the sample is twisted may be maintained for about 3 minutes, and the twisted sample may be released.

More specifically, the twist test may be performed by the following method.
1) The electrochromic element according to an embodiment is cut to a size of 20 cm in length and 4 cm in width, thereby forming the sample.
2) Opposite ends of the sample are gripped.
3) The opposite ends of the gripped sample are pulled with a force of about 1 N.
4) In a state where the sample is pulled with a force of about 1 N, the sample is twisted such that the opposite ends of the sample are twisted at an angle of 15° to each other.
5) The twisted state of the sample is maintained for 1 minute, and then released, thereby completing a twist test.
   The twist test may be performed by the following additional method.
6) The released sample may be maintained for about 1 minute after being twisted again in the opposite direction at the same angle, and released.
7) In this manner, the twist test may be repeated about 10 times. In this manner, the twist test may be repeated about 20 times. In this manner, the twist test may be repeated about 30 times.

Next, a driving voltage is applied to the sample that has been subjected to the twist test, and the sample is colored. The driving voltage may be about 1 V to about 5 V. The driving voltage may be about 1.5 V. The driving voltage may be respectively applied to the first transparent electrode 300 and the second transparent electrode 400. In a state where a portion of the first transparent electrode 300 and a portion of the second transparent electrode 400 are opened, and the sample is electrically connected to the first transparent electrode 300 and the second transparent electrode 400, a driving voltage may be applied to the sample.

The driving voltage may be applied to the sample for about 30 seconds to about 3 minutes. The driving voltage may be applied to the sample for about 1 minute and 30 seconds, so that the sample may be colored.

The driving voltage may be applied to the sample such that the sample can be sufficiently colored.

Referring to FIG. 10, in the sample 10, a central region (CR) may be defined, and a measurement region (MR) by location in the central region (CR) may be defined. When the sample 10 has a size of 20 cm in length and 4 cm in width, the central region (CR) may be 16 cm in length and 3 cm in width. In addition, the measurement region (MR) may be defined as a square with a size of 1 cm x 1 cm.

Alternatively, the measurement region (MR) may be defined as a 1 cm x 1 cm square in the entire area of the sample 10.

After the twist test, the electrochromic element according to an embodiment may have a coloring transmittance deviation.

The coloring transmittance deviation may be measured by Measurement Method 1 below:

### [Measurement Method 1]

After performing the twist test, a coloring transmittance in each of the measurement regions (MR) is measured. Here, in the measurement regions (MR), an average coloring transmittance, a maximum coloring transmittance and a minimum coloring transmittance may be derived. Here, the coloring transmittance deviation is a value (%) obtained by dividing a difference between the maximum coloring transmittance and the minimum coloring transmittance by the average coloring transmittance.

After the twist test, the coloring transmittance deviation may be represented by Equation 1 below: Coloring transmittance deviation = (Maximum coloring transmittance - Minimum coloring transmittance)/Average coloring transmittance

The coloring transmittance deviation after the twist may be less than about 0.4. The coloring transmittance deviation after the twist may be less than about 0.35. The coloring transmittance deviation after the twist may be less than about 0.3. The coloring transmittance deviation after the twist may be less than about 0.25. The coloring transmittance deviation after the twist may be less than about 0.2. The coloring transmittance deviation after the twist may be less than about 0.15. The coloring transmittance deviation after the twist may be less than about 0.1. The coloring transmittance deviation after the twist may be less than about 0.07. The coloring transmittance deviation after the twist may be less than about 0.05. A minimum value of the coloring transmittance deviation after the twist may be about 0.001.

The average coloring transmittance may be about 5% to about 40%. The average coloring transmittance may be about 10% to about 30%. The average coloring transmittance may be about 10% to about 40%. The average coloring transmittance may be about 10% to about 30%. The average coloring transmittance may be about 10% to about 20%.

The maximum coloring transmittance may be about 8% to about 43%. The maximum coloring transmittance may be about 13% to about 33%. The maximum coloring transmittance may be about 13% to about 43%. The maximum coloring transmittance may be about 13% to about 33%. The maximum coloring transmittance may be about 13% to about 23%.

The minimum coloring transmittance may be about 3% to about 37%. The minimum coloring transmittance may be about 7% to about 27%. The minimum coloring transmittance may be about 7% to about 37%. The minimum coloring transmittance may be about 7% to about 27%. The minimum coloring transmittance may be about 7% to about 17%.

The difference between the maximum coloring transmittance and the average coloring transmittance may be less than about less than 5%. The difference between the maximum coloring transmittance and the average coloring transmittance may be less than about 3%. The difference between the maximum coloring transmittance and the average coloring transmittance may be less than about 2%.

The difference between the average coloring transmittance and the minimum coloring transmittance may be less than about less than 5%. The difference between the average coloring transmittance and the minimum coloring transmittance may be less than about 3%. The difference between the average coloring transmittance and the minimum coloring transmittance may be less than about 2%.

Since the electrochromic element according to an embodiment has a coloring transmittance deviation in the above range and has a maximum coloring transmittance, a minimum coloring transmittance, an average discoloring transmittance and a difference therebetween in the above ranges, it may have improved appearance.

After the twist test, the electrochromic element according to an embodiment may have a discoloring transmittance deviation.

After the twist test, the discoloring transmittance deviation may be measured by Measurement Method 2 below:

### [Measurement Method 2]

The colored sample is grounded or applied with an opposite driving voltage, thereby being discolored, and a discoloring transmittance in each of the measurement regions (MR) of the discolored sample is measured.

The opposite driving voltage may be about -5 V to about -1 V. The opposite driving voltage may be about -1.5 V. In addition, a time where the opposite driving voltage is applied may be about 20 seconds to about 5 minutes. The time where the opposite driving voltage is applied may be about 1 minute and 30 seconds. The opposite driving voltage may be applied to the sample such that the sample can be sufficiently discolored.

After the twist test, the discoloring transmittance deviation is a value obtained by dividing a difference between a maximum discoloring transmittance and minimum discoloring transmittance among discoloring transmittances of the measurement regions (MR) by an average discoloring transmittance.

After the twist test, the discoloring transmittance deviation may be represented by Equation 2 below: Discoloring transmittance deviation = (Maximum discoloring transmittance - Minimum discoloring transmittance)/Average discoloring transmittance

After the twist test, the discoloring transmittance deviation may be less than about 0.2. After the twist test, the discoloring transmittance deviation may be less than about 0.15. After the twist test, the discoloring transmittance deviation may be less than about 0.1. After the twist test, the discoloring transmittance deviation may be less than about 0.07. After the twist test, the discoloring transmittance deviation may be less than about 0.05. After the twist test, a minimum value of the discoloring transmittance deviation may be about 0.001.

The average discoloring transmittance may be about 40% to about 80%. The average discoloring transmittance may be about 45% to about 80%. The average discoloring transmittance may be about 50% to about 70%. The average discoloring transmittance may be about 50% to about 90%. The average discoloring transmittance may be about 55% to about 80%.

The maximum discoloring transmittance may be about 43% to about 83%. The maximum discoloring transmittance may be about 48% to about 83%. The maximum discoloring transmittance may be about 53% to about 73%. The maximum discoloring transmittance may be about 53% to about 93%. The maximum discoloring transmittance may be about 58% to about 83%.

The minimum discoloring transmittance may be about 37% to about 77%. The minimum discoloring transmittance may be about 42% to about 77%. The minimum discoloring transmittance may be about 47% to about 67%. The minimum discoloring transmittance may be about 47% to about 87%. The minimum discoloring transmittance may be about 52% to about 77%.

The difference between the maximum discoloring transmittance and the average discoloring transmittance may be less than about less than 5%. The difference between the maximum discoloring transmittance and the average discoloring transmittance may be less than about 3%. The difference between the maximum discoloring transmittance and the average discoloring transmittance may be less than about 2%.

The difference between the average discoloring transmittance and the minimum discoloring transmittance may be less than about less than 5%. The difference between the average discoloring transmittance and the minimum discoloring transmittance may be less than about 3%. The difference between the average discoloring transmittance and the minimum discoloring transmittance may be less than about 2%.

Since the electrochromic element according to an embodiment has a discoloring transmittance deviation in the above range, and has a maximum discoloring transmittance, a minimum discoloring transmittance, an average discoloring transmittance and a difference therebetween in the above ranges, it may have improved appearance.

After the twist test, the electrochromic element according to an embodiment may have a haze deviation.

After the twist test, the haze deviation may be measured by Measurement Method 3 below:

### [Measurement Method 3]

In the electrochromic element that has been subjected to the twist test, a haze in each of the measurement regions (MR) is measured.

After the twist test, the haze deviation is obtained by dividing a difference between a maximum haze and minimum haze among hazes of the measurement regions (MR) by an average haze.

After the twist, the haze deviation may be less than about 0.2. After the twist test, the haze deviation may be less than about 0.15. After the twist test, the haze deviation may be less than about 0.1. After the twist test, the haze deviation may be less than about 0.07. After the twist test, the haze deviation may be less than about 0.05. After the twist test, a minimum value of the haze deviation may be about 0.001.

After the twist test, the maximum haze may be less than about less than 5%. After the twist test, the maximum haze may be less than about 4%. After the twist test, the maximum haze may be less than about 3%.

After the twist test, the minimum haze may be less than about 4.5%. After the twist test, the minimum haze may be less than about 3.5%. After the twist test, the minimum haze may be less than about 2.5%.

After the twist test, the average haze may be less than about less than 5%. After the twist test, the average haze may be less than about 4%. After the twist test, the average haze may be less than about 3%.

After the twist test, the difference between the maximum haze and the average haze may be less than 1%. After the twist test, the difference between the maximum haze and the average haze may be less than less than 0.5%.

After the twist test, the difference between the average haze and the minimum haze may be less than 1%. After the twist test, the difference between the average haze and the minimum haze may be less than less than 0.5%.

Since the electrochromic element according to an embodiment has a haze deviation in the above range and has an average haze, a maximum haze, a minimum haze and a difference therebetween in the above ranges, the electrochromic element according to an embodiment may have improved appearance.

The electrochromic element according to an embodiment may have a driving range and a driving range deviation.

The driving range and the driving range deviation may be measured by Measurement Method 4 below:

### [Measurement Method 4]

In the electrochromic element that has been subjected to the twist test, the driving range in the measurement region (MR) is a difference between the discoloring transmittance and the coloring transmittance in the measurement region (MR), and the driving range deviation is obtained by dividing the difference between the maximum driving range and the minimum driving range in the measurement regions (MR) by an average driving range.

In the electrochromic element according to an embodiment, the driving range deviation after the twist test may be less than about 0.2. After the twist test, the driving range deviation may be less than about 0.15. After the twist test, the driving range deviation may be less than about 0.1. After the twist test, the driving range deviation may be less than about 0.07. After the twist test, the driving range deviation may be less than about 0.05. After the twist test, a minimum value of the driving range deviation may be about 0.001.

The average driving range may be about 30% to about 70%. The average driving range may be about 40% to about 60%. The average driving range may be about 42% to about 58%.

The maximum driving range may be about 35% to about 75%. The maximum driving range may be about 45% to about 65%. The maximum driving range may be about 45% to about 61%.

The minimum driving range may be about 25% to about 65%. The minimum driving range may be about 35% to about 55%. The minimum driving range may be about 39% to about 55%.

Since the electrochromic element according to an embodiment has a driving range deviation, an average driving range, a maximum driving range and a minimum driving range in the above ranges, so the light incident on the inside may be appropriately controlled according to the external environment.

After the twist test, the electrochromic element according to an embodiment has an appropriate coloring transmittance deviation, an appropriate discoloring transmittance deviation, an appropriate haze deviation, an appropriate driving range deviation, an appropriate maximum coloring transmittance, an appropriate minimum coloring transmittance, an appropriate average coloring transmittance, an appropriate maximum discoloring transmittance, an appropriate minimum discoloring transmittance and an appropriate average discoloring transmittance in the above ranges. That is, the electrochromic element according to an embodiment may be flexible, and may prevent performance degradation due to a certain degree of mechanical deformation, such as twist.

Since the first substrate 100 and the second substrate 200 have appropriate mechanical properties, they may be appropriately bent by external force. In addition, since the electrolyte layer 700 has appropriate mechanical properties, it may be easily bent by an external force while simultaneously efficiently maintaining a cell gap.

Accordingly, even if the electrochromic element according to an embodiment undergoes mechanical deformation such as twist due to an external force, the electrochromic element according to an embodiment may have uniform optical properties overall.

Accordingly, the electrochromic element according to an embodiment may have a uniform coloring transmittance, discoloring transmittance and haze overall when restored after an external mechanical deformation is applied thereto.

In particular, In the electrochromic element according to an embodiment, the electrolyte layer 700 may have a thickness of about 50 *µ*m or more. Accordingly, the electrolyte layer 700 of the electrochromic element according to an embodiment may have a buffering function even under external mechanical shock. At the same time, the electrochromic element according to an embodiment may have appropriate flexibility.

Accordingly, the electrochromic element according to an embodiment may minimize changes in appearance due to pressing and/or bending, etc., and may maintain discoloration performance. In addition, since the electrochromic element according to the embodiment has a fast restoration performance, it may have an improved appearance.

In addition, the electrolyte layer 700 may be formed by a thermal crosslinking process and a photocuring process of the curable resin. Accordingly, the electrolyte layer 700 may have a high crosslinking density.

Accordingly, the electrolyte layer 700 may be strongly bonded to the first discoloration layer 500 and the second discoloration layer 600. Accordingly, the electrochromic element according to the embodiment may have improved peel strength.

In addition, since the electrolyte layer 700 has an improved crosslinking density, the electrochromic element according to an embodiment may prevent leakage of the electrolyte included in the electrolyte layer 700. In addition, even if the electrochromic element according to an embodiment is twisted, the electrolyte layer 700 has appropriate bonding strength and elasticity, so a coloring transmittance deviation that may occur due to exfoliation, etc. may be reduced.

FIG. 11 is a sectional view illustrating one cross-section of an electrochromic element according to another embodiment. The description of the previous embodiment may be essentially combined with the description of the present embodiment, except for changed parts.

Referring to FIG. 11, the electrochromic element according to an embodiment includes a first laminate 11 and a second laminate 12. The second laminate 12 is disposed on the first laminate 11. The second laminate 12 is laminated on the first laminate 11.

The first laminate 11 includes a first substrate 100, a first transparent electrode 300, a first discoloration layer 500 and an electrolyte layer 700. The second laminate 12 includes a second substrate 200, a second transparent electrode 400 and a second discoloration layer 600.

Together with the second substrate 200, the first substrate 100 supports the first transparent electrode 300, the first discoloration layer 500, the second discoloration layer 600, the second transparent electrode 400 and the electrolyte layer 700.

In addition, the first transparent electrode 300, the first discoloration layer 500, the second discoloration layer 600, the second transparent electrode 400 and the electrolyte layer 700 are sandwiched between the first substrate 100 and the second substrate 200. Together with the second substrate 200, the first substrate 100 may protect the first transparent electrode 300, the first discoloration layer 500, the second discoloration layer 600, the second transparent electrode 400 and the electrolyte layer 700 from external physical impact and chemical impact.

The second substrate 200 faces the first substrate 100. The second substrate 200 is disposed on the first substrate 100. One end of the second substrate 200 may be disposed so as to be misaligned with one end of the first substrate 100. The other end of the second substrate 200 may be disposed so as to be misaligned with the other end of the first substrate 100.

Together with the first substrate 100, the second substrate 200 supports the first transparent electrode 300, the first discoloration layer 500, the second discoloration layer 600, the second transparent electrode 400 and the electrolyte layer 700.

In addition, the first transparent electrode 300, the first discoloration layer 500, the second discoloration layer 600, the second transparent electrode 400 and the electrolyte layer 700 are sandwiched between the second substrate 200 and the first substrate 100.

The first transparent electrode 300 is disposed on the first substrate 100. The first transparent electrode 300 may be deposited on the first substrate 100. In addition, a hard coating layer may be further included between the first transparent electrode 300 and the first substrate 100.

The second transparent electrode 400 is disposed under the second substrate 200. The second transparent electrode 400 may be deposited on the second substrate 200. In addition, a hard coating layer may be further included between the second transparent electrode 400 and the second substrate 200.

The first discoloration layer 500 is disposed on the first transparent electrode 300. The first discoloration layer 500 may be directly disposed on the upper surface of the first transparent electrode 300. The first discoloration layer 500 may be electrically directly connected to the first transparent electrode 300.

The first discoloration layer 500 is electrically connected to the first transparent electrode 300. The first discoloration layer 500 may directly access the first transparent electrode 300. In addition, the first discoloration layer 500 is electrically connected to the electrolyte layer 700. The first discoloration layer 500 may be electrically connected to the electrolyte layer 700.

The first discoloration layer 500 may be discolored when supplied with electrons. The first discoloration layer 500 may include a first electrochromic material whose color changes when supplied with electrons. The first electrochromic material may include at least one selected from the group consisting of tungsten oxide, niobium pentoxide, vanadium pentoxide, titanium oxide, molybdenum oxide, vilogen and poly(3,4-ethylenedioxythiophene (PEDOT).

The first discoloration layer 500 may include the first electrochromic material in the form of particles. The tungsten oxide, the niobium pentoxide, the vanadium pentoxide, the titanium oxide and the molybdenum oxide may be particles having a particle diameter of about 1nm to about 200 nm. That is, the diameter of the first electrochromic particles included in the first discoloration layer 500 may be about 2 nm to about 150 nm. The diameter of the first electrochromic particles included in the first discoloration layer 500 may be about 5 nm to about 100 nm. The diameter of the first electrochromic particles included in the first discoloration layer 500 may be about 10 nm to about 50 nm.

The first discoloration layer 500 may include the first electrochromic material in a content of about 70 wt% to about 98 wt% based on the total weight of based on the total weight of the first discoloration layer 500. The first discoloration layer 500 may include the first electrochromic material in a content of about 80 wt% to about 96 wt% based on the total weight of the first discoloration layer 500. The first discoloration layer 500 may include the first electrochromic material in a content of about 85 wt% to about 94 wt% based on the total weight of the first discoloration layer 500.

In addition, the first discoloration layer 500 may further include a binder. The binder may be an inorganic binder. The binder may include a silica gel. The binder may be formed by a silica sol containing tetramethoxysilane or methyltrimethoxysilane.

The first discoloration layer 500 may include the binder in a content of about 1 wt% to 20 wt% based on the total weight of the first discoloration layer 500. The first discoloration layer 500 may include the binder in a content of about 2 wt% to 15 wt% based on the total weight of the first discoloration layer 500. The first discoloration layer 500 may include the binder in a content of about 3 wt% to 10 wt% based on the total weight of the first discoloration layer 500.

The second discoloration layer 600 is disposed under the second transparent electrode 400. The second discoloration layer 600 may be directly disposed on the lower surface of the second transparent electrode 400. The second discoloration layer 600 may be electrically directly connected to the second transparent electrode 400.

The second discoloration layer 600 is electrically connected to the second transparent electrode 400. The second discoloration layer 600 may directly access the second transparent electrode 400. In addition, the second discoloration layer 600 is electrically connected to the electrolyte layer 700. The second discoloration layer 600 may be electrically connected to the electrolyte layer 700.

The second discoloration layer 600 may be discolored while losing electrons. The second discoloration layer 600 may include a second electrochromic material that is oxidized and discolored while losing electrons. The second discoloration layer 600 may include at least one selected from the group consisting of Prussian blue, nickel oxide and iridium oxide.

The second discoloration layer 600 may include the second electrochromic material in the form of particles. The Prussian blue, the nickel oxide and the iridium oxide may be particles having a particle diameter of about 1nm to about 200 nm. That is, a diameter of second electrochromic particles included in the second discoloration layer 600 may be about 2 nm to about 150 nm. The diameter of the second electrochromic particles may be about 5 nm to about 100 nm. The diameter of the second electrochromic particles may be about 10 nm to about 50 nm.

The second discoloration layer 600 may include the second electrochromic material in a content of about 70 wt% to about 98 wt% based on the total weight of the second discoloration layer 600. The second discoloration layer 600 may include the second electrochromic material in a content of about 80 wt% to about 96 wt% based on the total weight of the second discoloration layer 600. The second discoloration layer 600 may include the second electrochromic material in a content of about 85 wt% to about 94 wt% based on the total weight of the second discoloration layer 600.

In addition, the second discoloration layer 600 may further include the binder. The binder may be an inorganic binder. The binder may include a silica gel. The binder may be formed by a silica sol containing tetramethoxysilane or methyltrimethoxysilane.

The second discoloration layer 600 may include the binder in a content of about 1 wt% to 20 wt% based on the total weight of the second discoloration layer 600. The second discoloration layer 600 may include the binder in a content of about 2 wt% to 15 wt% based on the total weight of the second discoloration layer 600. The second discoloration layer 600 may include the binder in a content of about 3 wt% to 10 wt% based on the total weight of the first discoloration layer 500.

The electrolyte layer 700 is disposed on the first discoloration layer 500. In addition, the electrolyte layer 700 is disposed under the second discoloration layer 600. The electrolyte layer 700 is disposed between the first discoloration layer 500 and the second discoloration layer 600.

The electrolyte layer 700 may include cations involved in an electrochromic reaction. The cations may include metal ions. The metal ions may be at least one selected from the group consisting of lithium ions (Li⁺), sodium ions (Na⁺) and potassium ions (K⁺). The cations may be rubidium ions (Rb⁺) or cesium ions (Cs⁺).

The electrolyte layer 700 includes a solvent. The solvent may be at least one selected from the group consisting of acetamide, adiponitrile, sulfolane and polyethyleneglycol.

The electrolyte layer 700 may include a metal salt. The metal salt may be at least one selected from the group consisting of LiClO₄, LiBF₄, LiAsF₆, LiPF₆, LiCl, LiBr, LiI, LiB₁₀Cl₁₀, LiCF₃SO₃, LiCF₃CO₂, LiAsF₆, LiSbF₆, LiAlCl₄, CH₃SO₃Li, CF₃SO₃Li, (CF₃SO₂)_{2 N}Li and NaClO₄.

In addition, the electrolyte layer 700 may include a Cl or F element-containing compound as a metal salt. The electrolyte layer 700 may include one or more metal salts selected from among LiClO₄, LiBF₄, LiAsF₆, LiPF₆, LiCl, LiB₁₀Cl₁₀, LiCF₃SO₃, LiCF₃CO₂, LiAsF₆, LiSbF₆, LiAlCl₄, CF₃SO₃Li, (CF₃SO₂)_{2 N}Li and NaClO₄.

The electrolyte layer 700 may include a curable resin composition that can be cured by ultraviolet irradiation or heat. The curable resin composition may be at least one selected from the group consisting of an acrylate-based oligomer, a polyethylene glycol-based oligomer, a urethane-based oligomer, a polyester-based oligomer, polyethylene glycol dimethyl and polyethylene glycol diacrylate. In addition, the electrolyte layer 700 may include a photocuring initiator and/or a thermal curing initiator.

In more detail, the electrolyte layer 700 may include a curable resin composition. The curable resin composition may have photo-curability and/or thermosetting property.

The curable resin composition may include an acrylate copolymer.

The acrylate copolymer may be at least one selected from the group consisting of urethane acrylate and epoxy acrylate.

The molecular weight of the urethane acrylate may be about 3000 g/mol to about 50000 g/mol. The molecular weight of the urethane acrylate may be about 5000 g/mol to about 50000 g/mol.

The urethane acrylate may include an ether-based urethane acrylate.

The ether-based urethane acrylate may include a first polyol, a diisocyanate and an acrylate. The ether-based urethane acrylate may be formed by reacting with the polyether diol, the diisocyanate and the acrylate.

The ether-based urethane acrylate may include a first polyol having a molecular weight of about 100 g/mol to about 1000 g/mol; a first diisocyanate having a molecular weight of about 100 g/mol to about 1000 g/mol; and a first acrylate having a molecular weight of about 50 g/mol to about 500 g/mol.

The first polyol may have a molecular weight of about 100 g/mol to about 1000 g/mol. The first polyol may have a molecular weight of about 200 g/mol to about 1000 g/mol. The first polyol may have a molecular weight of about 200 g/mol to about 700 g/mol.

The first polyol may include polyether diol.

The first polyol may include poly(tetramethylene ether)diol.

The ether-based urethane acrylate may include the first polyol in a content of about 60 mol parts to about 100 mol parts based on 100 mol parts of the first diisocyanate. The ether-based urethane acrylate may include the first polyol in a content of about 65 mol parts to about 95 mol parts based on 100 mol parts of the first diisocyanate. The ether-based urethane acrylate may include the first polyol in a content of about 70 mol parts to about 90 mol parts based on 100 mol parts of the first diisocyanate.

The first diisocyanate may have a molecular weight of about 100 g/mol to about 1000 g/mol.

The first diisocyanate may be one or more selected from the group consisting of isophorone diisocyanate, toluene diisocyanate, hexamethylene diisocyanate and methylene diphenyl diisocyanate.

The first diisocyanate may be an isophorone diisocyanate.

The first diisocyanate may be included in a content of about 30 mol% to about 70 mol% in the ether-based urethane acrylate based on the total mole number of the ether-based urethane acrylate. The diisocyanate may be included in a content of about 40 mol% to about 60 mol% in the ether-based urethane acrylate based on the total mole number of the ether-based urethane acrylate.

The first acrylate may have a molecular weight of about 50 g/mol to about 500 g/mol.

The first acrylate may include a monoacrylate.

The first acrylate may be at least one selected from the group consisting of 2-hydroxyethyl acrylate and 2-hydroxypropyl acrylate methacrylate.

The ether-based urethane acrylate may include the first acrylate in a content of about 20 mol parts to about 40 mol parts based on 100 mol parts of the first diisocyanate. The ether-based urethane acrylate may include the first acrylate in a content of about 23 mol parts to about 37 mol parts based on 100 mol parts of the first diisocyanate. The ether-based urethane acrylate may include the first acrylate in a content of about 25 mol parts to about 35 mol parts based on 100 mol parts of the first diisocyanate.

The ether-based urethane acrylate may have a weight average molecular weight of about 1000 g/mol to about 100000 g/mol. The weight average molecular weight of the ether-based urethane acrylate may be about 2000 g/mol to about 70000 g/mol. The weight average molecular weight of the ether-based urethane acrylate may be about 5000 g/mol to about 50000 g/mol.

The ether-based urethane acrylate may include a second diisocyanate, a second polyol and a second acrylate.

The second diisocyanate may include an aliphatic diisocyanate.

The second diisocyanate may be at least one selected from the group consisting of hexamethylene diisocyanate, toluene diisocyanate, dicyclohexylmethane-4,4'-diisocyanate (H12MDI) and methylene diphenyl diisocyanate.

The second diisocyanate may be included in a content of about 20 mol% to about 60 mol% in the ether-based urethane acrylate based on 100 mol% of the ether-based urethane acrylate. The second diisocyanate may be included in a content of about 30 mol% to about 50 mol% in the ether-based urethane acrylate based on 100 mol% of the ether-based urethane acrylate.

The second polyol may include a polyester diol or a polycaprolactone diol.

A weight average molecular weight of the polycaprolactone diol may be about 100 g/mol to about 1000 g/mol. The weight average molecular weight of the polycaprolactone diol may be about 100 g/mol to about 800 g/mol. The weight average molecular weight of the polycaprolactone diol may be about 200 g/mol to about 800 g/mol.

The second acrylate may be at least one selected from the group consisting of 2-hydroxyethyl acrylate and 2-hydroxypropyl acrylate methacrylate.

The molecular weight of the ether-based urethane acrylate may be about 3000 g/mol to about 50000 g/mol. The molecular weight of the ether-based urethane acrylate may be about 5000 g/mol to about 50000 g/mol.

A viscosity of the urethane acrylate at about 25°C may be about 10000 cPs to about 100000 cPs. A viscosity of the urethane acrylate at about 60°C may be about 1000 cPs to about 8000 cPs.

The urethane acrylate is commercially available. The urethane acrylate may be at least one selected from the group consisting of, for example, Miramer PU210, Miramer PU256, Miramer PU2050, Miramer PU2100, Miramer PU2300C, Miramer PU2560, Miramer PU320, Miramer PU340, Miramer PU3000, Miramer PU3200, Miramer PU3450, Miramer PU5000, Miramer PU610, Miramer MU9500, Miramer MU9800, Miramer SC2154, Miramer SC2404 or Miramer SC2565 among MIWON Co.'s products.

The acrylate copolymer may include an epoxy acrylate.

The epoxy acrylate may be formed by reacting an epoxy compound and acrylate. A molar ratio of the epoxy compound to the acrylate may be about 1:1.5 to about 1:3.5.

The epoxy compound may be at least one selected from the group consisting of glycerol diglycidyl ether, a bisphenol A epoxy compound, a bisphenol F epoxy compound and a novolac epoxy compound.

The acrylate may be at least one selected from the group consisting of 2-carboxyethyl acrylate, 2-hydroxyethyl acrylate and acrylic acid.

The epoxy acrylate may have a weight average molecular weight of about 200 g/mol to about 3000 g/mol. The epoxy acrylate may have a weight average molecular weight of about 500 g/mol to about 2000 g/mol. The epoxy acrylate may have a weight average molecular weight of about 500 g/mol to about 2000 g/mol.

The epoxy acrylate may have a viscosity of about 100 cPs to about 5000 cPs at about 25°C. The epoxy acrylate may have a viscosity of about 100 cPs to about 5000 cPs at about 25°C. The epoxy acrylate may have a viscosity of about 10000 cPs to about 40000 cPs at about 25°C.

In addition, the epoxy acrylate may have a viscosity of about 3000 cPs to about 8000 cPs at about 40°C.

In addition, the epoxy acrylate may have a viscosity of about 200 cPs to about 6000 cPs at about 60°C.

The epoxy acrylate is commercially available. The epoxy acrylate may be at least one selected from the group consisting of, for example, Miramer PE210, Miramer PE250, Miramer SC6300, Miramer SC6400, Miramer PE110H, Miramer PE230, Miramer PE310, Miramer EA2235, Miramer EA2255, Miramer EA2259 or Miramer EA2280 among MIWON Co.'s products.

The curable resin composition may further include a multifunctional acrylate monomer.

The multifunctional acrylate monomer may include a difunctional acrylate or a trifunctional acrylate.

The multifunctional acrylate monomer may include two or more functional groups. The multifunctional acrylate monomer may be a monomer including two or more functional acrylate groups. The multifunctional acrylate monomer may be an aliphatic compound including three acrylates.

The multifunctional acrylate monomer may be at least one selected from the group consisting of trimethylolpropane triacrylate, trimethylolpropane (ethylene oxide)₃ triacrylate (trimethylolpropane (EO)₃ triacrylate), trimethylolpropane (ethylene oxide)₆ triacrylate (trimethylolpropane (EO)₆ triacrylate), trimethylolpropane (ethylene oxide)₉ triacrylate (trimethylolpropane (EO)₉ triacrylate), trimethylolpropane (ethylene oxide)₁₅ triacrylate (trimethylolpropane (EO)₁₅ triacrylate), glycerin (propylene oxide)₃ triacrylate (glycerine (PO)₃ triacrylate) and pantaerythritol triacrylate.

The multifunctional acrylate monomer may have a molecular weight of about 200 to about 800. The multifunctional acrylate monomer may have a molecular weight of about 200 to about 400.

The multifunctional acrylate monomer may have a viscosity of about 20 cps to about 300 cps at about 25°C.

The multifunctional acrylate monomer may be included in a content of about 5 wt% to about 30 wt% in the curable resin composition based on the total weight of the curable resin composition. The multifunctional acrylate monomer may be included in a content of about 10 wt% to about 25 wt% in the curable resin composition based on the total weight of the curable resin composition. The multifunctional acrylate monomer may be included in a content of about 13 wt% to about 23 wt% in the curable resin composition based on the total weight of the curable resin composition.

The curable resin composition may include a monofunctional acrylate monomer. The monofunctional acrylate monomer may be a monomer including one functional acrylate group. The monofunctional acrylate monomer may be an aromatic compound including one functional acrylate group.

The monofunctional acrylate monomer may be at least one selected from the group consisting of caprolactone acrylate, cyclic trimethylolpropane formal acrylate, phenoxy benzyl acrylate, 3,3,5-trimethyl cyclohexyl acrylate, isobornyl acrylate, o-phenylphenol EO acrylate, 4-tert-butylcyclohexyl acrylate, benzyl acrylate, biphenylmethyl acrylate, lauryl acrylate, isodecyl acrylate, phenol(ethylene oxide) acrylate (phenol(EO) acrylate), phenol(ethylene oxide)₂ arylate (phenol(EO)₂ acrylate), phenol(ethylene oxide)₄ acrylate (phenol(EO)₄ acrylate) and tetra hydrofurfuryl acrylate.

In addition, the molecular weight of the monofunctional acrylate monomer may be about 150 to about 800. The molecular weight of the monofunctional acrylate monomer may be about 200 to about 400.

In addition, a viscosity of the monofunctional acrylate monomer at about 25°C may be about 10 cps to about 60 cps.

The monofunctional acrylate monomer may be included in a content of about 5 wt% to about 20 wt% in the curable composition based on the weight of the curable composition. The monofunctional acrylate monomer may be included in a content of about 5 wt% to about 10 wt% in the curable composition based on the weight of the curable composition. The monofunctional acrylate monomer may be included in a content of about 10 wt% to about 15 wt% in the curable composition based on the total weight of the curable composition.

The curable composition may include acrylate including a thermosetting functional group. That is, the acrylate including a thermosetting functional group may have both thermosetting property and photo-curability.

The thermosetting acrylate may be at least one selected from the group consisting of urethane acrylate including a thermosetting functional group, epoxy acrylate including a thermosetting functional group, ester-based acrylate including a thermosetting functional group and ether-based acrylate including a thermosetting functional group.

The thermosetting acrylate may include a carboxyl group. The thermosetting acrylate may be at least one of compounds represented by Chemical Formulas 1 to 9 above.

The thermosetting acrylate may be included in a content of about 1 wt% to about 10 wt% in the curable resin composition based on the total weight of the curable resin composition. The thermosetting acrylate may be included in a content of about 0.5 wt% to about 5 wt% in the curable resin composition based on the total weight of the curable resin composition. The thermosetting acrylate may be included in a content of about 2 wt% to about 8 wt% in the curable resin composition based on the total weight of the curable resin composition.

Since the curable resin composition includes the thermosetting acrylate, a coating layer of the electrolyte composition that is coated with an electrolyte composition including the curable resin composition may be easily cured or semi-cured.

Accordingly, the coating layer of the electrolyte composition may be effectively protected against external physical and chemical impacts.

The curable resin composition may further include a photocurable initiator.

The photoinitiator may be one or more selected from the group consisting of benzophenone-based photoinitiators, thioxanthone-based photoinitiators, α-hydroxy ketone-based photoinitiators, ketone-based photoinitiators, phenyl glyoxylate-based photoinitiators and acryl phosphine oxide-based photoinitiators.

The photoinitiator may be included in a content of about 0.1 wt% to about 5 wt% in the curable resin composition based on the total weight of the curable resin composition.

The photocurable resin composition may include a first photoinitiator and second photoinitiator that operate in different wavelength bands.

Specifically, the curable resin composition may include a first photoinitiator operating in a wavelength band of 208 nm to 295 nm; and a second photoinitiator operating in a wavelength band of 320 nm to 395 nm.

An operating wavelength band of the first photoinitiator may be 208 nm to 275 nm, or 208 nm to 245 nm, and an operating wavelength band of the second photoinitiator may be 330 nm to 390 nm, or 340 nm to 385 nm.

As a specific example, the first photoinitiator may generate radicals by UV light having a wavelength band of 208 nm to 295 nm and an amount of 100 mJ/cm² to 200 mJ/cm². In addition, the second photoinitiator may be decomposed and generate radicals by UV light having a wavelength band of 320 nm to 395 nm and an amount of 500 mJ/cm² to 1000 mJ/cm².

The first photoinitiator may be, for example, a ketone-based photoinitiator, and may have one or more aromatic groups or alicyclic groups. A specific example of the first photoinitiator includes hydroxycyclohexylphenyl ketone.

The second photoinitiator may be, for example, a phosphine-based photoinitiator, and may have one or more aromatic groups. A specific example of the second photoinitiator includes 2,4,6-trimethylbenzoyldiphenylphosphine.

Since the curable resin composition includes the first photoinitiator and the second photoinitiator, a coating layer of the electrolyte composition which is coated with an electrolyte composition including the curable resin composition may be easily cured or semi-cured. That is, ultraviolet rays of a specific wavelength may be used, and the coating layer of the electrolyte composition may be easily cured or semi-cured.

Accordingly, the coating layer of the electrolyte composition may be effectively protected against external physical and chemical impacts.

The electrolyte layer 700 may further include an antioxidant.

The antioxidant may be at least one selected from the group consisting of phenol-based antioxidants, sulfur-based antioxidants, amine-based antioxidants, polyimide-based antioxidants and phosphorus-based antioxidants.

The antioxidant may be included in a content of 0.1 wt% to about 5 wt% in the electrolyte layer 700 based on the total weight of the electrolyte layer 700. The antioxidant may be included in a content of about 0.1 wt% to about 3 wt% in the electrolyte layer 700.

Since the electrolyte layer 700 includes the antioxidant, it may be easily protected from chemical shocks such as external oxygen. Accordingly, the electrolyte layer 700 may have a constant transmittance even if left for a long time.

The thickness of the electrolyte layer 700 may be about 10 *µ*m to about 200 *µ*m The thickness of the electrolyte layer 700 may be about 50 *µ*m to about 150 *µ*m.

The electrolyte layer 700 may have a transmittance in a range of 60% to 95 %. Specifically, the electrolyte layer 700 may have a transmittance of 60% to 95 % for visible light in a wavelength range of 380 nm to 780 nm, more specifically in a wavelength of 400 nm or a wavelength of 550 nm. The transmittance may be measured using a known haze meter (HM).

The electrochromic element according to an embodiment may be fabricated by the following method. FIGS. 12 to 15 are sectional views illustrating a process of fabricating the electrochromic element according to an embodiment.

Referring to FIG. 12, a first transparent electrode 300 is formed on a first substrate 100. The first transparent electrode 300 may be formed by a vacuum deposition process. A metal oxide such as indium tin oxide may be deposited on the first substrate 100 by a sputtering process, etc., thereby forming the first transparent electrode 300.

The first transparent electrode 300 may be formed by a coating process. Metal nanowires are coated together with a binder on the first substrate 100, thereby forming the first transparent electrode 300. The first substrate 100 may be coated with a conductive polymer, thereby forming the first transparent electrode 300.

In addition, the first transparent electrode 300 may be formed by a patterning process. A metal layer may be formed on the first substrate 100 by a sputtering process, etc., and the metal layer may be patterned, so that a layer of the first transparent electrode 300 including a metal mesh may be formed on the first substrate 100.

Next, a first discoloration layer 500 is formed on the layer of the first transparent electrode 300. The first discoloration layer 500 may be formed by a sol-gel coating process. A first sol solution including a first electrochromic material, a binder and a solvent may be coated on the layer of the first transparent electrode 300. A sol-gel reaction may occur in the coated first sol solution, and the first discoloration layer 500 may be formed.

The first sol solution may include the first discoloration material in a content of about 5 wt% to about 30 wt% in the form of particles. The first sol solution may include the binder in a content of about 5 wt% to about 30 wt%. The first sol solution may include the solvent in a content of about 60 wt% to about 90 wt%.

The first sol solution may additionally include a dispersant.

The solvent may be at least one selected from the group consisting of alcohols, ethers, ketones, esters and aromatic hydrocarbons. The solvent may be at least one selected from the group consisting of ethanol, propanol, butanol, hexanol, cyclohexanol, diacetone alcohol, ethylene glycol, diethylene glycol, glycerin, diethyl ether, ethylene glycol monomethyl ether, ethylene glycol monoethyl ether, ethylene glycol monobutyl ether, diethylene glycol monomethyl ether, diethylene glycol monoethyl ether, propylene glycol monomethyl ether, acetone, methyl ethyl ketone, acetylacetone, methyl isobutyl ketone, cyclohexanone, acetoacetic acid ester, methyl acetate, ethyl acetate, n-propyl acetate, i-butyl acetate, and the like.

As described above, the binder may be an inorganic binder.

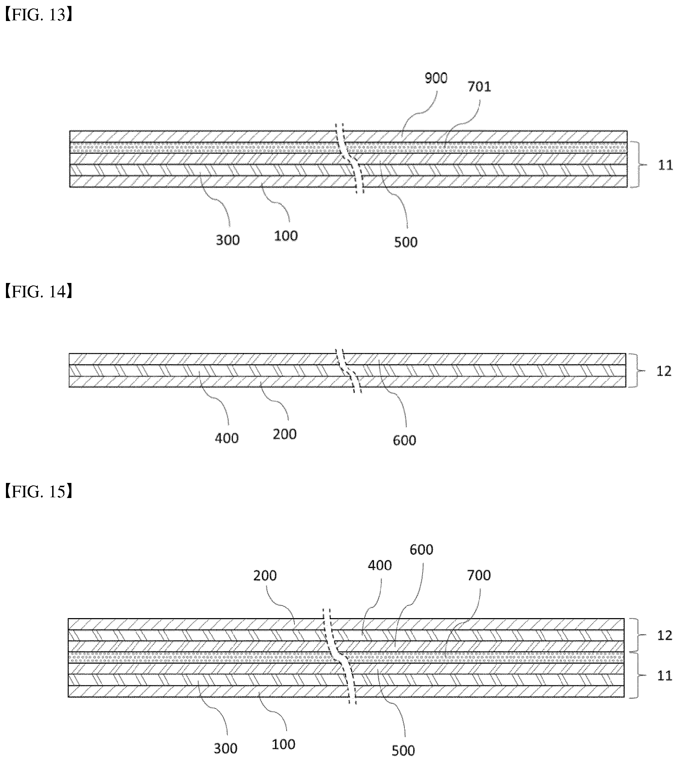

Referring to FIG. 13, an electrolyte composition for forming an electrolyte layer 700 is coated on the first discoloration layer 500. Accordingly, an electrolyte composition layer 701 is formed on the first discoloration layer 500.

As described above, the electrolyte composition may include the solvent, the metal salt and the curable resin composition. In addition, the electrolyte composition may further include an additional additive such as the antioxidant.

Next, a protective layer 900 is formed on the electrolyte composition layer 701. The protective layer 900 may be a polymer film including a release layer. The protective layer 900 may be a polyethylene terephthalate film including the release layer The protective layer 900 may protect the electrolyte composition layer 701. In addition, since the protective layer 900 includes the release layer, the protective layer 900 may be easily removed when the electrolyte composition layer 701 is laminated on another layer.

Next, the electrolyte composition layer 701 may be cured or semi-cured.

The electrolyte composition layer 701 may be cured or semi-cured by heat. The electrolyte composition layer 701 may be cured or semi-cured at about 30°C to about 60°C for about 1 minute to about 10 minutes.

The electrolyte composition layer 701 may be cured or semi-cured by light. The electrolyte composition layer 701 may be cured or semi-cured by UV light having a wavelength band of 320 nm to 395 nm and an amount of 500 mJ/cm² to 1000 mJ/cm².

Accordingly, a first laminate 11 including the first substrate 100, the first transparent electrode 300, the first discoloration layer 500 and the electrolyte composition layer 701 may be formed. The first laminate 11 may be a structure for fabricating the electrochromic element according to an embodiment. In addition, the protective layer 900 may be disposed on the first laminate 11. The protective layer 900 may cover the upper surface of the electrolyte composition layer 701.

Referring to FIG. 14, a second transparent electrode 400 is formed on a second substrate 200.

The second transparent electrode 400 may be formed by a vacuum deposition process. A conductive metal oxide such as indium tin oxide is deposited on the second substrate 200 by a sputtering process, etc., so that the second transparent electrode 400 may be formed.

The second transparent electrode 400 may be formed by a coating process. Metal nanowires may be coated together with a binder on the second substrate 200, thereby forming the second transparent electrode 400. A conductive polymer may be coated on the second substrate 200, thereby forming the second transparent electrode 400.

In addition, the second transparent electrode 400 may be formed by a patterning process. A metal layer may be formed on the second substrate 200 by a sputtering process, etc., and the metal layer may be patterned, so that a layer of the second transparent electrode 400 including a metal mesh may be formed on the second substrate 200.

Next, a second discoloration layer 600 is formed on the second transparent electrode 400. The second discoloration layer 600 may be formed by a sol-gel coating process. A second sol solution including a second electrochromic material, a binder and a solvent may be coated on the second transparent electrode 400. A sol-gel reaction may occur in the coated second sol solution, and the second discoloration layer 600 may be formed.

The second sol solution may include the second discoloration material in the form of particles in a content of about 5 wt% to about 30 wt%. The second sol solution may include the binder in a content of about 5 wt% to about 30 wt%. The second sol solution may include the solvent in a content of about 60 wt% to about 90 wt%.

The second sol solution may additionally include a dispersant.

Accordingly, a second laminate 12 including the second substrate 200, the second transparent electrode 400 and the second discoloration layer 600 is formed. The second laminate 12 may be a structure for forming the electrochromic element according to an embodiment. In addition, a release liner film for protecting the second discoloration layer 600 may be further disposed on the second discoloration layer 600.

Prior to the lamination process described below, the first laminate 11 may be left for about 60 days or more. For example, the first laminate 11 may be transported for about 60 days or more. The first laminate 11 may be transported for about 90 days or more. The first laminate 11 may be transported for about 120 days or more.

The first laminate 11 may be stored or transported for the above period in a rolled state. In addition, the first laminate 11 may be stored or transported at room temperature and a humidity state of about 30% to about 60% for the above period or longer.

In addition, prior to the lamination process described below, the second laminate 12 may be left for about 60 days or more. For example, the second laminate 12 may be transported for about 60 days or more. The second laminate 12 may be transported for about 90 days or more. The second laminate 12 may be transported for about 120 days or more.

The second laminate 12 may be stored or transported for the above period in a rolled state. In addition, the second laminate 12 may be stored or transported at room temperature and a humidity state of about 30% to about 60% for the above period.

Referring to FIG. 15, the second substrate 200, the second transparent electrode 400 and the second discoloration layer 600 are laminated on the electrolyte composition layer 701. Here, the second discoloration layer 600 is brought into direct contact with the electrolyte composition layer 701. In addition, the protective layer 900 is removed, and the second discoloration layer 600 is laminated on the electrolyte composition layer 701.

The lamination process may be performed after the above period has elapsed.

Next, the electrolyte composition layer 701 is cured by light, and a first laminate 11 including the first substrate 100, the first transparent electrode 300 and the first discoloration layer 500 and a second laminate 12 including the second substrate 200, the second transparent electrode 400 and the second discoloration layer 600 are laminated to each other. That is, the first laminate 11 and the second laminate 12 may be adhered to each other by the electrolyte layer 700.

In addition, the electrochromic element according to an embodiment may have light transmittance. Here, the light transmittance may mean light transmittance based on the state in which the electrochromic element does not undergo photochromism. In addition, the light transmittance may mean a total light transmittance.

The light transmittance of the electrochromic element may be about 70% to about 90%. The light transmittance of the electrochromic element may be about 75% to about 88%. The light transmittance of the electrochromic element may be about 78% to about 86%. The light transmittance of the electrochromic element may be about 65% to about 80%.

The electrochromic element according to an embodiment may have a haze of about 5% or less. The haze of the electrochromic element according to an embodiment may be about 0.1% to about 5%. The haze of the electrochromic element according to an embodiment may be about 0.1% to about 4%. The haze of the electrochromic element according to an embodiment may be about 0.1% to about 3%.

An electrolyte layer 700 according to an embodiment may have a storage modulus, a loss modulus and a complex viscosity.

The storage modulus, the loss modulus and the complex viscosity may be measured at about 25°C.

In addition, the storage modulus, the loss modulus and the complex viscosity may be measured using a rotational rheometer.

The storage modulus, the loss modulus and the complex viscosity may be measured under a frequency sweep condition. That is, the storage modulus, the loss modulus and the complex viscosity may be measured under a condition where a frequency is changed in a state where a strain is fixed.

For example, the storage modulus, the loss modulus and the complex viscosity may be measured while changing a frequency from about 0.1 Hz to about 1000 Hz at a strain of about 3%.

The storage modulus, the loss modulus and the complex viscosity may be measured measurement conditions below:
(1) Test equipment: Rotational rheometer (TA instrument Ltd., ARES-G2)
(2) Frequency: 0.1 Hz to 1000 Hz
(3) Temperature: 25°C
(4) Strain: 3%
(5) Minimum transducer torque in oscillation: 0.05 µN·m
(6) Minimum transducer torque in steady shear: 0.1 µN·m
(7) Maximum transducer torque: 20 mN·m
(8) Transducer torque resolution: 1 nN·m
(9) Strain resolution at drive motor: 0.04 µrad
(10) Measuring geometry: 25 mm plate
(11) Measuring gap: 0.627 mm

The electrolyte layer 700 may have a storage modulus of about 10 kPa to about 100 kPa under measurement conditions of about 3% strain and about 1 Hz frequency. The electrolyte layer 700 may have a storage modulus of about 20 kPa to about 80 kPa under measurement conditions of about 3% strain and about 1 Hz frequency. The electrolyte layer 700 may have a storage modulus of about 20 kPa to about 70 kPa under measurement conditions of about 3% strain and about 1 Hz frequency. The electrolyte layer 700 may have a storage modulus of about 30 kPa to about 60 kPa under measurement conditions of about 3% strain and about 1 Hz frequency.

The electrolyte layer 700 may have a storage modulus of about 20 kPa to about 120 kPa under measurement conditions of about 3% strain and about 10 Hz frequency. The electrolyte layer 700 may have a storage modulus of about 30 kPa to about 110 kPa under measurement conditions of about 3% strain and about 10 Hz frequency. The electrolyte layer 700 may have a storage modulus of about 30 kPa to about 100 kPa under measurement conditions of about 3% strain and about 10 Hz frequency. The electrolyte layer 700 may have a storage modulus of about 20 kPa to about 80 kPa under measurement conditions of about 3% strain and about 10 Hz frequency. The electrolyte layer 700 may have a storage modulus of about 30 kPa to about 70 kPa under measurement conditions of about 3% strain and about 10 Hz frequency.

The electrolyte layer 700 may have a loss modulus of about 10 kPa to about 30 kPa under the measurement conditions of about 3% strain and about 1 Hz frequency. The electrolyte layer 700 may have a loss modulus of about 5 kPa to about 40 kPa under the measurement conditions of about 3% strain and about 1 Hz frequency. The electrolyte layer 700 may have a loss modulus of about 12 kPa to about 27 kPa under the measurement conditions of about 3% strain and about 1 Hz frequency. The electrolyte layer 700 may have a loss modulus of about 15 kPa to about 25 kPa under the measurement conditions of about 3% strain and about 1 Hz frequency.

The electrolyte layer 700 may have a loss modulus of about 5 kPa to about 20 kPa under conditions of about 3% strain and about 0.1 Hz frequency. The electrolyte layer 700 may have a loss modulus of about 6 kPa to about 18 kPa under conditions of about 3% strain and about 0.1 Hz frequency. The electrolyte layer 700 may have a loss modulus of about 8 kPa to about 20 kPa under conditions of about 3% strain and about 0.1 Hz frequency. The electrolyte layer 700 may have a loss modulus of about 7 kPa to about 16 kPa under conditions of about 3% strain and about 0.1 Hz frequency.

The electrolyte layer 700 may have a loss modulus of about 1 kPa to about 10 kPa under conditions of about 3% strain and about 10 Hz frequency. The electrolyte layer 700 may have a loss modulus of about 1.5 kPa to about 8 kPa under conditions of about 3% strain and about 10 Hz frequency. The electrolyte layer 700 may have a loss modulus of about 2 kPa to about 6 kPa under conditions of about 3% strain and about 10 Hz frequency.

The electrolyte layer 700 may have a complex viscosity of about 3000 Pa·s to about 11000 Pa·s under the measurement conditions of about 3% strain and about 1 Hz frequency. The electrolyte layer 700 may have a complex viscosity of about 4000 Pa·s to about 11000 Pa·s under the measurement conditions of about 3% strain and about 1 Hz frequency. The electrolyte layer 700 may have a complex viscosity of about 5000 Pa·s to about 10000 Pa·s under the measurement conditions of about 3% strain and about 1 Hz frequency. The electrolyte layer 700 may have a complex viscosity of about 5000 Pa·s to about 9000 Pa·s under the measurement conditions of about 3% strain and about 1 Hz frequency.

The electrolyte layer 700 may have a complex viscosity of about 15000 Pa·s to about 40000 Pa·s under measurement conditions of about 3% strain and about 0.1 Hz frequency. The electrolyte layer 700 may have a complex viscosity of about 18000 Pa·s to about 40000 Pa·s under measurement conditions of about 3% strain and about 0.1 Hz frequency. The electrolyte layer 700 may have a complex viscosity of about 20000 Pa·s to about 35000 Pa·s under measurement conditions of about 3% strain and about 0.1 Hz frequency. The electrolyte layer 700 may have a complex viscosity of about 20000 Pa·s to about 30000 Pa·s under measurement conditions of about 3% strain and about 0.1 Hz frequency.

The electrolyte layer 700 may have a complex viscosity of about 300 Pa·s to 3000 Pa·s under the measurement conditions of about 3% strain and about 10 Hz frequency. The electrolyte layer 700 may have a complex viscosity of about 300 Pa·s to 2000 Pa·s under the measurement conditions of about 3% strain and about 10 Hz frequency. The electrolyte layer 700 may have a complex viscosity of about 300 Pa·s to 1500 Pa·s under the measurement conditions of about 3% strain and about 10 Hz frequency. The electrolyte layer 700 may have a complex viscosity of about 400 Pa·s to 2000 Pa·s under the measurement conditions of about 3% strain and about 10 Hz frequency.

Since the electrolyte layer 700 has an appropriate storage modulus, an appropriate loss modulus and an appropriate complex viscosity depending upon various frequencies as described above, it may have improved durability against external physical impact.

Accordingly, the electrochromic element according to an embodiment may have improved durability against physical shocks such as external vibrations during the manufacturing process or after being mounted on a window, etc.

The storage modulus, the loss modulus and the complex viscosity may be measured under strain sweep conditions. That is, the storage modulus, the loss modulus and the complex viscosity may be measured under a condition where a strain changes in a state where a frequency is fixed.

For example, the storage modulus, the loss modulus and the complex viscosity may be measured while changing a strain from about 0.1% to about 1000% at a frequency of about 1 Hz.

The storage modulus, the loss modulus and the complex viscosity may be measured measurement conditions below:
(1) Test equipment: Rotational rheometer (TA instrument Ltd., ARES-G2)
(2) Frequency: 1 Hz
(3) Temperature: 25°C
(4) Strain: 0.1% to 1000%
(5) Minimum transducer torque in oscillation: 0.05 µN·m
(6) Minimum transducer torque in steady shear: 0.1 µN·m
(7) Maximum transducer torque: 20 mN·m
(8) Transducer torque resolution: 1 nN·m
(9) Strain resolution at drive motor: 0.04 µrad
(10) Measuring geometry: 25 mm plate
(11) Measuring gap: 0.627 mm

The electrolyte layer 700 may have a storage modulus of about 7 kPa to about 80 kPa under measurement conditions of about 10% strain and about 1 Hz frequency. The electrolyte layer 700 may have a storage modulus of about 15 kPa to about 70 kPa under measurement conditions of about 10% strain and about 1 Hz frequency. The electrolyte layer 700 may have a storage modulus of about 20 kPa to about 60 kPa under measurement conditions of about 10% strain and about 1 Hz frequency. The electrolyte layer 700 may have a storage modulus of about 25 kPa to about 50 kPa under measurement conditions of about 10% strain and about 1 Hz frequency.

The electrolyte layer 700 may have a storage modulus of about 10 kPa to about 100 kPa under measurement conditions of about 1% strain and about 1 Hz frequency. The electrolyte layer 700 may have a storage modulus of about 15 kPa to about 90 kPa under measurement conditions of about 1% strain and about 1 Hz frequency. The electrolyte layer 700 may have a storage modulus of about 20 kPa to about 90 kPa under measurement conditions of about 1% strain and about 1 Hz frequency. The electrolyte layer 700 may have a storage modulus of about 30 kPa to about 70 kPa under measurement conditions of about 1% strain and about 1 Hz frequency.

The electrolyte layer 700 may have a storage modulus of about 5 kPa to about 60 kPa under measurement conditions of about 99% strain and about 1 Hz frequency. The electrolyte layer 700 may have a storage modulus of about 7 kPa to about 50 kPa under measurement conditions of about 99% strain and about 1 Hz frequency. The electrolyte layer 700 may have a storage modulus of about 9 kPa to about 40 kPa under measurement conditions of about 99% strain and about 1 Hz frequency. The electrolyte layer 700 may have a storage modulus of about 10 kPa to about 30 kPa under measurement conditions of about 99% strain and about 1 Hz frequency.

The electrolyte layer 700 may have a loss modulus of about 10 kPa to about 60 kPa under the measurement conditions of about 10% strain and about 1 Hz frequency. The electrolyte layer 700 may have a loss modulus of about 15 kPa to about 50 kPa under the measurement conditions of about 10% strain and about 1 Hz frequency. The electrolyte layer 700 may have a loss modulus of about 20 kPa to about 40 kPa under the measurement conditions of about 10% strain and about 1 Hz frequency.

The electrolyte layer 700 may have a loss modulus of about 5 kPa to about 40 kPa under the measurement conditions of about 1% strain and about 1 Hz frequency. The electrolyte layer 700 may have a loss modulus of about 7 kPa to about 30 kPa under the measurement conditions of about 1% strain and about 1 Hz frequency. The electrolyte layer 700 may have a loss modulus of about 10 kPa to about 25 kPa under the measurement conditions of about 1% strain and about 1 Hz frequency.

The electrolyte layer 700 may have a loss modulus of about 11 kPa to about 70 kPa under the measurement conditions of about 99% strain and about 1 Hz frequency. The electrolyte layer 700 may have a loss modulus of about 15 kPa to about 60 kPa under the measurement conditions of about 99% strain and about 1 Hz frequency. The electrolyte layer 700 may have a loss modulus of about 20 kPa to about 40 kPa under the measurement conditions of about 99% strain and about 1 Hz frequency.

The electrolyte layer 700 may have a complex viscosity of about 5000 Pa·s to about 20000 Pa·s under the measurement conditions of about 10% strain and about 1 Hz frequency. The electrolyte layer 700 may have a complex viscosity of about 3000 Pa·s to about 20000 Pa·s under the measurement conditions of about 10% strain and about 1 Hz frequency. The electrolyte layer 700 may have a complex viscosity of about 5000 Pa·s to about 15000 Pa·s under the measurement conditions of about 10% strain and about 1 Hz frequency.

The electrolyte layer 700 may have a complex viscosity of about 4000 Pa·s to about 18000 Pa·s under the measurement conditions of about 1% strain and about 1 Hz frequency. The electrolyte layer 700 may have a complex viscosity of about 3000 Pa·s to about 18000 Pa·s under the measurement conditions of about 1% strain and about 1 Hz frequency. The electrolyte layer 700 may have a complex viscosity of about 5000 Pa·s to about 12000 Pa·s under the measurement conditions of about 1% strain and about 1 Hz frequency.

The electrolyte layer 700 may have a complex viscosity of about 1000 Pa·s to about 10000 Pa·s under the measurement conditions of about 99% strain and about 1 Hz frequency. The electrolyte layer 700 may have a complex viscosity of about 2000 Pa·s to about 9000 Pa·s under the measurement conditions of about 99% strain and about 1 Hz frequency. The electrolyte layer 700 may have a complex viscosity of about 3000 Pa·s to about 8000 Pa·s under the measurement conditions of about 99% strain and about 1 Hz frequency.

Since the electrolyte layer 700 may maintain an appropriate storage modulus, an appropriate loss modulus and an appropriate complex viscosity depending upon various strains as described above, it may have improved durability against external physical impact.

Accordingly, the electrochromic element according to an embodiment may have improved durability against external physical impacts such as twisting and winding.

The electrolyte layer 700 may have a storage modulus per thickness as represented by Equation 1 below: Storage modulus per thickness = Storage modulus of electrolyte layer/Thickness of electrolyte layer

In the storage modulus per thickness, the storage modulus of the electrolyte layer 700 may be measured under the conditions of about 3% strain and about 1 Hz frequency.

The storage modulus per thickness may be about 0.2 kPa/*µ*m to about 3 kPa/*µ*m. The storage modulus per thickness may be about 0.3 kPa/*µ*m to about 2 kPa/*µ*m. The storage modulus per thickness may be about 0.4 kPa/*µ*m to about 1.5 kPa/*µ*m.

Since the electrolyte layer 700 has a storage modulus per thickness in the above range, the electrolyte layer 700 may maintain a cell gap while having an appropriate thickness. That is, since the electrolyte layer 700 has an appropriate storage modulus with increasing thickness, it may easily protect the first discoloration layer 500, the second discoloration layer 600, the first transparent electrode 300 and the second transparent electrode 400 from external physical impact.

The electrolyte layer 700 may have a loss modulus per thickness represented by Equation 2 below:

Loss modulus per thickness = Loss modulus of electrolyte layer/Thickness of electrolyte layer

In the loss modulus per thickness, the loss modulus of the electrolyte layer 700 may be measured under the conditions of about 3% strain and about 1 Hz frequency.

The loss modulus per thickness may be about 0.1 kPa/*µ*m to about 2 kPa/*µ*m. The loss modulus per thickness may be about 0.15 kPa/*µ*m to about 1.5 kPa/*µ*m. The loss modulus per thickness may be about 0.2 kPa/*µ*m to about 1 kPa/*µ*m.

Since the electrolyte layer 700 has a loss modulus per thickness in the range, the electrolyte layer 700 may maintain a cell gap while having an appropriate thickness. That is, since the electrolyte layer 700 has an appropriate loss modulus with increasing thickness, it may easily protect the first discoloration layer 500, the second discoloration layer 600, the first transparent electrode 300 and the second transparent electrode 400 from external physical impact.

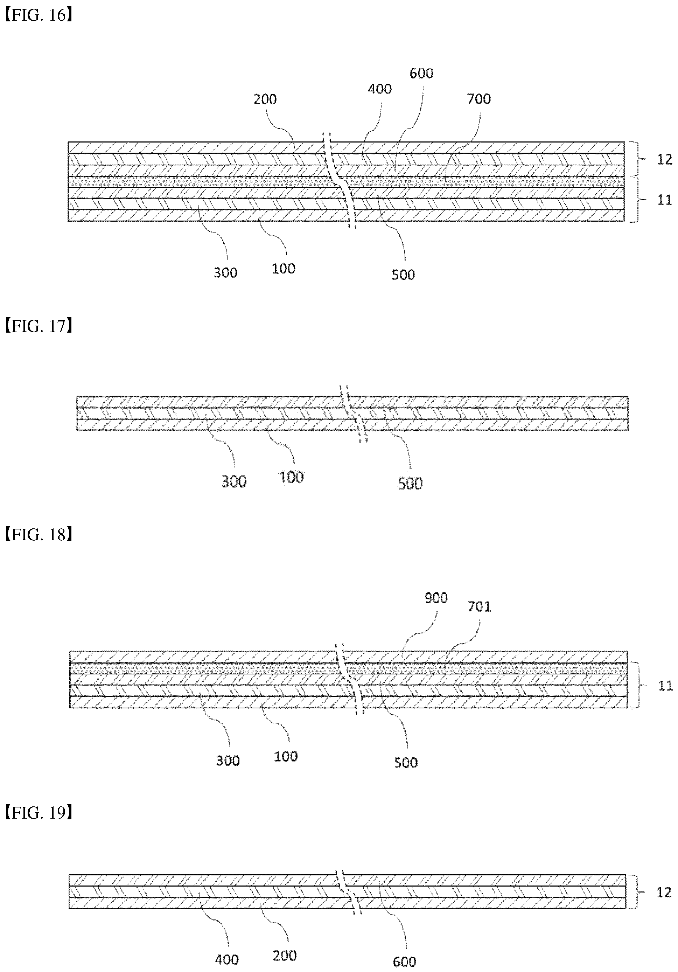

FIG. 16 is a sectional view illustrating one cross-section of an electrochromic element according to still another embodiment. The description of the previous embodiments may be essentially combined with the description of the present embodiment, except for changed parts.

Referring to FIG. 16, the electrochromic element according to an embodiment includes a first laminate 11 and a second laminate 12. The second laminate 12 is disposed on the first laminate 11. The second laminate 12 is laminated on the first laminate 11.

The first laminate 11 includes a first substrate 100, a first transparent electrode 300, a first discoloration layer 500 and an electrolyte layer 700. The second laminate 12 includes a second substrate 200, a second transparent electrode 400 and a second discoloration layer 600.

Together with the second substrate 200, the first substrate 100 supports the first transparent electrode 300, the first discoloration layer 500, the second discoloration layer 600, the second transparent electrode 400 and the electrolyte layer 700.

In addition, the first transparent electrode 300, the first discoloration layer 500, the second discoloration layer 600, the second transparent electrode 400 and the electrolyte layer 700 are sandwiched between the first substrate 100 and the second substrate 200.

The second substrate 200 faces the first substrate 100. The second substrate 200 is disposed on the first substrate 100. One end of the second substrate 200 may be disposed so as to be misaligned with one end of the first substrate 100. The other end of the second substrate 200 may be disposed so as to be misaligned with the other end of the first substrate 100.

Together with the first substrate 100, the second substrate 200 supports the first transparent electrode 300, the first discoloration layer 500, the second discoloration layer 600, the second transparent electrode 400 and the electrolyte layer 700.

In addition, the first transparent electrode 300, the first discoloration layer 500, the second discoloration layer 600, the second transparent electrode 400 and the electrolyte layer 700 are sandwiched between the second substrate 200 and the first substrate 100.

The first transparent electrode 300 is disposed on the first substrate 100. The first transparent electrode 300 may be deposited on the first substrate 100. In addition, a hard coating layer may be further included between the first transparent electrode 300 and the first substrate 100.

The second transparent electrode 400 is disposed under the second substrate 200. The second transparent electrode 400 may be deposited on the second substrate 200. In addition, a hard coating layer may be further included between the second transparent electrode 400 and the second substrate 200.

The first discoloration layer 500 is disposed on the first transparent electrode 300. The first discoloration layer 500 may be directly disposed on the upper surface of the first transparent electrode 300. The first discoloration layer 500 may be electrically directly connected to the first transparent electrode 300.

The first discoloration layer 500 is electrically connected to the first transparent electrode 300. The first discoloration layer 500 may directly access the first transparent electrode 300. In addition, the first discoloration layer 500 is electrically connected to the electrolyte layer 700. The first discoloration layer 500 may be electrically connected to the electrolyte layer 700.

The first discoloration layer 500 may be discolored when supplied with electrons. The first discoloration layer 500 may include a first electrochromic material whose color changes when supplied with electrons. The first electrochromic material may include at least one selected from the group consisting of tungsten oxide, niobium pentoxide, vanadium pentoxide, titanium oxide, molybdenum oxide, vilogen and poly(3,4-ethylenedioxythiophene (PEDOT).

The first discoloration layer 500 may include the first electrochromic material in the form of particles. The tungsten oxide, the niobium pentoxide, the vanadium pentoxide, the titanium oxide and the molybdenum oxide may be particles having a particle diameter of about 1nm to about 200 nm. That is, the diameter of the first electrochromic particles included in the first discoloration layer 500 may be about 2 nm to about 150 nm. The diameter of the first electrochromic particles included in the first discoloration layer 500 may be about 5 nm to about 100 nm. The diameter of the first electrochromic particles included in the first discoloration layer 500 may be about 10 nm to about 50 nm.

The first discoloration layer 500 may include the first electrochromic material in a content of about 70 wt% to about 98 wt% based on the total weight of based on the total weight of the first discoloration layer 500. The first discoloration layer 500 may include the first electrochromic material in a content of about 80 wt% to about 96 wt% based on the total weight of the first discoloration layer 500. The first discoloration layer 500 may include the first electrochromic material in a content of about 85 wt% to about 94 wt% based on the total weight of the first discoloration layer 500.

In addition, the first discoloration layer 500 may further include a binder. The binder may be an inorganic binder. The binder may include a silica gel. The binder may be formed by a silica sol containing tetramethoxysilane or methyltrimethoxysilane.

The first discoloration layer 500 may include the binder in a content of about 1 wt% to 20 wt% based on the total weight of the first discoloration layer 500. The first discoloration layer 500 may include the binder in a content of about 2 wt% to 15 wt% based on the total weight of the first discoloration layer 500. The first discoloration layer 500 may include the binder in a content of about 3 wt% to 10 wt% based on the total weight of the first discoloration layer 500.

The second discoloration layer 600 is disposed under the second transparent electrode 400. The second discoloration layer 600 may be directly disposed on the lower surface of the second transparent electrode 400. The second discoloration layer 600 may be electrically directly connected to the second transparent electrode 400.

The second discoloration layer 600 is electrically connected to the second transparent electrode 400. The second discoloration layer 600 may directly access the second transparent electrode 400. In addition, the second discoloration layer 600 is electrically connected to the electrolyte layer 700. The second discoloration layer 600 may be electrically connected to the electrolyte layer 700.

The second discoloration layer 600 may be discolored while losing electrons. The second discoloration layer 600 may include a second electrochromic material that is oxidized and discolored while losing electrons. The second discoloration layer 600 may include at least one selected from the group consisting of Prussian blue, nickel oxide and iridium oxide.

The second discoloration layer 600 may include the second electrochromic material in the form of particles. The Prussian blue, the nickel oxide and the iridium oxide may be particles having a particle diameter of about 1nm to about 200 nm. That is, a diameter of second electrochromic particles included in the second discoloration layer 600 may be about 2 nm to about 150 nm. The diameter of the second electrochromic particles may be about 5 nm to about 100 nm. The diameter of the second electrochromic particles may be about 10 nm to about 50 nm.

The second discoloration layer 600 may include the second electrochromic material in a content of about 70 wt% to about 98 wt% based on the total weight of the second discoloration layer 600. The second discoloration layer 600 may include the second electrochromic material in a content of about 80 wt% to about 96 wt% based on the total weight of the second discoloration layer 600. The second discoloration layer 600 may include the second electrochromic material in a content of about 85 wt% to about 94 wt% based on the total weight of the second discoloration layer 600.

In addition, the second discoloration layer 600 may further include the binder. The binder may be an inorganic binder. The binder may include a silica gel. The binder may be formed by a silica sol containing tetramethoxysilane or methyltrimethoxysilane.

The second discoloration layer 600 may include the binder in a content of about 1 wt% to 20 wt% based on the total weight of the second discoloration layer 600. The second discoloration layer 600 may include the binder in a content of about 2 wt% to 15 wt% based on the total weight of the second discoloration layer 600. The second discoloration layer 600 may include the binder in a content of about 3 wt% to 10 wt% based on the total weight of the first discoloration layer 500.

The electrolyte layer 700 is disposed on the first discoloration layer 500. In addition, the electrolyte layer 700 is disposed under the second discoloration layer 600. The electrolyte layer 700 is disposed between the first discoloration layer 500 and the second discoloration layer 600.

The electrolyte layer 700 may include cations involved in an electrochromic reaction. The cations may include metal ions. The metal ions may be at least one selected from the group consisting of lithium ions (Li⁺), sodium ions (Na⁺) and potassium ions (K⁺). The cations may be rubidium ions (Rb⁺) or cesium ions (Cs⁺).

The electrolyte layer 700 includes a solvent. The solvent may be at least one selected from the group consisting of acetamide, adiponitrile, sulfolane and polyethyleneglycol.

The electrolyte layer 700 may include a metal salt. The metal salt may be at least one selected from the group consisting of LiClO₄, LiBF₄, LiAsF₆, LiPF₆, LiCl, LiBr, LiI, LiB₁₀Cl₁₀, LiCF₃SO₃, LiCF₃CO₂, LiAsF₆, LiSbF₆, LiAlCl₄, CH₃SO₃Li, CF₃SO₃Li, (CF₃SO₂)_{2 N}Li and NaClO₄.

In addition, the electrolyte layer 700 may include a Cl or F element-containing compound as a metal salt. The electrolyte layer 700 may include one or more metal salts selected from among LiClO₄, LiBF₄, LiAsF₆, LiPF₆, LiCl, LiB₁₀Cl₁₀, LiCF₃SO₃, LiCF₃CO₂, LiAsF₆, LiSbF₆, LiAlCl₄, CF₃SO₃Li, (CF₃SO₂)_{2 N}Li and NaClO₄.

The electrolyte layer 700 may include a curable resin composition that can be cured by ultraviolet irradiation or heat. The curable resin composition may be at least one selected from the group consisting of an acrylate-based oligomer, a polyethylene glycol-based oligomer, a urethane-based oligomer, a polyester-based oligomer, polyethylene glycol dimethyl and polyethylene glycol diacrylate. In addition, the electrolyte layer 700 may include a photocuring initiator and/or a thermal curing initiator.

In more detail, the electrolyte layer 700 may include a curable resin composition. The curable resin composition may have photo-curability and/or thermosetting property.

The curable resin composition may include an acrylate copolymer.

The acrylate copolymer may be at least one selected from the group consisting of urethane acrylate and epoxy acrylate.

The molecular weight of the urethane acrylate may be about 3000 g/mol to about 50000 g/mol. The molecular weight of the urethane acrylate may be about 5000 g/mol to about 50000 g/mol.

The urethane acrylate may include an ether-based urethane acrylate.

The ether-based urethane acrylate may include a first polyol, a diisocyanate and an acrylate. The ether-based urethane acrylate may be formed by reacting with the polyether diol, the diisocyanate and the acrylate.

The ether-based urethane acrylate may include a first polyol having a molecular weight of about 100 g/mol to about 1000 g/mol; a first diisocyanate having a molecular weight of about 100 g/mol to about 1000 g/mol; and a first acrylate having a molecular weight of about 50 g/mol to about 500 g/mol.

The first polyol may have a molecular weight of about 100 g/mol to about 1000 g/mol. The first polyol may have a molecular weight of about 200 g/mol to about 1000 g/mol. The first polyol may have a molecular weight of about 200 g/mol to about 700 g/mol.

The first polyol may include polyether diol.

The first polyol may include poly(tetramethylene ether)diol.

The ether-based urethane acrylate may include the first polyol in a content of about 60 mol parts to about 100 mol parts based on 100 mol parts of the first diisocyanate. The ether-based urethane acrylate may include the first polyol in a content of about 65 mol parts to about 95 mol parts based on 100 mol parts of the first diisocyanate. The ether-based urethane acrylate may include the first polyol in a content of about 70 mol parts to about 90 mol parts based on 100 mol parts of the first diisocyanate.

The first diisocyanate may have a molecular weight of about 100 g/mol to about 1000 g/mol.

The first diisocyanate may be one or more selected from the group consisting of isophorone diisocyanate, toluene diisocyanate, hexamethylene diisocyanate and methylene diphenyl diisocyanate.

The first diisocyanate may be an isophorone diisocyanate.

The first diisocyanate may be included in a content of about 30 mol% to about 70 mol% in the ether-based urethane acrylate based on the total mole number of the ether-based urethane acrylate. The diisocyanate may be included in a content of about 40 mol% to about 60 mol% in the ether-based urethane acrylate based on the total mole number of the ether-based urethane acrylate.

The first acrylate may have a molecular weight of about 50 g/mol to about 500 g/mol.

The first acrylate may include a monoacrylate.

The first acrylate may be at least one selected from the group consisting of 2-hydroxyethyl acrylate and 2-hydroxypropyl acrylate methacrylate.

The ether-based urethane acrylate may include the first acrylate in a content of about 20 mol parts to about 40 mol parts based on 100 mol parts of the first diisocyanate. The ether-based urethane acrylate may include the first acrylate in a content of about 23 mol parts to about 37 mol parts based on 100 mol parts of the first diisocyanate. The ether-based urethane acrylate may include the first acrylate in a content of about 25 mol parts to about 35 mol parts based on 100 mol parts of the first diisocyanate.

The ether-based urethane acrylate may have a weight average molecular weight of about 1000 g/mol to about 100000 g/mol. The weight average molecular weight of the ether-based urethane acrylate may be about 2000 g/mol to about 70000 g/mol. The weight average molecular weight of the ether-based urethane acrylate may be about 5000 g/mol to about 50000 g/mol.

The ether-based urethane acrylate may include a second diisocyanate, a second polyol and a second acrylate.

The second diisocyanate may include an aliphatic diisocyanate.

The second diisocyanate may be at least one selected from the group consisting of hexamethylene diisocyanate, toluene diisocyanate, dicyclohexylmethane-4,4'-diisocyanate (H12MDI) and methylene diphenyl diisocyanate.

The second diisocyanate may be included in a content of about 20 mol% to about 60 mol% in the ether-based urethane acrylate based on 100 mol% of the ether-based urethane acrylate. The second diisocyanate may be included in a content of about 30 mol% to about 50 mol% in the ether-based urethane acrylate based on 100 mol% of the ether-based urethane acrylate.

The second polyol may include a polyester diol or a polycaprolactone diol.

A weight average molecular weight of the polycaprolactone diol may be about 100 g/mol to about 1000 g/mol. The weight average molecular weight of the polycaprolactone diol may be about 100 g/mol to about 800 g/mol. The weight average molecular weight of the polycaprolactone diol may be about 200 g/mol to about 800 g/mol.

The second acrylate may be at least one selected from the group consisting of 2-hydroxyethyl acrylate and 2-hydroxypropyl acrylate methacrylate.

The molecular weight of the ether-based urethane acrylate may be about 3000 g/mol to about 50000 g/mol. The molecular weight of the ether-based urethane acrylate may be about 5000 g/mol to about 50000 g/mol.

A viscosity of the urethane acrylate at about 25°C may be about 10000 cPs to about 100000 cPs. A viscosity of the urethane acrylate at about 60°C may be about 1000 cPs to about 8000 cPs.

The urethane acrylate is commercially available. The urethane acrylate may be at least one selected from the group consisting of, for example, Miramer PU210, Miramer PU256, Miramer PU2050, Miramer PU2100, Miramer PU2300C, Miramer PU2560, Miramer PU320, Miramer PU340, Miramer PU3000, Miramer PU3200, Miramer PU3450, Miramer PU5000, Miramer PU610, Miramer MU9500, Miramer MU9800, Miramer SC2154, Miramer SC2404 or Miramer SC2565 among MIWON Co.'s products.

The acrylate copolymer may include an epoxy acrylate.

The epoxy acrylate may be formed by reacting an epoxy compound and acrylate. A molar ratio of the epoxy compound to the acrylate may be about 1:1.5 to about 1:3.5.

The epoxy compound may be at least one selected from the group consisting of glycerol diglycidyl ether, a bisphenol A epoxy compound, a bisphenol F epoxy compound and a novolac epoxy compound.

The acrylate may be at least one selected from the group consisting of 2-carboxyethyl acrylate, 2-hydroxyethyl acrylate and acrylic acid.

The epoxy acrylate may have a weight average molecular weight of about 200 g/mol to about 3000 g/mol. The epoxy acrylate may have a weight average molecular weight of about 500 g/mol to about 2000 g/mol. The epoxy acrylate may have a weight average molecular weight of about 500 g/mol to about 2000 g/mol.

The epoxy acrylate may have a viscosity of about 100 cPs to about 5000 cPs at about 25°C. The epoxy acrylate may have a viscosity of about 100 cPs to about 5000 cPs at about 25°C. The epoxy acrylate may have a viscosity of about 10000 cPs to about 40000 cPs at about 25°C.

In addition, the epoxy acrylate may have a viscosity of about 3000 cPs to about 8000 cPs at about 40°C.

In addition, the epoxy acrylate may have a viscosity of about 200 cPs to about 6000 cPs at about 60°C.

The epoxy acrylate is commercially available. The epoxy acrylate may be at least one selected from the group consisting of, for example, Miramer PE210, Miramer PE250, Miramer SC6300, Miramer SC6400, Miramer PE110H, Miramer PE230, Miramer PE310, Miramer EA2235, Miramer EA2255, Miramer EA2259 or Miramer EA2280 among MIWON Co.'s products.

The curable resin composition may further include a multifunctional acrylate monomer.

The multifunctional acrylate monomer may include a difunctional acrylate or a trifunctional acrylate.

The multifunctional acrylate monomer may include two or more functional groups. The multifunctional acrylate monomer may be a monomer including two or more functional acrylate groups. The multifunctional acrylate monomer may be an aliphatic compound including three acrylates.

The multifunctional acrylate monomer may be at least one selected from the group consisting of trimethylolpropane triacrylate, trimethylolpropane (ethylene oxide)₃ triacrylate (trimethylolpropane (EO)₃ triacrylate), trimethylolpropane (ethylene oxide)₆ triacrylate (trimethylolpropane (EO)₆ triacrylate), trimethylolpropane (ethylene oxide) triacrylate (trimethylolpropane (EO)₉ triacrylate), trimethylolpropane (ethylene oxide)₁₅ triacrylate (trimethylolpropane (EO)₁₅ triacrylate), glycerin (propylene oxide)₃ triacrylate (glycerine (PO)₃ triacrylate) and pantaerythritol triacrylate.

The multifunctional acrylate monomer may have a molecular weight of about 200 to about 800. The multifunctional acrylate monomer may have a molecular weight of about 200 to about 400.

The multifunctional acrylate monomer may have a viscosity of about 20 cps to about 300 cps at about 25°C.

The multifunctional acrylate monomer may be included in a content of about 5 wt% to about 30 wt% in the curable resin composition based on the total weight of the curable resin composition. The multifunctional acrylate monomer may be included in a content of about 10 wt% to about 25 wt% in the curable resin composition based on the total weight of the curable resin composition. The multifunctional acrylate monomer may be included in a content of about 13 wt% to about 23 wt% in the curable resin composition based on the total weight of the curable resin composition.

The curable resin composition may include a monofunctional acrylate monomer. The monofunctional acrylate monomer may be a monomer including one functional acrylate group. The monofunctional acrylate monomer may be an aromatic compound including one functional acrylate group.

The monofunctional acrylate monomer may be at least one selected from the group consisting of caprolactone acrylate, cyclic trimethylolpropane formal acrylate, phenoxy benzyl acrylate, 3,3,5-trimethyl cyclohexyl acrylate, isobornyl acrylate, o-phenylphenol EO acrylate, 4-tert-butylcyclohexyl acrylate, benzyl acrylate, biphenylmethyl acrylate, lauryl acrylate, isodecyl acrylate, phenol(ethylene oxide) acrylate (phenol(EO) acrylate), phenol(ethylene oxide)₂ arylate (phenol(EO)₂ acrylate), phenol(ethylene oxide)₄ acrylate (phenol(EO)₄ acrylate) and tetra hydrofurfuryl acrylate.

In addition, the molecular weight of the monofunctional acrylate monomer may be about 150 to about 800. The molecular weight of the monofunctional acrylate monomer may be about 200 to about 400.

In addition, a viscosity of the monofunctional acrylate monomer at about 25°C may be about 10 cps to about 60 cps.

The monofunctional acrylate monomer may be included in a content of about 5 wt% to about 20 wt% in the curable composition based on the weight of the curable composition. The monofunctional acrylate monomer may be included in a content of about 5 wt% to about 10 wt% in the curable composition based on the weight of the curable composition. The monofunctional acrylate monomer may be included in a content of about 10 wt% to about 15 wt% in the curable composition based on the total weight of the curable composition.

The curable composition may include acrylate including a thermosetting functional group. That is, the acrylate including a thermosetting functional group may have both thermosetting property and photo-curability.

The thermosetting acrylate may be at least one selected from the group consisting of urethane acrylate including a thermosetting functional group, epoxy acrylate including a thermosetting functional group, ester-based acrylate including a thermosetting functional group and ether-based acrylate including a thermosetting functional group.

The thermosetting acrylate may include a carboxyl group. The thermosetting acrylate may be at least one of compounds represented by Chemical Formulas 1 to 9 above.

The thermosetting acrylate may be included in a content of about 1 wt% to about 10 wt% in the curable resin composition based on the total weight of the curable resin composition. The thermosetting acrylate may be included in a content of about 0.5 wt% to about 5 wt% in the curable resin composition based on the total weight of the curable resin composition. The thermosetting acrylate may be included in a content of about 2 wt% to about 8 wt% in the curable resin composition based on the total weight of the curable resin composition.

Since the curable resin composition includes the thermosetting acrylate, a coating layer of the electrolyte composition that is coated with an electrolyte composition including the curable resin composition may be easily cured or semi-cured.

Accordingly, the coating layer of the electrolyte composition may be effectively protected against external physical and chemical impacts.

The curable resin composition may further include a photocurable initiator.

The photoinitiator may be one or more selected from the group consisting of benzophenone-based photoinitiators, thioxanthone-based photoinitiators, α-hydroxy ketone-based photoinitiators, ketone-based photoinitiators, phenyl glyoxylate-based photoinitiators and acryl phosphine oxide-based photoinitiators.

The photoinitiator may be included in a content of about 0.1 wt% to about 5 wt% in the curable resin composition based on the total weight of the curable resin composition.

The photocurable resin composition may include a first photoinitiator and second photoinitiator that operate in different wavelength bands.

Specifically, the curable resin composition may include a first photoinitiator operating in a wavelength band of 208 nm to 295 nm; and a second photoinitiator operating in a wavelength band of 320 nm to 395 nm.

An operating wavelength band of the first photoinitiator may be 208 nm to 275 nm, or 208 nm to 245 nm, and an operating wavelength band of the second photoinitiator may be 330 nm to 390 nm, or 340 nm to 385 nm.

As a specific example, the first photoinitiator may generate radicals by UV light having a wavelength band of 208 nm to 295 nm and an amount of 100 mJ/cm² to 200 mJ/cm². In addition, the second photoinitiator may be decomposed and generate radicals by UV light having a wavelength band of 320 nm to 395 nm and an amount of 500 mJ/cm² to 1000 mJ/cm².

The first photoinitiator may be, for example, a ketone-based photoinitiator, and may have one or more aromatic groups or alicyclic groups. A specific example of the first photoinitiator includes hydroxycyclohexylphenyl ketone.

The second photoinitiator may be, for example, a phosphine-based photoinitiator, and may have one or more aromatic groups. A specific example of the second photoinitiator includes 2,4,6-trimethylbenzoyldiphenylphosphine.

Since the curable resin composition includes the first photoinitiator and the second photoinitiator, a coating layer of the electrolyte composition which is coated with an electrolyte composition including the curable resin composition may be easily cured or semi-cured. That is, ultraviolet rays of a specific wavelength may be used, and the coating layer of the electrolyte composition may be easily cured or semi-cured.

Accordingly, the coating layer of the electrolyte composition may be effectively protected against external physical and chemical impacts.

The electrolyte layer 700 may further include an antioxidant.

The antioxidant may be at least one selected from the group consisting of phenol-based antioxidants, sulfur-based antioxidants, amine-based antioxidants, polyimide-based antioxidants and phosphorus-based antioxidants.

The antioxidant may be included in a content of 0.1 wt% to about 5 wt% in the electrolyte layer 700 based on the total weight of the electrolyte layer 700. The antioxidant may be included in a content of about 0.1 wt% to about 3 wt% in the electrolyte layer 700.

Since the electrolyte layer 700 includes the antioxidant, it may be easily protected from chemical shocks such as external oxygen. Accordingly, the electrolyte layer 700 may have a constant transmittance even if left for a long time.

The thickness of the electrolyte layer 700 may be about 10 *µ*m to about 200 *µ*m The thickness of the electrolyte layer 700 may be about 50 *µ*m to about 150 *µ*m.

The electrolyte layer 700 may have a transmittance in a range of 60% to 95 %. Specifically, the electrolyte layer 700 may have a transmittance of 60% to 95 % for visible light in a wavelength range of 380 nm to 780 nm, more specifically in a wavelength of 400 nm or a wavelength of 550 nm. The transmittance may be measured using a known haze meter (HM).

The electrochromic element according to an embodiment may be fabricated by the following method. FIGS. 17 to 20 are sectional views illustrating a process of fabricating the electrochromic element according to an embodiment.

Referring to FIG. 17, a first transparent electrode 300 is formed on a first substrate 100. The first transparent electrode 300 may be formed by a vacuum deposition process. A metal oxide such as indium tin oxide may be deposited on the first substrate 100 by a sputtering process, etc., thereby forming the first transparent electrode 300.

The first transparent electrode 300 may be formed by a coating process. Metal nanowires are coated together with a binder on the first substrate 100, thereby forming the first transparent electrode 300. The first substrate 100 may be coated with a conductive polymer, thereby forming the first transparent electrode 300.

In addition, the first transparent electrode 300 may be formed by a patterning process. A metal layer may be formed on the first substrate 100 by a sputtering process, etc., and the metal layer may be patterned, so that a layer of the first transparent electrode 300 including a metal mesh may be formed on the first substrate 100.

Next, a first discoloration layer 500 is formed on the layer of the first transparent electrode 300. The first discoloration layer 500 may be formed by a sol-gel coating process. A first sol solution including a first electrochromic material, a binder and a solvent may be coated on the layer of the first transparent electrode 300. A sol-gel reaction may occur in the coated first sol solution, and the first discoloration layer 500 may be formed.

The first sol solution may include the first discoloration material in a content of about 5 wt% to about 30 wt% in the form of particles. The first sol solution may include the binder in a content of about 5 wt% to about 30 wt%. The first sol solution may include the solvent in a content of about 60 wt% to about 90 wt%.

The first sol solution may additionally include a dispersant.

The solvent may be at least one selected from the group consisting of alcohols, ethers, ketones, esters and aromatic hydrocarbons. The solvent may be at least one selected from the group consisting of ethanol, propanol, butanol, hexanol, cyclohexanol, diacetone alcohol, ethylene glycol, diethylene glycol, glycerin, diethyl ether, ethylene glycol monomethyl ether, ethylene glycol monoethyl ether, ethylene glycol monobutyl ether, diethylene glycol monomethyl ether, diethylene glycol monoethyl ether, propylene glycol monomethyl ether, acetone, methyl ethyl ketone, acetylacetone, methyl isobutyl ketone, cyclohexanone, acetoacetic acid ester, methyl acetate, ethyl acetate, n-propyl acetate, i-butyl acetate, and the like.

As described above, the binder may be an inorganic binder.

Referring to FIG. 18, an electrolyte composition for forming an electrolyte layer 700 is coated on the first discoloration layer 500. Accordingly, an electrolyte composition layer 701 is formed on the first discoloration layer 500.

As described above, the electrolyte composition may include the solvent, the metal salt and the curable resin composition. In addition, the electrolyte composition may further include an additional additive such as the antioxidant.

Next, a protective layer 900 is formed on the electrolyte composition layer 701. The protective layer 900 may be a polymer film including a release layer. The protective layer 900 may be a polyethylene terephthalate film including the release layer The protective layer 900 may protect the electrolyte composition layer 701. In addition, since the protective layer 900 includes the release layer, the protective layer 900 may be easily removed when the electrolyte composition layer 701 is laminated on another layer.

Next, the electrolyte composition layer 701 may be cured or semi-cured.

The electrolyte composition layer 701 may be cured or semi-cured by heat. The electrolyte composition layer 701 may be cured or semi-cured at about 30°C to about 60°C for about 1 minute to about 10 minutes.

The electrolyte composition layer 701 may be cured or semi-cured by light. The electrolyte composition layer 701 may be cured or semi-cured by UV light having a wavelength band of 320 nm to 395 nm and an amount of 500 mJ/cm² to 1000 mJ/cm².

Accordingly, a first laminate 11 including the first substrate 100, the first transparent electrode 300, the first discoloration layer 500 and the electrolyte composition layer 701 may be formed. The first laminate 11 may be a structure for fabricating the electrochromic element according to an embodiment. In addition, the protective layer 900 may be disposed on the first laminate 11. The protective layer 900 may cover the upper surface of the electrolyte composition layer 701.

Referring to FIG. 19, a second transparent electrode 400 is formed on a second substrate 200.

The second transparent electrode 400 may be formed by a vacuum deposition process. A conductive metal oxide such as indium tin oxide is deposited on the second substrate 200 by a sputtering process, etc., so that the second transparent electrode 400 may be formed.

The second transparent electrode 400 may be formed by a coating process. Metal nanowires may be coated together with a binder on the second substrate 200, thereby forming the second transparent electrode 400. A conductive polymer may be coated on the second substrate 200, thereby forming the second transparent electrode 400.

In addition, the second transparent electrode 400 may be formed by a patterning process. A metal layer may be formed on the second substrate 200 by a sputtering process, etc., and the metal layer may be patterned, so that a layer of the second transparent electrode 400 including a metal mesh may be formed on the second substrate 200.

Next, a second discoloration layer 600 is formed on the second transparent electrode 400. The second discoloration layer 600 may be formed by a sol-gel coating process. A second sol solution including a second electrochromic material, a binder and a solvent may be coated on the second transparent electrode 400. A sol-gel reaction may occur in the coated second sol solution, and the second discoloration layer 600 may be formed.

The second sol solution may include the second discoloration material in the form of particles in a content of about 5 wt% to about 30 wt%. The second sol solution may include the binder in a content of about 5 wt% to about 30 wt%. The second sol solution may include the solvent in a content of about 60 wt% to about 90 wt%.

The second sol solution may additionally include a dispersant.

Accordingly, a second laminate 12 including the second substrate 200, the second transparent electrode 400 and the second discoloration layer 600 is formed. The second laminate 12 may be a structure for forming the electrochromic element according to an embodiment. In addition, a release liner film for protecting the second discoloration layer 600 may be further disposed on the second discoloration layer 600.

Prior to the lamination process described below, the first laminate 11 may be left for about 60 days or more. For example, the first laminate 11 may be transported for about 60 days or more. The first laminate 11 may be transported for about 90 days or more. The first laminate 11 may be transported for about 120 days or more.

The first laminate 11 may be stored or transported for the above period in a rolled state. In addition, the first laminate 11 may be stored or transported at room temperature and a humidity state of about 30% to about 60% for the above period or longer.

In addition, prior to the lamination process described below, the second laminate 12 may be left for about 60 days or more. For example, the second laminate 12 may be transported for about 60 days or more. The second laminate 12 may be transported for about 90 days or more. The second laminate 12 may be transported for about 120 days or more.

The second laminate 12 may be stored or transported for the above period in a rolled state. In addition, the second laminate 12 may be stored or transported at room temperature and a humidity state of about 30% to about 60% for the above period.

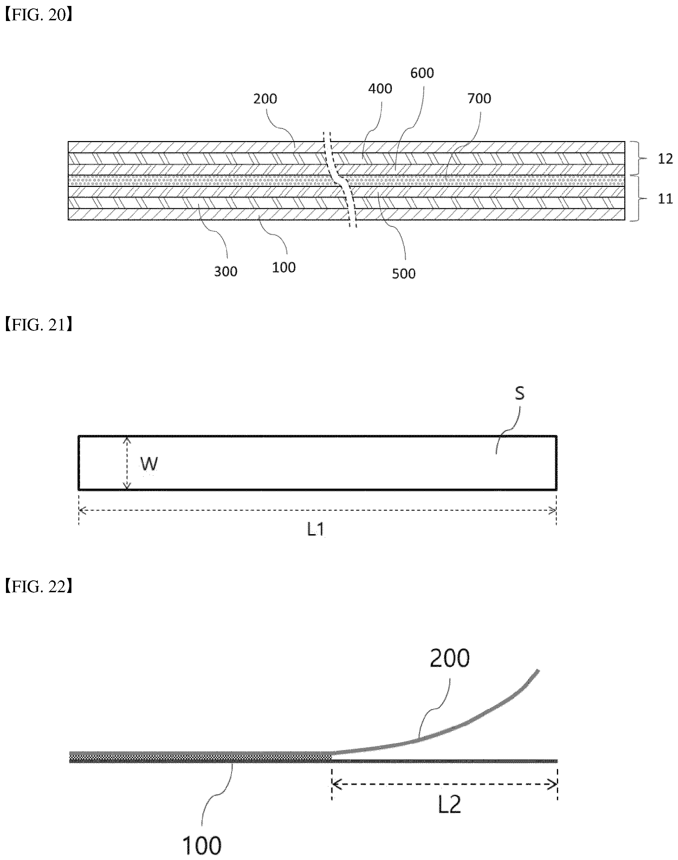

Referring to FIG. 20, the second substrate 200, the second transparent electrode 400 and the second discoloration layer 600 are laminated on the electrolyte composition layer 701. Here, the second discoloration layer 600 is brought into direct contact with the electrolyte composition layer 701. In addition, the protective layer 900 is removed, and the second discoloration layer 600 is laminated on the electrolyte composition layer 701.

The lamination process may be performed after the above period has elapsed.

Next, the electrolyte composition layer 701 is cured by light, and a first laminate 11 including the first substrate 100, the first transparent electrode 300 and the first discoloration layer 500 and a second laminate 12 including the second substrate 200, the second transparent electrode 400 and the second discoloration layer 600 are laminated to each other. That is, the first laminate 11 and the second laminate 12 may be adhered to each other by the electrolyte layer 700.

In addition, the electrochromic element according to an embodiment may have light transmittance. Here, the light transmittance may mean light transmittance based on the state in which the electrochromic element does not undergo photochromism. In addition, the light transmittance may mean a total light transmittance.

The light transmittance of the electrochromic element may be about 70% to about 90%. The light transmittance of the electrochromic element may be about 75% to about 88%. The light transmittance of the electrochromic element may be about 78% to about 86%. The light transmittance of the electrochromic element may be about 65% to about 80%.

The electrochromic element according to an embodiment may have a haze of about 5% or less. The haze of the electrochromic element according to an embodiment may be about 0.1% to about 5%. The haze of the electrochromic element according to an embodiment may be about 0.1% to about 4%. The haze of the electrochromic element according to an embodiment may be about 0.1% to about 3%.

An electrolyte layer 700 according to an embodiment may have a storage modulus, a loss modulus and a complex viscosity.

The storage modulus, the loss modulus and the complex viscosity may be measured at about 25°C.

In addition, the storage modulus, the loss modulus and the complex viscosity may be measured using a rotational rheometer.

The storage modulus, the loss modulus and the complex viscosity may be measured under a frequency sweep condition. That is, the storage modulus, the loss modulus and the complex viscosity may be measured under a condition where a frequency is changed in a state where a strain is fixed.

For example, the storage modulus, the loss modulus and the complex viscosity may be measured while changing a frequency from about 0.1 Hz to about 1000 Hz at a strain of about 3%.

The storage modulus, the loss modulus and the complex viscosity may be measured measurement conditions below:
(1) Test equipment: Rotational rheometer (TA instrument Ltd., ARES-G2)
(2) Frequency: 0.1 Hz to 1000 Hz
(3) Temperature: 25°C
(4) Strain: 3%
(5) Minimum transducer torque in oscillation: 0.05 µN·m
(6) Minimum transducer torque in steady shear: 0.1 µN·m
(7) Maximum transducer torque: 20 mN·m
(8) Transducer torque resolution: 1 nN·m
(9) Strain resolution at drive motor: 0.04 µrad
(10) Measuring geometry: 25 mm plate
(11) Measuring gap: 0.627 mm

The electrolyte layer 700 may have a storage modulus of about 10 kPa to about 100 kPa under measurement conditions of about 3% strain and about 1 Hz frequency. The electrolyte layer 700 may have a storage modulus of about 20 kPa to about 80 kPa under measurement conditions of about 3% strain and about 1 Hz frequency. The electrolyte layer 700 may have a storage modulus of about 20 kPa to about 70 kPa under measurement conditions of about 3% strain and about 1 Hz frequency. The electrolyte layer 700 may have a storage modulus of about 30 kPa to about 60 kPa under measurement conditions of about 3% strain and about 1 Hz frequency.

The electrolyte layer 700 may have a storage modulus of about 20 kPa to about 120 kPa under measurement conditions of about 3% strain and about 10 Hz frequency. The electrolyte layer 700 may have a storage modulus of about 30 kPa to about 110 kPa under measurement conditions of about 3% strain and about 10 Hz frequency. The electrolyte layer 700 may have a storage modulus of about 30 kPa to about 100 kPa under measurement conditions of about 3% strain and about 10 Hz frequency. The electrolyte layer 700 may have a storage modulus of about 20 kPa to about 80 kPa under measurement conditions of about 3% strain and about 10 Hz frequency. The electrolyte layer 700 may have a storage modulus of about 30 kPa to about 70 kPa under measurement conditions of about 3% strain and about 10 Hz frequency.

The electrolyte layer 700 may have a loss modulus of about 10 kPa to about 30 kPa under the measurement conditions of about 3% strain and about 1 Hz frequency. The electrolyte layer 700 may have a loss modulus of about 5 kPa to about 40 kPa under the measurement conditions of about 3% strain and about 1 Hz frequency. The electrolyte layer 700 may have a loss modulus of about 12 kPa to about 27 kPa under the measurement conditions of about 3% strain and about 1 Hz frequency. The electrolyte layer 700 may have a loss modulus of about 15 kPa to about 25 kPa under the measurement conditions of about 3% strain and about 1 Hz frequency.

The electrolyte layer 700 may have a loss modulus of about 5 kPa to about 20 kPa under conditions of about 3% strain and about 0.1 Hz frequency. The electrolyte layer 700 may have a loss modulus of about 6 kPa to about 18 kPa under conditions of about 3% strain and about 0.1 Hz frequency. The electrolyte layer 700 may have a loss modulus of about 8 kPa to about 20 kPa under conditions of about 3% strain and about 0.1 Hz frequency. The electrolyte layer 700 may have a loss modulus of about 7 kPa to about 16 kPa under conditions of about 3% strain and about 0.1 Hz frequency.

The electrolyte layer 700 may have a loss modulus of about 1 kPa to about 10 kPa under conditions of about 3% strain and about 10 Hz frequency. The electrolyte layer 700 may have a loss modulus of about 1.5 kPa to about 8 kPa under conditions of about 3% strain and about 10 Hz frequency. The electrolyte layer 700 may have a loss modulus of about 2 kPa to about 6 kPa under conditions of about 3% strain and about 10 Hz frequency.

The electrolyte layer 700 may have a complex viscosity of about 3000 Pa·s to about 11000 Pa·s under the measurement conditions of about 3% strain and about 1 Hz frequency. The electrolyte layer 700 may have a complex viscosity of about 4000 Pa·s to about 11000 Pa·s under the measurement conditions of about 3% strain and about 1 Hz frequency. The electrolyte layer 700 may have a complex viscosity of about 5000 Pa·s to about 10000 Pa·s under the measurement conditions of about 3% strain and about 1 Hz frequency. The electrolyte layer 700 may have a complex viscosity of about 5000 Pa·s to about 9000 Pa·s under the measurement conditions of about 3% strain and about 1 Hz frequency.

The electrolyte layer 700 may have a complex viscosity of about 15000 Pa·s to about 40000 Pa·s under measurement conditions of about 3% strain and about 0.1 Hz frequency. The electrolyte layer 700 may have a complex viscosity of about 18000 Pa·s to about 40000 Pa·s under measurement conditions of about 3% strain and about 0.1 Hz frequency. The electrolyte layer 700 may have a complex viscosity of about 20000 Pa·s to about 35000 Pa·s under measurement conditions of about 3% strain and about 0.1 Hz frequency. The electrolyte layer 700 may have a complex viscosity of about 20000 Pa·s to about 30000 Pa·s under measurement conditions of about 3% strain and about 0.1 Hz frequency.

The electrolyte layer 700 may have a complex viscosity of about 300 Pa·s to 3000 Pa·s under the measurement conditions of about 3% strain and about 10 Hz frequency. The electrolyte layer 700 may have a complex viscosity of about 300 Pa·s to 2000 Pa·s under the measurement conditions of about 3% strain and about 10 Hz frequency. The electrolyte layer 700 may have a complex viscosity of about 300 Pa·s to 1500 Pa·s under the measurement conditions of about 3% strain and about 10 Hz frequency. The electrolyte layer 700 may have a complex viscosity of about 400 Pa·s to 2000 Pa·s under the measurement conditions of about 3% strain and about 10 Hz frequency.

Since the electrolyte layer 700 has an appropriate storage modulus, an appropriate loss modulus and an appropriate complex viscosity depending upon various frequencies as described above, it may have improved durability against external physical impact.

Accordingly, the electrochromic element according to an embodiment may have improved durability against physical shocks such as external vibrations during the manufacturing process or after being mounted on a window, etc.

The storage modulus, the loss modulus and the complex viscosity may be measured under strain sweep conditions. That is, the storage modulus, the loss modulus and the complex viscosity may be measured under a condition where a strain changes in a state where a frequency is fixed.

For example, the storage modulus, the loss modulus and the complex viscosity may be measured while changing a strain from about 0.1% to about 1000% at a frequency of about 1 Hz.

The storage modulus, the loss modulus and the complex viscosity may be measured measurement conditions below:
(1) Test equipment: Rotational rheometer (TA instrument Ltd., ARES-G2)
(2) Frequency: 1 Hz
(3) Temperature: 25°C
(4) Strain: 0.1% to 1000%
(5) Minimum transducer torque in oscillation: 0.05 µN·m
(6) Minimum transducer torque in steady shear: 0.1 µN·m
(7) Maximum transducer torque: 20 mN·m
(8) Transducer torque resolution: 1 nN·m
(9) Strain resolution at drive motor: 0.04 µrad
(10) Measuring geometry: 25 mm plate
(11) Measuring gap: 0.627 mm

The electrolyte layer 700 may have a storage modulus of about 7 kPa to about 80 kPa under measurement conditions of about 10% strain and about 1 Hz frequency. The electrolyte layer 700 may have a storage modulus of about 15 kPa to about 70 kPa under measurement conditions of about 10% strain and about 1 Hz frequency. The electrolyte layer 700 may have a storage modulus of about 20 kPa to about 60 kPa under measurement conditions of about 10% strain and about 1 Hz frequency. The electrolyte layer 700 may have a storage modulus of about 25 kPa to about 50 kPa under measurement conditions of about 10% strain and about 1 Hz frequency.

The electrolyte layer 700 may have a storage modulus of about 10 kPa to about 100 kPa under measurement conditions of about 1% strain and about 1 Hz frequency. The electrolyte layer 700 may have a storage modulus of about 15 kPa to about 90 kPa under measurement conditions of about 1% strain and about 1 Hz frequency. The electrolyte layer 700 may have a storage modulus of about 20 kPa to about 90 kPa under measurement conditions of about 1% strain and about 1 Hz frequency. The electrolyte layer 700 may have a storage modulus of about 30 kPa to about 70 kPa under measurement conditions of about 1% strain and about 1 Hz frequency.

The electrolyte layer 700 may have a storage modulus of about 5 kPa to about 60 kPa under measurement conditions of about 99% strain and about 1 Hz frequency. The electrolyte layer 700 may have a storage modulus of about 7 kPa to about 50 kPa under measurement conditions of about 99% strain and about 1 Hz frequency. The electrolyte layer 700 may have a storage modulus of about 9 kPa to about 40 kPa under measurement conditions of about 99% strain and about 1 Hz frequency. The electrolyte layer 700 may have a storage modulus of about 10 kPa to about 30 kPa under measurement conditions of about 99% strain and about 1 Hz frequency.

The electrolyte layer 700 may have a loss modulus of about 10 kPa to about 60 kPa under the measurement conditions of about 10% strain and about 1 Hz frequency. The electrolyte layer 700 may have a loss modulus of about 15 kPa to about 50 kPa under the measurement conditions of about 10% strain and about 1 Hz frequency. The electrolyte layer 700 may have a loss modulus of about 20 kPa to about 40 kPa under the measurement conditions of about 10% strain and about 1 Hz frequency.

The electrolyte layer 700 may have a loss modulus of about 5 kPa to about 40 kPa under the measurement conditions of about 1% strain and about 1 Hz frequency. The electrolyte layer 700 may have a loss modulus of about 7 kPa to about 30 kPa under the measurement conditions of about 1% strain and about 1 Hz frequency. The electrolyte layer 700 may have a loss modulus of about 10 kPa to about 25 kPa under the measurement conditions of about 1% strain and about 1 Hz frequency.

The electrolyte layer 700 may have a loss modulus of about 11 kPa to about 70 kPa under the measurement conditions of about 99% strain and about 1 Hz frequency. The electrolyte layer 700 may have a loss modulus of about 15 kPa to about 60 kPa under the measurement conditions of about 99% strain and about 1 Hz frequency. The electrolyte layer 700 may have a loss modulus of about 20 kPa to about 40 kPa under the measurement conditions of about 99% strain and about 1 Hz frequency.

The electrolyte layer 700 may have a complex viscosity of about 5000 Pa·s to about 20000 Pa·s under the measurement conditions of about 10% strain and about 1 Hz frequency. The electrolyte layer 700 may have a complex viscosity of about 3000 Pa·s to about 20000 Pa·s under the measurement conditions of about 10% strain and about 1 Hz frequency. The electrolyte layer 700 may have a complex viscosity of about 5000 Pa·s to about 15000 Pa·s under the measurement conditions of about 10% strain and about 1 Hz frequency.

The electrolyte layer 700 may have a complex viscosity of about 4000 Pa·s to about 18000 Pa·s under the measurement conditions of about 1% strain and about 1 Hz frequency. The electrolyte layer 700 may have a complex viscosity of about 3000 Pa·s to about 18000 Pa·s under the measurement conditions of about 1% strain and about 1 Hz frequency. The electrolyte layer 700 may have a complex viscosity of about 5000 Pa·s to about 12000 Pa·s under the measurement conditions of about 1% strain and about 1 Hz frequency.

The electrolyte layer 700 may have a complex viscosity of about 1000 Pa·s to about 10000 Pa·s under the measurement conditions of about 99% strain and about 1 Hz frequency. The electrolyte layer 700 may have a complex viscosity of about 2000 Pa·s to about 9000 Pa·s under the measurement conditions of about 99% strain and about 1 Hz frequency. The electrolyte layer 700 may have a complex viscosity of about 3000 Pa·s to about 8000 Pa·s under the measurement conditions of about 99% strain and about 1 Hz frequency.

Since the electrolyte layer 700 may maintain an appropriate storage modulus, an appropriate loss modulus and an appropriate complex viscosity depending upon various strains as described above, it may have improved durability against external physical impact.

Accordingly, the electrochromic element according to an embodiment may have improved durability against external physical impacts such as twisting and winding.

The electrolyte layer 700 may have a storage modulus per thickness as represented by Equation 1 below:
Storage modulus per thickness = Storage modulus of electrolyte layer 700/Thickness of electrolyte layer 700

In the storage modulus per thickness, the storage modulus of the electrolyte layer 700 may be measured under the conditions of about 3% strain and about 1 Hz frequency.

The storage modulus per thickness may be about 0.2 kPa/*µ*m to about 3 kPa/*µ*m. The storage modulus per thickness may be about 0.3 kPa/*µ*m to about 2 kPa/*µ*m. The storage modulus per thickness may be about 0.4 kPa/*µ*m to about 1.5 kPa/*µ*m.

Since the electrolyte layer 700 has a storage modulus per thickness in the above range, the electrolyte layer 700 may maintain a cell gap while having an appropriate thickness. That is, since the electrolyte layer 700 has an appropriate storage modulus with increasing thickness, it may easily protect the first discoloration layer 500, the second discoloration layer 600, the first transparent electrode 300 and the second transparent electrode 400 from external physical impact.

The electrolyte layer 700 may have a loss modulus per thickness represented by Equation 2 below: Loss modulus per thickness = Loss modulus of electrolyte layer 700/Thickness of electrolyte layer 700

In the loss modulus per thickness, the loss modulus of the electrolyte layer 700 may be measured under the conditions of about 3% strain and about 1 Hz frequency.

The loss modulus per thickness may be about 0.1 kPa/*µ*m to about 2 kPa/*µ*m. The loss modulus per thickness may be about 0.15 kPa/*µ*m to about 1.5 kPa/*µ*m. The loss modulus per thickness may be about 0.2 kPa/*µ*m to about 1 kPa/*µ*m.

Since the electrolyte layer 700 has a loss modulus per thickness in the range, the electrolyte layer 700 may maintain a cell gap while having an appropriate thickness. That is, since the electrolyte layer 700 has an appropriate loss modulus with increasing thickness, it may easily protect the first discoloration layer 500, the second discoloration layer 600, the first transparent electrode 300 and the second transparent electrode 400 from external physical impact.

The electrochromic element according to an embodiment includes the electrolyte layer 700 having bonding strength.

The bonding strength of the electrolyte layer 700 may be bonding strength between the first substrate 100 and the second substrate 200 due to the electrolyte layer 700.

The bonding strength of the electrolyte layer 700 may be measured by the following method.

FIGS. 21 to 23 illustrates a process of measuring the bonding strength.

As shown in FIG. 21, a sample S having an appropriate size may be manufactured by cutting the electrochromic element according to an embodiment. For example, the electrochromic element according to an embodiment may be cut to a size having one of about 100 mm to about 400 mm in length L1 and about 10 mm to about 50 mm in width W.

Next, as shown in FIG. 22, the sample S is peeled off by a certain length L2. The first substrate 100 and the second substrate 200 may be peeled off by one of about 20 mm to about 100 mm in length L2.

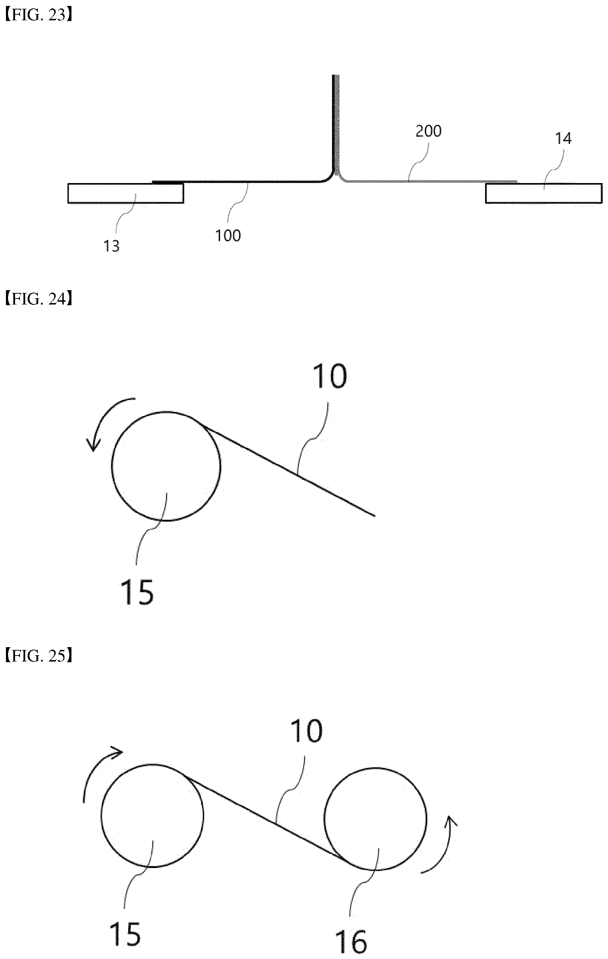

Next, as shown in FIG. 23, one end of the peeled first substrate 100 is fixed to a table 13, etc. Next, one end of the peeled second substrate 200 is connected to a push-pull gauge 14 for measuring force.

Next, when the end of the peeled second substrate 200 is pulled and the electrolyte layer 700 is peeled off, an average force is measured with the gauge 14. Here, the end of the peeled second substrate 200 may be pulled at one rate of about 1 mm/s to 10 mm/s.

When calculating the average force, the force measured at the initial 10 mm length and the last 10 mm length may be excluded.

The bonding strength is obtained by dividing the average force by the width W.

More specifically, the bonding strength may be measured by Measurement Method 1 below:

### [Measurement Method 1]

(1) The electrochromic element is cut to a size of about 200 mm in length and about 20 mm in width to manufacture a sample.
(2) One end of the sample is peeled off by 50 mm in length, one end of a first polymer substrate peeled off is fixed, and one end of a second polymer substrate peeled off is pulled in the opposite direction.
(3) The bonding strength is obtained by dividing an average force when the end of the second polymer substrate is pulled by the width of the sample.

The bonding strength may be about 0.05 N/cm. The bonding strength may be about 0.06 N/cm. The bonding strength may be about 0.07 N/cm. A maximum value of the bonding strength may be about 10 N/cm.

The bonding strength may be about 0.05 N/cm to about 5 N/cm. The bonding strength may be about 0.06 N/cm to about 10 N/cm. The bonding strength may be about 0.07 N/cm to about 1 N/cm.

Since the electrochromic element according to an embodiment has a bonding strength in the above range, it may have improved durability against external mechanical deformation while having high peel strength.

The electrochromic element according to an embodiment may have a thickness-weighted bonding strength. The thickness-weighted bonding strength may be a product of the thickness of the electrolyte layer 700 and the bonding strength of the electrolyte layer 700. The thickness-weighted bonding strength may be represented by Equation 3 below: Thickness-weighted bonding strength = Bonding strength of electrolyte layer 700 × Thickness of electrolyte layer 700

The thickness-weighted bonding strength may be greater than about 2.5 *µ*m·N/cm. The thickness-weighted bonding strength may be greater than about 3 *µ*m·N/cm. The thickness-weighted bonding strength may be greater than about 3.5 *µ*m·N/cm. A maximum value of the thickness-weighted bonding strength may be about 1000 *µ*m·N/cm.

The thickness-weighted bonding strength may be about 2.5 *µ*m·N/cm to about 200 *µ*m·N/cm. The thickness-weighted bonding strength may be about 3.5 *µ*m·N/cm to about 200 *µ*m·N/cm. The thickness-weighted bonding strength may be about 5 *µ*m·N/cm to about 100 *µ*m·N/cm.

Since the electrochromic element according to an embodiment has a thickness-weighted bonding strength in the above range, the electrolyte layer 700 may be thick and may have high bonding strength. Accordingly, the electrolyte layer 700 may easily absorb external physical impact while preventing exfoliation.

FIGS. 24 and 25 illustrate a process of conducting a winding test on the electrochromic element according to an embodiment.

Referring to FIG. 24, one end of the electrochromic element 10 according to an embodiment is fixed to the outer circumference of a first core 15 to conduct a winding test on the electrochromic element according to an embodiment.

The electrochromic element according to an embodiment may be machined to undergo the winding test. The electrochromic element according to an embodiment may be cut. The cut electrochromic element may have a planar shape elongated in one direction. The cut electrochromic element may have a rectangular planar shape.

The cut electrochromic element may have a rectangular shape with a length of about 5 m and a width of about 0.5 m. The cut electrochromic element may have a rectangular shape with a length of about 4 m and a width of about 0.5 m. The cut electrochromic element may have a rectangular shape with a length of about 4.5 m and a width of about 0.45 m.

The first core 15 may be a pipe-shaped paper core or a pipe-shaped plastic core. The first core 15 may have a cylindrical shape.

The diameter of the first core 15 may be about 20 cm. The diameter of the first core may be about 25 cm. The diameter of the first core 15 may be about 30 cm. The diameter of the first core 15 may be about 15 cm.

Next, the electrochromic element according to an embodiment is wound on the first core 15 in a state where a constant tension is applied to the electrochromic element according to an embodiment.

When the electrochromic element according to an embodiment is wound on the first core 15, the tension may be about 10 N. When the electrochromic element according to an embodiment is wound on the first core 15, the tension may be about 15 N. When the electrochromic element according to an embodiment is wound on the first core 15, the tension may be about 5 N. When the electrochromic element according to an embodiment is wound on the first core 15, the tension may be about 20 N.

Next, the first wound electrochromic element may be left for about a certain period. The first wound electrochromic element may be left at room temperature and a relative humidity of about 50% for about 500. The first wound electrochromic element may be left at room temperature and a relative humidity of about 50% for about 1000 hours.

The first wound electrochromic element may be left for about at about 85°C and a relative humidity of about 30% for about 500 hours. The first wound electrochromic element may be left for about at about 85°C and a relative humidity of about 30% for about 1000 hours. The first wound electrochromic element may be left for about at about 85°C and a relative humidity of about 30% for about 700 hours.

Next, referring to FIG. 25, another end of the first wound electrochromic element 10 is fixed to the outer circumference of a second core 16.

The second core 16 may be a pipe-shaped paper core or a pipe-shaped plastic core. The second core 16 may have a cylindrical shape.

The diameter of the second core 16 may be about 20 cm. The diameter of the second core 16 may be about 25 cm The diameter of the second core 16 may be about 30 cm. The diameter of the second core 16 may be about 15 cm.

Next, in a state where a constant tension is applied to the electrochromic element fixed to the second core 16, the electrochromic element according to an embodiment is secondarily wound on the second core 16 while being unwound from the first core 15.

An interval between the center of the first core 15 and the center of the second core 16 may be about 1 m.

The tension when the electrochromic element according to an embodiment is wound on the second core 16 may be about 10 N The tension when the electrochromic element according to an embodiment is wound on the second core 16 may be about 15 N. The tension when the electrochromic element according to an embodiment is wound on the second core 16 may be about 5 N. The tension when the electrochromic element according to an embodiment is wound on the second core 16 may be about 20 N.

Next, the secondarily wound electrochromic element may be left for about a certain period. The secondarily wound electrochromic element may be left at room temperature and a relative humidity of about 50% for about 24 hours. The secondarily wound electrochromic element may be left at room temperature and a relative humidity of about 50% for about 10 days. The secondarily wound electrochromic element may be left at room temperature and a relative humidity of about 50% for about 15 days. The secondarily wound electrochromic element may be left at room temperature and a relative humidity of about 50% for about 20 days.

The secondarily wound electrochromic element may be left for about at about 85°C and a relative humidity of about 30% for about 500 hours. The secondarily wound electrochromic element may be left for about at about 85°C and a relative humidity of about 30% for about 1000 hours. The secondarily wound electrochromic element may be left for about at about 85°C and a relative humidity of about 30% for about 700 hours.

As described above, the electrochromic element according to an embodiment may be subjected to 0the winding test.

More specifically, the winding test may be conducted in the following manner.
1) The electrochromic element is cut into pieces with a length of about 4 m and a width of about 0.5 m.
2) One end of the electrochromic element is fixed to a first core 15 having a diameter of 15 cm.
3) The fixed electrochromic element is wound around the first core 15 at a speed of 6 revolutions per minute while maintaining a tension of 10 N.
4) In the state where it is wound on the first core 15, the electrochromic element is left for 500 hours under the conditions of a temperature of 85°C and a relative humidity of about 30%.
5) The other end of the left electrochromic element is fixed to a second core 16 having a diameter of 15 cm.
6) The electrochromic element wound on the first core 15 is wound on the second core 16 at a speed of 6 revolutions per minute in the opposite direction to the direction in which it was wound on the first core 15, while being unwound in a state where a tension of 10 N is maintained.
7) In a state where the second core 16 is wound, the electrochromic element is left under conditions of 85°C and about 30% relative humidity for 500 hours, and the winding test is completed.

The haze of the electrochromic element according to an embodiment may be increased. The haze increase is a difference between a second haze after the winding test and a first haze before the winding test. When the electrochromic element according to an embodiment is left for 1000 hours under the conditions described above, the second haze may be the haze of the electrochromic element according to an embodiment.

The haze increase may be less than about 3%. The haze increase may be less than about 2%. The haze increase may be less than less than about 1.5%. The haze increase may be less than about 1%.

In addition, the transmittance of the electrochromic element according to an embodiment may be decreased. The transmittance decrease is a difference between a first transmittance before the winding test and a second transmittance after the winding test. The second transmittance may be a transmittance of the electrochromic element according to an embodiment when the electrochromic element is left for 1000 hours under the conditions described above.

The transmittance decrease may be less than about 7%. The transmittance decrease may be less than about less than 5%. The transmittance decrease may be less than about 4%. The transmittance decrease may be less than about 3%.

The electrochromic element according to an embodiment may have a bonding strength decrease. The bonding strength decrease is a difference between a first bonding strength before the winding test and a second bonding strength after the winding test. The first bonding strength and the second bonding strength may be measured under the same conditions.

The bonding strength decrease may be less than about 0.005 N/cm. The bonding strength decrease may be less than about 0.004 N/cm. The bonding strength decrease may be less than about 0.003 N/cm. The bonding strength decrease may be less than about 0.002 N/cm.

Since the electrochromic element according to an embodiment has a haze increase, transmittance decrease and bonding strength decrease in the above ranges, it may have improved durability and long-term storage stability.

The electrochromic element according to an embodiment has appropriate bonding strength. That is, the electrochromic element according to an embodiment may be flexible, and the electrolyte may appropriately bond the first discoloration layer 500 contained in the first polymer substrate and the second discoloration layer 600 contained in the second polymer substrate. Accordingly, the electrochromic element according to an embodiment may have appropriate interlayer bonding strength.

In addition, the electrochromic element according to an embodiment may have an appropriate storage modulus and an appropriate loss modulus. Accordingly, the electrochromic element according to an embodiment may have appropriate interlayer bonding strength while having appropriate elasticity. At the same time, the electrochromic element according to an embodiment may have appropriate flexibility.

In particular, since the electrolyte layer 700 has appropriate elasticity and appropriate bonding strength, it may have small deformation when applied with external physical impact. In addition, since the electrolyte layer 700 has appropriate elasticity and appropriate bonding strength, it may be quickly restored when pressed.

Accordingly, the electrochromic element according to an embodiment may minimize changes in appearance due to twisting, winding, pressing, bending, etc. In addition, since the electrochromic element according to the embodiment has a fast restoration performance, it may have an improved appearance.

In addition, the electrolyte layer 700 may be formed by a thermal crosslinking process and a photocuring process of the curable resin. Accordingly, the electrolyte layer 700 may have a high crosslinking density.

Accordingly, the electrolyte layer 700 may be strongly bonded to the first discoloration layer 500 and the second discoloration layer 600. Accordingly, the electrochromic element according to the embodiment may have improved peel strength.

In addition, since the electrolyte layer 700 has improved crosslinking density, the penetration of moisture and/or oxygen into the electrolyte layer 700 may be reduced. Accordingly, the electrochromic element according to an embodiment may suppress the whitening phenomenon, etc., and have improved durability.

In addition, since the electrolyte layer 700 has an improved crosslinking density, the electrochromic element according to an embodiment may prevent leakage of the electrolyte included in the electrolyte layer 700.

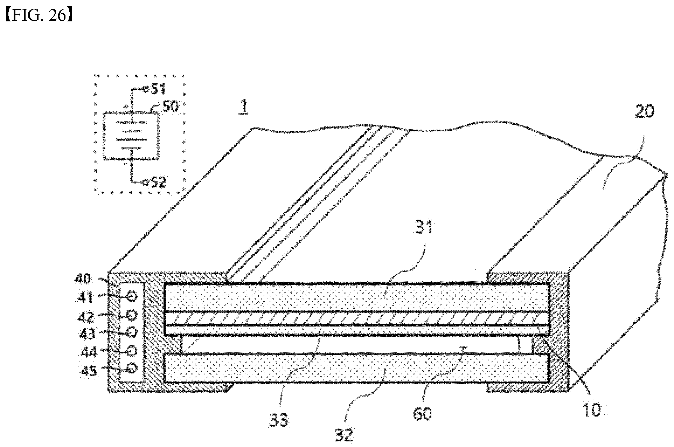

FIG. 26 illustrates a window device 1 according to an embodiment.

Referring to FIG. 26, the window device 1 according to an embodiment includes the electrochromic element 10, a frame 20, windows 31, 32 and 33, a plug-in component 40 and a power supply 50.

The frame 20 may be composed of one or more pieces. For example, the frame 20 may be composed of one or more materials, e.g., vinyl, PVC, aluminum (Al), steel, or fiberglass. The frame 20 fixes the windows 31, 32 and 33 and seals the spaces between the windows 31, 32 and 33.

In addition, the frame 20 may hold or include foam or pieces made of other materials. The frame 20 includes a spacer, and the spacer may be disposed between adjacent windows 31, 32 and 33. In addition, the spacer may tightly seal the spaces between the windows 31, 32 and 33, together with an adhesive sealant.

The windows 31, 32 and 33 are fixed to the frame 20. The windows 31, 32 and 33 may be glass pane. The windows 31, 32 and 33 may be general silicon oxide (SOx)-based glass substrates such as soda lime glass or float glass composed of about 75% silica (SiO₂) plus Na₂O, CaO, and some minor additives. However, any material having appropriate optical, electrical, thermal, and mechanical properties may be used. The windows 31, 32 and 33 may also include, for example, other glass materials, plastics and thermoplastic resins (e.g., poly(methyl methacrylate), polystyrene, a polycarbonate, allyl diglycol carbonate, SAN (styrene acrylonitrile copolymer), poly(4-methyl-1-pentene), polyester, polyamide), or mirror materials. The windows 31, 32 and 33 may include tempered glass.

The windows 31, 32 and 33 may include a first window 31, a second window 32 and a third window 33. The first window 31 and the third window 33 may be disposed at the outermost side, and the second window 32 may be disposed between the first window 31 and the third window 33.

The electrochromic element 10 is disposed between the first window 31 and the second window 32. The electrochromic element 10 may be laminated to the first window 31 and the second window 32.

The electrochromic element 10 may be laminated to the first window 31 by a first polyvinyl butyral sheet. That is, the first polyvinyl butyral sheet may be disposed on the first window 31 and the electrochromic element 10, and may be laminated to the first window 31 and the electrochromic element 10.

The electrochromic element 10 may be laminated to the second window 32 by a second polyvinyl butyral sheet. That is, the second polyvinyl butyral sheet may be disposed on the second window 32 and the electrochromic element 10 and may be laminated to the second window 32 and the electrochromic element 10.

A space 60 may be formed between the second window 32 and the third window 33. The space may be filled with one or more gases, such as argon (Ar), krypton (Kr), or xenon (Xn).

The windows 31, 32 and 33 may have glass pane sizes for residential or commercial window applications. The size of glass pane may vary widely depending on the specific needs of the home or commercial enterprise. In some embodiments, the windows 31, 32 and 33 may be formed of architectural glass. Architectural glass is typically used in commercial buildings, but can also be used in residential buildings. Normally, but not necessarily, the indoor environment is separated from the outdoor environment. In some embodiments, a suitable architectural glass substrate is at least about 20 inches by about 20 inches, and may be much larger, for example, about 80 inches by about 120 inches, or larger. Architectural glass is typically at least about 2 millimeters (mm) thick and may be as thick as 6 mm or more.

In embodiments, the windows 31, 32 and 33 have a thickness in a range of about 1 mm to about 10 mm.

In embodiments, the windows 31, 32 and 33 may be, for example, very thin and flexible Gorilla Glass^{®} or WillowTM Glass which is commercially available from Corning, Inc. in New York. The thicknesses of these glasses may be less than 0.3 mm or less than about 1 mm.

The plug-in component 40 may include a first electrical input 41, a second electrical input 42, a third electrical input 43, a fourth electrical input 44 and a fifth electrical input 45.

In addition, the power supply 50 includes a first power terminal 51 and a second power terminal 52.

The first electrical input 41 is electrically connected to the first power terminal 51 through one or more wires or other electrical connections, components, or devices.

The first electrical input 41 may include a pin, a socket, or another electrical connector or conductor. In addition, the first electrical input 41 may be electrically connected to the electrochromic element 10 through a first bus bar (not shown). The first bus bar may be electrically connected to the second transparent electrode 400.

The second electrical input 42 is electrically connected to the second power terminal 52 through one or more wires or other electrical connections, components, or devices.

The second electrical input 42 may include a pin, a socket, or another electrical connector or conductor. In addition, the second electrical input 42 may be electrically connected to the electrochromic element 10 through a second bus bar (not shown). The second bus bar may be electrically connected to the first transparent electrode 300.

The third electrical input 43 may be coupled to a device, system, or building ground.

The fourth electrical input 44 and the fifth electrical input 45 may be individually used, for example, for communication between a controller or microcontroller for controlling the window device 1 and a network controller.

The power supply 50 supplies power to the electrochromic element 10 through the plug-in component 40. In addition, the power supply 50 may be controlled by the controller outside to supply power of a certain waveform to the electrochromic element 10.

In addition, the features, structures, effects, and the like described in the embodiments are included in at least one embodiment of the present invention, and are not necessarily limited to only one embodiment. Furthermore, the features, structures, effects and the like illustrated in the embodiments can be combined and modified by those skilled in the art to which the embodiments belong. Therefore, it should be understood that the combined and modified embodiments are included in the present invention.

Although the above description focuses on embodiments, these are only examples and do not limit the present invention, and those with ordinary knowledge in the field to which the present invention pertains will be able to recognize that various modifications and applications not exemplified above are possible without departing from the essential characteristics of the present invention. For example, each component specifically shown in the embodiments can be modified and implemented, and the differences related to such modifications and applications should be interpreted as being included in the scope of the present invention defined in the appended claims.

### Fabrication examples

ITO film : Hansung Industrial Co., Ltd., HI150-ABE-125A-AB
Tungsten oxide powder : Adcro Co., Ltd., ELACO-W
Nickel oxide powder : Adcro Co., Ltd., ELACO-P
Solvent : acetamide (AA), adiponitrile (AN), sulfolane (SF)
Lithium salt : LiClO₄
Urethane acrylate

About 4 mol parts of toluene diisocyanate and about 6 mol parts of polyester polyol with a weight average molecular weight of about 2000 mol/g (Union Chemical Co., U-1220) were fed into a reactor, about 500 ppm of a tin-based catalyst was added thereto, and the reactor was stirred at about 85°C for about 1 hour. Next, 2 mol parts of (meth)acrylate having a hydroxyl group were added, and the reactor was stirred at about 85°C for about 1 hour, thereby preparing ether-based urethane acrylate. The weight average molecular weight of the ether-based urethane acrylate was about 12000 g/mol.

### Epoxy acrylate

4 mol parts of glycerol diglycidyl ether (GDE) and 8 mol parts of 2-carboxyethyl acrylate (2-CEA) were fed into a reactor, about 500 ppm of an amine-based catalyst was added thereto, the reactor was stirred at about 100°C for about 1 hour, thereby preparing glycerol epoxy acrylate.
Multifunctional acrylate #1: MIWON Co., Miramer M500
Multifunctional acrylate #2: MIWON Co., Miramer M600
Monofunctional acrylate #1: MIWON Co., Miramer M150
Monofunctional acrylate #2: MIWON Co., Miramer M180
Photoinitiator: Ethyl(2,4,6-trimethylbenzoyl)phenyl phosphinate
Antioxidant: SHIN SEUNG HICHEM Co., Ltd., Antioxidant-MD1024
Thermally crosslinkable acrylates

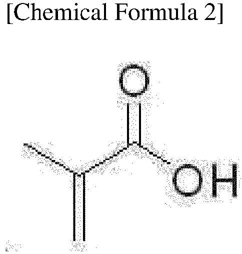

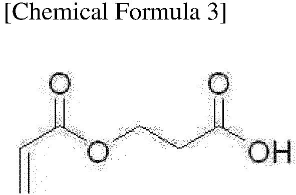

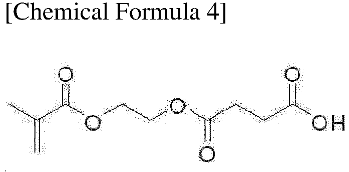

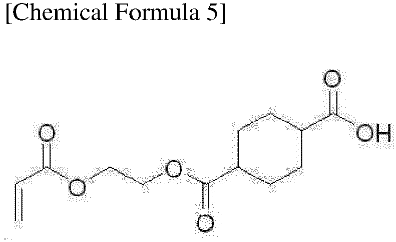

### Manufacturing Example 1

About 10 parts by weight of urethane acrylate, about 15 parts by weight of epoxy acrylate, about 5 parts by weight of Multifunctional acrylate #1, about 5 parts by weight of Monofunctional acrylate #1, about 3 parts by weight of acrylate containing a carboxyl group, about 1 part by weight of a photoinitiator, about 15 parts by weight of lithium salt, about 50 parts by weight of acetamide and about 1 part by weight of an antioxidant were added to prepare an electrolyte composition.

### Manufacturing Examples 2 to 4

The composition of the electrolyte composition was varied as shown in Table 1 below.

**[Table 1]**

| Classificatio n | Urethan e acrylate (parts by weight) | Epoxyacryla te (parts by weight) | Monofunctio nal acrylate #1 (parts by weight) | Multifunctio nal acrylate #1 (parts by weight) | Thermally crosslinkab le acrylate (Chemical Formula 3) (parts by weight) | Solve nt (parts by weigh t) | Lithiu m salt (parts by weight ) |
|---|---|---|---|---|---|---|---|
| Manufacturi ng Example 1 | 10 | 15 | 5 | 5 | 3 | AA, 50 | 15 |
| Manufacturi ng Example 2 | 10 | 15 | 5 | 5 | 3 | AN, 50 | 15 |
| Manufacturi ng Example 3 | 15 | 10 | 3 | 5 | 5 | SF, 50 | 15 |
| Manufacturi ng Example 4 | 15 | 10 | 5 | 5 | 2 | AA, 50 | 15 |

### Manufacturing Example 5

About 10 parts by weight of urethane acrylate, about 15 parts by weight of epoxy acrylate, about 5 parts by weight of Multifunctional acrylate #1, about 5 parts by weight of Monofunctional acrylate #1, about 3 parts by weight of the acrylate represented by Chemical Formula 2, about 1 part by weight of a photoinitiator, about 15 parts by weight of lithium salt, about 50 parts by weight of acetamide and about 1 part by weight of an antioxidant were added to prepare an electrolyte composition.

Manufacturing Examples 6 to 8

The composition of the electrolyte composition was varied as shown in Table 2 below.

**[Table 2]**

| Classificatio n | Urethan e acrylate (parts by weight) | Epoxyacryla te (parts by weight) | Monofunctio nal acrylate #1 (parts by weight) | Multifunctio nal acrylate #1 (parts by weight) | Thermally crosslinkab le acrylate (parts by weight) | Solve nt (parts by weigh t) | Lithiu m salt (parts by weight ) |
|---|---|---|---|---|---|---|---|
| Manufacturi ng Example 5 | 10 | 15 | 5 | 5 | Formula 2, 3 | AA, 50 | 15 |
| Manufacturi ng Example 6 | 10 | 15 | 5 | 5 | Formula 3, 4 | AN, 50 | 15 |
| Manufacturi ng Example 7 | 15 | 10 | 3 | 5 | Formula 4, 5 | SF, 50 | 15 |
| Manufacturi ng Example 8 | 15 | 10 | 5 | 5 | Formula 5, 4 | AA, 50 | 15 |

### Manufacturing Example 9

About 10 parts by weight of urethane acrylate, about 15 parts by weight of epoxy acrylate, about 5 parts by weight of Multifunctional acrylate #2, about 5 parts by weight of Monofunctional acrylate #2, about 3 parts by weight of acrylate containing a carboxyl group, about 1 part by weight of a photoinitiator, about 15 parts by weight of lithium salt, about 50 parts by weight of acetamide and about 1 part by weight of an antioxidant were added to prepare an electrolyte composition.

Manufacturing Examples 10 to 13

The composition of the electrolyte composition was varied as shown in Table 3 below.

**[Table 3]**

| Classificatio n | Urethan e acrylate (parts by weight) | Epoxyacryla te (parts by weight) | Monofunctio nal acrylate #2 (parts by weight) | Multifunctio nal acrylate #2 (parts by weight) | Thermally crosslinkab le acrylate (parts by weight) | Solve nt (parts by weigh t) | Lithiu m salt (parts by weight ) |
|---|---|---|---|---|---|---|---|
| Manufacturi ng Example 9 | 15 | 15 | 5 | 5 | | AA, 50 | 15 |
| Manufacturi ng Example 10 | 10 | 15 | 5 | 5 | Formula 5, 5 | AN, 50 | 15 |
| Manufacturi ng Example 11 | 15 | 10 | 10 | 5 | | SF, 50 | 15 |
| Manufacturi ng Example 12 | 15 | 10 | 5 | 5 | Formula 5, 5 | AA, 50 | 15 |
| Manufacturi ng Example 13 | | | 20 | 20 | | PC, 25 EC, 25 | 15 |

### Example 1

About 10 parts by weight of tungsten oxide powder, about 1 part by weight of TEOS and about 90 parts by weight of ethanol were uniformly mixed, thereby preparing a first discoloration material composition. The first discoloration material composition was coated to a thickness of about 40 *µ*m on the first ITO film, a sol-gel reaction was allowed to occur at about 110°C for about 5 minutes, thereby manufacturing a first discoloration layer. About 11 parts by weight of nickel oxide powder, about 1 part by weight of TEOS and about 89 parts by weight of ethanol were uniformly mixed to prepare a second discoloration material composition. The second discoloration material composition was coated to a thickness of about 50 *µ*m on the second ITO film, and a sol-gel reaction was allowed to occur at about 120°C for about 5 minutes, thereby manufacturing a second discoloration layer containing a second discoloration layer. The electrolyte composition (Manufacturing Example 1) was coated to a thickness of about 100 *µ*m on the first discoloration layer. The coated electrolyte composition was dried and thermally crosslinked at about 120°C for about 10 minutes, thereby manufacturing a first laminate that had been thermally crosslinked. Next, the first laminate and the second laminate were laminated, and the coated gel polymer electrolyte composition was cured with UV light. Next, the laminate was aged by leaving it at room temperature for about 14 hours. Accordingly, the electrochromic element according to an embodiment was fabricated.

### Examples 2 to 4

The electrolyte layer was formed using the electrolyte composition as shown in Table 2 below. In addition, the thermal crosslinking temperature and the thermal crosslinking time were adjusted as shown in Table 4 below. The remaining process was referenced from Example 1.

**[Table 4]**

| Classification | Electrolyte composition | Drying temperature (°C) | Drying time (min) |
|---|---|---|---|
| Example 1 | Manufacturing Example 1 | 120 | 10 |
| Example 2 | Manufacturing Example 2 | 115 | 10 |
| Example 3 | Manufacturing Example 3 | 130 | 5 |
| Example 4 | Manufacturing Example 4 | 110 | 15 |

### Example 5

About 10 parts by weight of tungsten oxide powder, about 1 part by weight of TEOS and about 90 parts by weight of ethanol were uniformly mixed, thereby preparing a first discoloration material composition. The first discoloration material composition was coated to a thickness of about 40 *µ*m on the first ITO film, and a sol-gel reaction was allowed to occur at about 110°C for about 5 minutes, thereby manufacturing a first discoloration layer. About 11 parts by weight of nickel oxide powder, about 1 part by weight of TEOS and about 89 parts by weight of ethanol were uniformly mixed to prepare a second discoloration material composition. The second discoloration material composition was coated to a thickness of about 50 *µ*m on the second ITO film, and a sol-gel reaction was allowed to occur at about 120°C for about 5 minutes, thereby manufacturing a second discoloration layer containing a second discoloration layer. The electrolyte composition (Manufacturing Example 5) was coated to a thickness of about 100 *µ*m on the first discoloration layer. Next, a protective polyethylene terephthalate film including a release layer was placed on the coated electrolyte composition layer. Next, the coated electrolyte composition was dried and thermally crosslinked at about 120°C for about 10 minutes, thereby manufacturing a first laminate.

Next, the first laminate and the second laminate were laminated, and the coated gel polymer electrolyte composition was cured with UV light. Next, the laminate was aged by leaving it at room temperature for about 14 hours. Accordingly, the electrochromic element according to an embodiment was fabricated.

### Examples 6 to 8

As shown in Table 2 below, the electrolyte layer was formed using the electrolyte composition. In addition, the thermal crosslinking temperature and the thermal crosslinking time were adjusted as shown in Table 5 below. The remaining process was referenced from Example 5.

**[Table 5]**

| Classification | Electrolyte composition | Drying temperature (°C) | Drying time (min) |
|---|---|---|---|
| Example 5 | Manufacturing Example 5 | 120 | 10 |
| Example 6 | Manufacturing Example 6 | 130 | 5 |
| Example 7 | Manufacturing Example 7 | 110 | 15 |
| Example 8 | Manufacturing Example 8 | 100 | 20 |

### Example 9

About 10 parts by weight of tungsten oxide powder, about 1 part by weight of TEOS and about 90 parts by weight of ethanol were uniformly mixed, thereby preparing a first discoloration material composition. The first discoloration material composition was coated to a thickness of about 40 *µ*m on the first ITO film, and a sol-gel reaction was allowed to occur at about 110°C for about 5 minutes, thereby manufacturing a first discoloration layer. About 11 parts by weight of nickel oxide powder, about 1 part by weight of TEOS and about 89 parts by weight of ethanol were uniformly mixed to prepare a second discoloration material composition. The second discoloration material composition was coated to a thickness of about 50 *µ*m on the second ITO film, and a sol-gel reaction was allowed to occur at about 120°C for about 5 minutes, thereby manufacturing a second discoloration layer containing a second discoloration layer. The electrolyte composition (Manufacturing Example 9) was coated to a thickness of about 100 *µ*m on the first discoloration layer. Next, a protective polyethylene terephthalate film including a release layer was placed on the coated electrolyte composition layer. Next, the coated electrolyte composition was thermally treated and thermally crosslinked at about 120°C for about 10 minutes, thereby manufacturing a first laminate.

Next, the first laminate and the second laminate were laminated, and the coated gel polymer electrolyte composition was cured with UV light. Next, the laminate was aged by leaving it at room temperature for about 14 hours. Accordingly, the electrochromic element according to an embodiment was fabricated.

### Examples 10 to 12 and Comparative example

As shown in Table 6 below, the electrolyte layer was formed using the electrolyte composition. In addition, the thermal crosslinking temperature and the thermal crosslinking time were adjusted as shown in Table 6 below. The remaining process was referenced from Example 9.

**[Table 6]**

| Classification | Electrolyte composition | Heat treatment temperature (°C) | Heat treatment time (min) |
|---|---|---|---|
| Example 9 | Manufacturing Example 9 | 120 | 10 |
| Example 10 | Manufacturing Example 10 | 130 | 5 |
| Example 11 | Manufacturing Example 11 | 110 | 15 |
| Example 12 | Manufacturing Example 12 | 100 | 20 |
| Comparative example | Manufacturing Example 13 | 100 | 20 |

### Evaluation examples

### 1. Twist test

1) The electrochromic element was cut to a size of 20 cm in length and 4 cm in width, thereby manufacturing a sample.
2) Opposite ends of the sample were gripped.
3) The opposite ends of the gripped sample were pulled with a force of 1 N.
4) In a state where the sample was pulled with a force of 1 N, the sample was twisted such that the opposite ends of the sample were twisted at an angle of 15° to each other.
5) The twisted state of the sample was maintained for 1 minute, and then released, thereby completing the twist test.

### 2. Transmittance and haze

The transmittance of the sample was measured as a total light transmittance using a solar spectrum meter (EDTM Co., SS2450).

The haze of the sample was measured with a solar spectrum meter (EDTM Co., SS2450).

### 3. Coloring transmittance deviation

In the samples that had been subjected to the twist test, a first bus bar and a second bus bar were mounted in a first transparent electrode and a second transparent electrode, respectively. Next, a driving voltage of about 1.5 V was applied to the first bus bar and the second bus bar for about 1.5 minutes, and the samples were colored.

A transmittance was measured per measurement region unit of 1 cm × 1 cm in a central region with about 16 cm in length and about 3 cm in width of each of the colored samples. From each of the measurement regions, a maximum coloring transmittance, a minimum coloring transmittance and an average coloring transmittance were derived, and a coloring transmittance deviation was obtained.

### 4. Discoloring transmittance deviation

Each of the colored samples was applied with a driving voltage of about 1.5 V for about 1.5 minutes, and the sample was discolored. A transmittance was measured per measurement region unit of 1 cm × 1 cm in a central region of about 16 cm in length and about 3 cm in width of the discolored sample. From each of the measurement regions, a maximum discoloring transmittance, a minimum discoloring transmittance and an average discoloring transmittance were derived, and the discoloring transmittance deviation was obtained.

### 5. Haze deviation

A haze was measured per measurement region unit of 1 cm × 1 cm in a central region of about 16 cm in length and about 3 cm in width of the sample that has been subjected to the twist test. From each of the measurement regions, a maximum haze, a minimum haze and an average haze were derived, and the haze deviation was obtained.

### 5. Driving range deviation

For each measurement region, a driving range was derived from a coloring transmittance and a discoloring transmittance, and a driving range deviation was calculated.

### 6. Viscoelasticity measurement (strain sweep)

In the electrochromic elements manufactured in Examples, a strain was measured under the following conditions while changing the storage modulus, loss modulus and complex viscosity of the electrolyte layer:
(1) Test equipment: Rotational rheometer (TA instrument Ltd., ARES-G2)
(2) Frequency: 1 Hz
(3) Temperature: 25°C
(4) Strain: 0.1% to 1000%
(5) Minimum transducer torque in oscillation: 0.05 µN·m
(6) Minimum transducer torque in steady shear: 0.1 µN·m
(7) Maximum transducer torque: 20 mN·m
(8) Transducer torque resolution: 1 nN·m
(9) Strain resolution at drive motor: 0.04 µrad
(10) Measuring geometry: 25 mm plate
(11) Measuring gap: 0.627 mm

### 7. Viscoelasticity measurement (frequency sweep)

In the electrochromic elements manufactured in Examples, a frequency was measured under the following conditions while changing the storage modulus, loss modulus and complex viscosity of the electrolyte layer:
(1) Test equipment: Rotational rheometer (TA instrument Ltd., ARES-G2)
(2) Frequency: 0.1 Hz to 1000 Hz
(3) Temperature: 25°C
(4) Strain: 3%
(5) Minimum transducer torque in oscillation: 0.05 µN·m
(6) Minimum transducer torque in steady shear: 0.1 µN·m
(7) Maximum transducer torque: 20 mN·m
(8) Transducer torque resolution: 1 nN·m
(9) Strain resolution at drive motor: 0.04 µrad
(10) Measuring geometry: 25 mm plate
(11) Measuring gap: 0.627 mm

### 8. Occurrence of stains after twist test

(1) The electrochromic element was cut to a size of 20 cm in length and 4 cm in width, thereby manufacturing a sample.
(2) Opposite ends of the sample are gripped.
(3) The opposite ends of the gripped sample were pulled with a force of 1 N.
(4) In a state where the sample was pulled with a force of 1 N, the sample was twisted such that the opposite ends of the sample were twisted at an angle of 15° to each other.
(5) The twisted state of the sample was maintained for 1 minute, and released, thereby completing a twist test.
(6) The sample that had been subjected to the twist test was colored, and whether stains occurred was checked with the naked eye.

### 9. Measurement of bonding strength

(1) The electrochromic element fabricated in each of Examples and Comparative Example was cut to a size of 200 mm in length to 20 mm in width, thereby manufacturing a sample.
(2) One end of the sample was peeled off by 50 mm in length, one end of a first substrate peeled off was fixed, and one end of a second substrate peeled off was pulled at a rate of about 10 mm/s in the opposite direction.
(3) An average force was measured from the time the sample began to peel off by a length of about 10 mm until it peeled off by a length of about 130 mm.
(4) The bonding strength of the samples was obtained by dividing the average force by the width.

### 10. Winding test

1) The electrochromic element was cut to a size of 4 m in length and 0.5 m in width.
2) One end of the electrochromic element was fixed to the first core having a diameter of 15 cm.
3) The fixed electrochromic element was wound on the first core at a speed of 6 turns per minute while maintaining a tension of 10 N.
4) In a state of being wound on the first core, the electrochromic element was left under conditions of 85°C and about 30% relative humidity for 500 hours.
5) The other end of the electrochromic element that had been left was fixed to a second core having a diameter of 15 cm.
6) The electrochromic element wound around the first core was wound around the second core at a speed of 6 rotations per minute in the opposite direction to the direction in which it was wound around the first core while being unwound in a state where a tension of 10 N is maintained. while being unwound in a state where a tension of 10 N is maintained.
7) In a state of being wound on the second core, the electrochromic element was left under conditions of 85°C and about 30% relative humidity for about for 500 hours, thus completing the winding test.

### 11. Transmittance and haze

For the samples, an initial transmittance and a transmittance after the winding test were measured as total light transmittances with a solar spectrum meter (EDTM Co., SS2450).

For the samples, an initial haze and a haze after the winding test were measured with a solar spectrum meter (EDTM Co., SS2450).

### 12. Bonding strength decrease after winding test

The samples that had undergone the winding test were subjected to bonding strength measurement in the same manner as in the initial bonding strength measurement. Next, a difference between the initial bonding strength and the bonding strength after the winding test was derived.

As shown in Table 7 below, a haze deviation, coloring transmittance deviation and discoloring transmittance deviation after twisting were measured for each of the electrochromic elements according to Examples.

**[Table 7]**

| Classification | Coloring transmittance deviation | Discoloring transmittance deviation | Haze deviation | Driving range deviation |
|---|---|---|---|---|
| Example 1 | 0.145 | 0.063 | 0.054 | 0.12 |
| Example 2 | 0.189 | 0.069 | 0.063 | 0.15 |
| Example 3 | 0.156 | 0.057 | 0.091 | 0.08 |
| Example 4 | 0.14 | 0.056 | 0.098 | 0.09 |

As shown in Table 7, it was confirmed that the electrochromic elements according to Examples had a low haze deviation, a low coloring transmittance deviation, a low discoloring transmittance deviation and a low driving range deviation.

As shown in Table 8 below, for the electrochromic elements according to Examples, a storage modulus was derived according to each measurement condition in a strain sweep mode.

**[Table 8]**

| Classification | Strain 1% (Pa) | Strain 10% (Pa) | Strain 99% (Pa) |
|---|---|---|---|
| Example 5 | 48100 | 34500 | 15300 |
| Example 6 | 45200 | 32500 | 14500 |
| Example 7 | 45100 | 32200 | 14300 |
| Example 8 | 46100 | 33600 | 14900 |

As shown in Table 9 below, for the electrochromic elements according to Examples, a loss modulus was derived according to each measurement condition in a strain sweep mode.

**[Table 9]**

| Classification | Strain 1% (Pa) | Strain 10% (Pa) | Strain 99% (Pa) |
|---|---|---|---|
| Example 5 | 15900 | 27800 | 28600 |
| Example 6 | 15600 | 25600 | 27500 |
| Example 7 | 15100 | 25300 | 27400 |
| Example 8 | 15500 | 25500 | 24800 |

As shown in Table 10 below, for the electrochromic elements according to Examples, a complex viscosity was derived according to each measurement condition in a strain sweep mode.

**[Table 10]**

| Classification | Strain 1% (Pa·s) | Strain 10% (Pa·s) | Strain 99% (Pa·s) |
|---|---|---|---|
| Example 1 | 8060 | 7050 | 5170 |
| Example 2 | 7930 | 6890 | 5010 |
| Example 3 | 8010 | 7010 | 5090 |
| Example 4 | 8030 | 7010 | 5110 |

As shown in Table 11 below, for the electrochromic elements according to Examples, a storage modulus was derived according to each measurement condition in a frequency sweep mode.

**[Table 11]**

| Classification | 0.1 Hz (Pa) | 1 Hz (Pa) | 10 Hz (Pa) |
|---|---|---|---|
| Example 1 | 8510 | 41100 | 53300 |
| Example 2 | 8610 | 4130 | 5390 |
| Example 3 | 8500 | 40900 | 52700 |
| Example 4 | 8530 | 41200 | 53500 |

As shown in Table 12 below, for the electrochromic elements according to Examples, a loss modulus was derived according to each measurement condition in a frequency sweep mode.

**[Table 12]**

| Classification | 0.1 Hz (Pa) | 1 Hz (Pa) | 10 Hz (Pa) |
|---|---|---|---|
| Example 1 | 13600 | 19400 | 3980 |
| Example 2 | 12700 | 19100 | 3890 |
| Example 3 | 13100 | 19100 | 3970 |
| Example 4 | 12900 | 19000 | 3870 |

As shown in Table 13 below, for the electrochromic elements according to Examples, a complex viscosity was derived according to each measurement condition in a strain sweep mode.

**[Table 13]**

| Classification | 0.1 Hz (Pa·s) | 1 Hz (Pa·s) | 10 Hz (Pa·s) |
|---|---|---|---|
| Example 1 | 25500 | 7240 | 850 |
| Example 2 | 24900 | 7180 | 840 |
| Example 3 | 25100 | 7190 | 845 |
| Example 4 | 25200 | 7230 | 850 |

As shown in Table 14 below, no stain was observed in the electrochromic elements according to Examples after the twist test.

**[Table 14]**

| Classification | Occurrence of stains |
|---|---|
| Example 1 | None |
| Example 2 | None |
| Example 3 | None |
| Example 4 | None |

As shown in Tables 8 to 14, each of the electrochromic elements according to Examples had an appropriate storage modulus, an appropriate loss modulus and an appropriate complex viscosity, and exhibited no stain even if it had undergone the twist test.

As shown in Table 15 below, the bonding strength of the electrochromic elements according to Examples and Comparative Example was derived.

**[Table 15]**

| Classification | Bonding strength (N/cm) | Haze increase (%) | Transmittance decrease (%) | Bonding strength decrease (N/cm) |
|---|---|---|---|---|
| Example 1 | 0.1 | 0.04 | 1 | 0.001 |
| Example 2 | 0.07 | 0.03 | 0.5 | 0.001 |
| Example 3 | 0.11 | 0.05 | 2 | 0.002 |
| Example 4 | 0.15 | 0.06 | 1 | 0.003 |
| Comparative example | 0.04 | 1.5 | 5 | 0.01 |

As shown in Table 15, the electrochromic elements according to Examples have an appropriate bonding strength, a low haze increase, a low transmittance decrease and a low bonding strength decrease.

## Claims

1. An electrochromic element, comprising:
a first substrate;
a first transparent electrode disposed on the first substrate;
a first discoloration layer disposed on the first transparent electrode;
an electrolyte layer disposed on the first discoloration layer;
a second discoloration layer disposed on the electrolyte layer;
a second transparent electrode disposed on the second discoloration layer; and
a second substrate disposed on the second transparent electrode,
wherein a coloring transmittance deviation after a twist test, measured by a measurement method below, is less than 0.4:
[Measurement Method]
1) The electrochromic element is cut to a size of 20 cm in length and 4 cm in width.
2) Opposite ends of the cut electrochromic element are gripped.
3) The gripped opposite ends of the electrochromic element are pulled with a force of 1 N.
4) The pulled opposite ends of the electrochromic element are twisted at an angle of 15° to each other.
5) The twisted state of the electrochromic element is maintained for 1 minute, and then released, thus completing a twist test.
6) A driving voltage is applied to the electrochromic element that has been subjected to the twist test, and the electrochromic element is colored.
7) In the colored electrochromic element, a central region of 16 cm in length and 3 cm in width is defined.
8) A first transmittance of each measurement region of 1 cm × 1 cm in the central region is measured.
9) The coloring transmittance deviation is a value obtained by dividing a difference between a maximum transmittance and minimum transmittance among the first transmittances of the measurement regions by an average transmittance of the first transmittances of the measurement regions.

2. The electrochromic element according to claim 1, wherein a discoloring transmittance deviation after the twist test, measured by a measurement method below, is less than 0.2:
[Measurement Method]
Driving voltage is applied to the colored electrochromic element in a reverse direction so that the colored electrochromic element is discolored, a second transmittance is measured in each of the measurement regions of the discolored electrochromic element, and the discoloring transmittance deviation is a value obtained by dividing a difference between a maximum transmittance and minimum transmittance among the second transmittances of the measurement regions by an average transmittance of the second average transmittances of the measurement regions.

3. The electrochromic element according to claim 1, wherein a haze deviation after the twist test, measured by a measurement method below, is less than 0.2.
[Measurement Method]
In the electrochromic element that has been subjected to the twist test, a haze of each of the measurement regions is measured, and the haze deviation is a value obtained by dividing a difference between a maximum haze and minimum haze among the hazes of the measurement regions by an average haze of the hazes of the measurement regions.

4. The electrochromic element according to claim 1, wherein the electrolyte layer comprises a curable resin composition, a solvent and a metal salt, and
the electrolyte layer has a thickness of greater than 30 *µ*m.

5. The electrochromic element according to claim 1, wherein a driving range deviation after the twist test, measured by a measurement method below is less than 0.2:
[Measurement Method]
In the electrochromic element that has been subjected to the twist test, a driving range in the measurement region is a difference between the first transmittance of the measurement region and the second transmittance of the measurement region, and the driving range deviation is a value obtained by dividing a difference between a maximum driving range and minimum driving range in the measurement regions by an average driving range in the measurement regions.

6. The electrochromic element according to claim 4, wherein the curable resin composition comprises a photo-curable polymer having a thermosetting functional group.

7. The electrochromic element according to claim 1, wherein the first substrate has a modulus of 200 kgf/mm² to 400 kgf/mm² in a first direction, and
the second substrate has a modulus of 200 kgf/mm² to 400 kgf/mm² in the first direction.

8. The electrochromic element according to claim 7, wherein the first substrate has a fracture elongation of 30% to 150% in the first direction, and
the second substrate has a fracture elongation of 30% to 150% in the first direction.

9. The electrochromic element according to claim 2, wherein the average transmittance of the first transmittances is 5% to 40%.

10. The electrochromic element according to claim 9, wherein the average transmittance of the second transmittances is 40% to 80%.

11. A window device, comprising:
a frame;
a window mounted on the frame; and
an electrochromic element disposed in the window,
wherein the electrochromic element comprises:
a first substrate;
a first transparent electrode disposed on the first substrate;
a first discoloration layer disposed on the first transparent electrode;
an electrolyte layer disposed on the first discoloration layer;
a second discoloration layer disposed on the electrolyte layer;
a second transparent electrode disposed on the second discoloration layer; and
a second substrate disposed on the second transparent electrode,
wherein a coloring transmittance deviation after a twist test, measured by a measurement method below, is less than 0.4:
[Measurement Method]
1) The electrochromic element is cut to a size of 20 cm in length and 4 cm in width.
2) Opposite ends of the cut electrochromic element are gripped.
3) The gripped opposite ends of the electrochromic element are pulled with a force of 1 N.
4) The pulled opposite ends of the electrochromic element are twisted at an angle of 15° to each other.
5) The twisted state of the electrochromic element is maintained for 1 minute, and then released, thus completing a twist test.
6) A driving voltage is applied to the electrochromic element that has been subjected to the twist test, and the electrochromic element is colored.
7) In the colored electrochromic element, a central region of 16 cm in length and 3 cm in width is defined.
8) A first transmittance of each measurement region of 1 cm × 1 cm in the central region is measured.
9) The coloring transmittance deviation is a value obtained by dividing a difference between a maximum transmittance and minimum transmittance among the first transmittances of the measurement regions by an average transmittance of the first transmittances of the measurement regions.
